(19) Europäisches Patentamt
European Patent Office
Office européen des brevets

(11) **EP 4 423 472 B1**

(12) **EUROPÄISCHE PATENTSCHRIFT**

(45) Veröffentlichungstag und Bekanntmachung des Hinweises auf die Patenterteilung:
**22.10.2025 Patentblatt 2025/43**

(21) Anmeldenummer: **22812496.2**

(22) Anmeldetag: **26.10.2022**

(51) Internationale Patentklassifikation (IPC):
***G01M 1/22*** (2006.01)

(52) Gemeinsame Patentklassifikation (CPC):
**G01M 1/22**

(86) Internationale Anmeldenummer:
**PCT/EP2022/079892**

(87) Internationale Veröffentlichungsnummer:
**WO 2023/072995 (04.05.2023 Gazette 2023/18)**

(54) **RUNDLAUFÜBERWACHUNGSMODULE UND RUNDLAUFÜBERWACHUNGSVERFAHREN FÜR EIN IM BETRIEB ZU ROTIERENDES WERKZEUG**

CONCENTRICITY MONITORING MODULES AND CONCENTRICITY MONITORING METHOD FOR A TOOL TO BE ROTATED DURING OPERATION

MODULES DE SURVEILLANCE DE CENTRAGE ET PROCÉDÉ DE SURVEILLANCE DE CENTRAGE POUR UN OUTIL DEVANT TOURNER PENDANT SON FONCTIONNEMENT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.10.2021 DE 102021128314**

(43) Veröffentlichungstag der Anmeldung:
**04.09.2024 Patentblatt 2024/36**

(73) Patentinhaber: **Blum-Novotest GmbH**
**88287 Grünkraut (DE)**

(72) Erfinder:
• **MOERSCH, Norbert**
**88239 Wangen (DE)**
• **HAEFELE, Stefan**
**88069 Tettnang (DE)**
• **KLUGGER, Martin**
**88287 Gruenkraut (DE)**
• **STERN, Oliver**
**88250 Weingarten (DE)**

(74) Vertreter: **Schmidt, Steffen J.**
**Wuesthoff & Wuesthoff**
**Patentanwälte und Rechtsanwalt PartG mbB**
**Schweigerstrasse 2**
**81541 München (DE)**

(56) Entgegenhaltungen:
EP-A2- 1 063 506     WO-A1-2019/122375
US-A- 6 158 286

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Technisches Gebiet

Hier werden ein Rundlaufüberwachungsmodul, ein Rundlaufüberwachungs-Werkzeugaufnahmemodul und ein Rundlaufüberwachungs-Werkzeugmodul für ein im Betrieb zu rotierendes Werkzeug beschrieben. Weiter werden eine Werkzeugmaschine / ein Bearbeitungszentrum und eine Rundlaufüberwachungs-Signalschnittstelle beschrieben, die zur Überwachung des Rundlaufs des im Betrieb zu rotierenden Werkzeuges mit dem Rundlaufüberwachungsmodul / dem Rundlaufüberwachungs-Werkzeugaufnahmemodul / dem Rundlaufüberwachungs-Werkzeugmodul operativ zusammenwirken. Auch wird ein Rundlaufüberwachungsverfahren für ein in einer Werkzeugmaschine / einem Bearbeitungszentrum zu rotierendes Werkzeug beschrieben, das durch das Rundlaufüberwachungsmodul / das Rundlaufüberwachungs-Werkzeugaufnahmemodul / das Rundlaufüberwachungs-Werkzeugmodul, gegebenenfalls durch Zusammenwirken mit der Werkzeugmaschine / dem Bearbeitungszentrum und/oder mit der Rundlaufüberwachungs-Signalschnittstelle, ausgeführt wird. Ein Computerprogrammprodukt umfasst Befehle, die das Ausführen der Verfahrensschritte des Rundlaufüberwachungsverfahrens bewirken.

Hintergrund

Hier werden einzelne Überwachungsmodule zur Überwachung des Rundlaufs eines im Betrieb zu rotierenden Werkzeuges beschrieben. Dabei ist das Werkzeug in einer Werkstückbearbeitungsmaschine aufgenommen. Die Werkstückbearbeitungsmaschine kann z.B. eine (numerisch gesteuerte) Werkzeugmaschine (NC-Maschine), ein (Mehrachsen-)Bearbeitungszentrum, eine (Mehrachsen)-Fräsmaschine, eine flexible Fertigungszelle oder dergleichen sein. Nachstehend werden für solche oder derartige Maschinen auch die Begriffe Werkzeugmaschine und Bearbeitungszentrum verwendet.

Eine solche Werkzeugmaschine hat eine (Haupt-)Spindel, in die bei der Bearbeitung eines Werkstücks zu verwendende Werkzeuge wie Bohrer, Fräser etc., oder die Werkstücke selbst eingebracht werden. Die Spindel kann fest positioniert sein oder z.B. in drei orthogonale Richtungen X, Y, Z innerhalb eines Arbeitsraums der Werkzeugmaschine bewegt werden. Die Spindel kann zudem zur Rotation um die X- Y- und Z-Achsen angetrieben werden. In modernen Bearbeitungszentren müssen Werkzeuge oft während der Bearbeitung eines einzelnen Werkstücks gewechselt werden. Dies erfolgt in der Regel über automatisches Wechseln der Werkzeuge, wobei ein in der Spindel befindliches Werkzeug durch ein in einem Werkzeugmagazin der Werkzeugmaschine befindliches anderes Werkzeug ersetzt wird. Während des Werkzeugwechsels liegt eine Spannvorrichtung der Spindel zum Aufnehmen der Werkzeuge im Arbeitsraum der Maschine frei. Dasselbe kann für die Werkzeuge und gegebenenfalls daran vormontierte Werkzeugaufnahmen gelten. Dadurch kommt es - verursacht durch Späne und andere Verunreinigungen - zu Anlagerungen an der Spannvorrichtung der Spindel und/oder an den Werkzeugen. Bei modernen Werkzeugmaschinen ist die Spannvorrichtung in der Regel als Kegelschnittstelle ausgeführt und es werden insbesondere Steilkegel (SK) oder Hohlschaftkegel (HSK) zum Einbringen der Werkzeuge verwendet. Lagern sich z.B. während eines Werkzeugwechsels Späne an der Kegelschnittstelle und/oder am HSK / SK an, ist eine fehlerfreie Plananlage / ein vollständiges Einziehen des Werkzeugs bzw. dessen Aufnahme nicht mehr gewährleistet, da die Späne zwischen der Kegelschnittstelle und der Aufnahme eingeklemmt werden. Wenn das Werkzeug in der Folge mit der Spindel rotiert, kommt es zu einer Art Taumelbewegung, die aus einer von der mangelnden Plananlage / durch das nicht vollständige Einziehen verursachten Unwucht resultiert. Übersteigt die Taumelbewegung ein zulässiges Maß, wird von einem Rundlauffehler des Werkzeugs gesprochen. Wird der Rundlauffehler nicht bemerkt und werden keine Gegenmaßnahmen ergriffen, tritt beim rotierenden Werkzeug bei der Werkstückbearbeitung ein Radialschlag auf, was zu nicht maßhaltigen Bearbeitungsergebnissen, unzureichender Oberflächenqualität und Unwucht des Werkzeugs führt. Ferner belastet ein Rundlauffehler das Werkzeug selbst, da er zu einem erhöhten Verschleiß und in der Folge zu einer Beschädigung des Werkzeugs (bis hin zum Werkzeugbruch) führen kann. Rundlauffehler können selbst dann auftreten, wenn die Werkzeuge und die Spindel während des Werkzeugwechsels, z.B. durch Zufuhr von (Kühl-) Schmierstoff oder Druckluft, gereinigt werden. Ein weiterer Grund für einen Rundlauffehler kann eine vorliegende Beschädigung der Spindel selbst sein. Deswegen ist es wichtig, Rundlauffehler im Betrieb rotierender Werkzeuge schnell zu erfassen und exakt zu bewerten, um zufriedenstellende Bearbeitungsergebnisse und eine stabile Bearbeitungsumgebung zu gewährleisten.

Stand der Technik

Eine Möglichkeit, eine fehlerhafte Plananlage eines Werkzeugs in der Spindel einer Werkzeugmaschine zu detektieren, besteht in einer Plananlageüberwachung mittels Druckluft. Dabei wird Druckluft derart im Bereich der Kegelschnittstelle der Werkzeugmaschine appliziert, dass bei fehlerhafter Plananlage Druckluft zwischen der Spindel und der Werkzeugaufnahme entweicht. Über die Detektion dieses Druckverlusts wird auf die fehlerhafte Plananlage geschlossen.

Das Sensorsystem Planko der OTT-JAKOB Spanntechnik GmbH, D-87663 Lengenwang, bestimmt die Plananlage eines Werkzeugs an einer Werkzeugmaschine durch Abfragen mehrerer Keramiksensoren (Resonatoren). Die Basis des Systems bildet eine kompakte, passive Elektronikbaugruppe bestehend aus Resonator, Kabel und Steckverbinder, die in die Spindelnase integriert wird. Die Plananlage wird durch die sequenzielle Abfrage der Resonatoren während der Rotation bestimmt. Im Lesekopf werden die aktuellen Messergebnisse mit einem vorher definierten und im internen Speicher abgelegten Referenzwert abgeglichen. Liegt gegenüber dem Referenzwert eine Abweichung vor, werden die Messdaten über ein Komparatorsignal erfasst und an die Maschinensteuerung weitergegeben. Zudem existieren wenigstens teilweise in der Spindel einer Werkzeugmaschine integrierte Messsysteme zur Plananlageüberwachung, die z.B. Kraftsensoren, elektromagnetische Signale oder Laserlicht bei der Auswertung nutzen. In diesem Zusammenhang wird weiter z.B. auf die DE 10 2013 201 328 A1, die DE 10 2018 201 427 A1, die DE 103 51 347 A1, die EP 3 360 642 A1, die DE 10 2013 100 975 B3 und die EP 3 581 328 A1 verwiesen.

Eine weitere Möglichkeit zur Überwachung von Rundlauffehlem am rotierenden Werkzeug bieten Lasermesssysteme wie z.B. das LC50-DIGILOG der Blum-Novotest GmbH, DE-88287 Grünkraut. Dieses System erkennt Rundlauffehler am rotierenden Werkzeug, die z.B. durch eine verschmutzte Anlagefläche des Werkzeughalters verursacht werden. Dabei werden für jedes Werkzeug spezifische Werkzeugdaten benötigt und die Messung ist von der gewünschten Messstelle abhängig. In einem Lemgang wird zunächst ein Basis-Rundlauffehler ermittelt, der die Differenz einer längsten zu einer kürzesten Schneide des Werkzeugs darstellt. Eine Aussage über den durch Verschmutzung an der Anlagefläche verursachten Rundlauffehler lässt sich dann durch Messung am zylindrischen Schaft des Werkzeugs im Vergleich zu den Auswirkungen an den Schneiden dahingehend treffen, ob ein aktuell gemessener Rundlauffehler gegenüber dem hinterlegten Basis-Rundlauffehler größer oder kleiner wird. Berechnungen werden dabei von NC-Programmen durchgeführt, wobei insbesondere Radiusänderungen der jeweils längsten Schneiden als Verschleißwerte berücksichtigt werden.

Weiterhin existieren intelligente Werkzeuge zum Überwachen verschiedener Prozessgrößen bei der Bearbeitung. So wird z.B. in der WO 2021 / 029 404 A1 eine Vibration eines rotierbaren Werkzeugs mittels mehrerer bezüglich der Drehachse des Werkzeugs symmetrisch am Werkzeugschaft angebrachter Beschleunigungssensoren ermittelt. In ähnlicher Weise werden gemäß der WO 2021 / 029 099 A1 Vibrationen ermittelt, die aus Signalen von außen am Schaft (z.B. eines Walz- oder Fräswerkzeugs) angebrachten Beschleunigungssensoren und Dehnmessstreifen bestimmt werden. Die WO 2019 / 122 375 A1 beschreibt ein Sensormodul für eine rotierende Werkzeugaufnahme für z.B. Zerspanungswerkzeuge, um eine zuverlässige Erfassung von Betriebs- oder Systemzuständen in Echtzeit zu ermöglichen. Dafür ist ein Sensormodul, das Sensorik zur Erfassung der Krafteinleitung, der Temperatur und der Beschleunigung (Schwingungen) enthält, in der Werkzeugaufnahme günstig in der Drehachse positioniert und ein Kühlmittelstrom wird konstruktiv um diese Position geleitet. Diese Positionierung des Sensormoduls dient der Minimierung von Unwuchten und dem vereinfachten Einsetzen des Sensormoduls. Erfasste Messsignale werden vorzugsweise per Funk über einen Sender und eine Antenne an einen Empfänger einer Werkzeugmaschine übertragen. Eine Regelungsanordnung in der Werkzeugmaschine ermöglicht eine ad-hoc-Reaktion auf noch nicht eingeschwungene Instabilitätszustände. Dies wird durch eine Echtzeit-Adaptierung von Bearbeitungsparametern, wie z.B. Vorschub, Drehzahl, usw. umgesetzt, wobei diese Adaptierung in Abhängigkeit von den Prozesszuständen, wie z.B. der Vibration oder dem Krafteintrag am Werkzeug, umgesetzt wird. Werkzeugsysteme mit Überwachung von Prozessgrößen sind auch in WO 2021 / 033 670 A1, EP 2 103 379 A1, US 10 828 740 B2, US 10 828 739 B2, EP 3 808 503 A1, US 2021 / 026 322 A1 und JP 5 089 342 B2 offenbart.

Konventionell werden die genannten Werkzeugsysteme z.B. mittels Batterien betrieben. Einige Werkzeugsysteme verfügen jedoch über Vorrichtungen zur Energieerzeugung im Sinne eines Energy Harvesting, um das Werkzeugsystem selbst inklusive der integrierten Elektronik mit Energie zu versorgen. So wird z.B. in der EP 3 539 717 A1 ein Bearbeitungswerkzeug mit einer Generatoreinheit beschrieben. Eine erste Komponente ist fest mit dem Körper des Bearbeitungswerkzeugs verbunden und eine zweite Komponente ist beweglich mit dem Körper verbunden. Wenn ein Fluidfluss auf die zweite Komponente herrscht, wird durch deren Relativbewegung zur ersten Komponente elektrische Energie erzeugt. Die EP 2 112 461 B1 beschreibt einen Messtaster mit Stromgenerator, wobei ein Schwungrad drehbar mit dem Messtaster verbunden ist. Ein Rotor des Stromgenerators hat Permanentmagnete und ist mit dem Schwungrad verbunden, während ein Stator mit Induktionswicklungen innerhalb des Gehäuses des Messtasters befestigt ist. Wenn eine rotatorische Bewegung des Gehäuses des Messtasters beschleunigt wird, folgt das Schwungrad aufgrund seines hohen Trägheitsmoments nicht sofort der Gehäusebewegung. Durch diese Bewegungsdifferenz wird - solange sie besteht - kinetische Energie in elektrische Energie umgewandelt. Das Schwungrad ist mit einem Freilauf ausgestattet. Während es in einer ersten Drehrichtung der Gehäuserotation folgt, kann es sich lediglich in einer der ersten Richtung entgegengesetzten zweiten Drehrichtung frei drehen, sodass elektrische Energie erzeugt wird. Weitere Werkzeugsysteme mit Energy-Harvesting Prinzip offenbaren auch die DE 10 2016 223 199 A1, die US 2015 / 0 125 230 A1, die EP 1 742 011 B1 und die TW I491463 B.

Die genannten Vorrichtungen und Verfahren zur Rundlaufüberwachung von Werkzeugen arbeiten zwar nach unterschiedlichen Erfassungsprinzipien; dennoch existieren jeweils Möglichkeiten, insbesondere Werkzeuge zur Rundlaufüberwachung hinsichtlich der Zuverlässigkeit sowie der Geschwindigkeit der Erkennung der Plananlage zu verbessern. Auch hinsichtlich der Senkung der Systemkosten besteht Verbesserungsbedarf.

So bleibt z.B. bei der eingangs beschriebenen Plananlageüberwachung mittels Druckluft der Druck bei fehlerhafter Plananlage nicht bestehen, sondem es entweicht mit zunehmender Zeit mehr Luft. Die Überwachung mittels Druckluft liefert daher nur bedingte Ergebnisse. Zudem ist dieses System nicht in der Lage, eine fehlerhafte Plananlage zu erkennen, wenn sich Späne direkt an dem Luftauslass an der Plananlage anlagem und so diesen Luftauslass verschließen. Das Sensorsystem Planko der OTT-JAKOB Spanntechnik GmbH, D-87663 Lengenwang, muss in aufwändiger Weise in die Spindelnase integriert werden, was mit hohen Systemkosten einhergeht. Zudem wird gemäß diesem Sensorsystem die korrekte Plananlage durch Abfrage mehrerer Keramiksensoren bestimmt. Dabei können insbesondere verriebene und/oder verdrückte Aluminiumspäne an den Keramiksensoren anhaften. Dies führt zu einem Totalausfall des Sensorsystems, das danach keinen Rundlauffehler mehr erkennt und in der Folge zu einem aufwändigen und wiederum teuren Austausch der Sensoren. Auch wenn Kraftsensoren in der Spindelnase integriert sind, wie z.B. gemäß der EP 3 360 342 A1, geht dies mit einer aufwändigen Integration und deshalb mit hohen Systemkosten einher. Zudem gestaltet sich die Datenerfassung und die Datenauswertung bei diesen Systemen als aufwändig.

Bei Rundlaufüberwachungsvonichtungen, die mit Lasermesssystemen arbeiten, ist eine Bestimmung des Rundlaufs generell zeitaufwändig, da-unabhängig von der vergleichsweise lange dauernden Messung - eine exakte Spindelpositionierung im Messraum bzw. an der Messstelle notwendig ist.

Obwohl inzwischen mit unterschiedlichen Sensoren ausgestattete Werkzeuge verfügbar sind, die z.B. mit Temperatursensoren, Kraftsensoren und Beschleunigungssensoren arbeiten, dienen diese Werkzeuge der Erfassung von Prozessparametem wie Vibrationen oder Schnittkräften. Jedoch ist keines dieser Werkzeuge in der Lage einen Einspannfehler zu detektieren; es existiert noch keine in einem rotierenden Werkzeug integrierte Rundlaufüberwachung. Die EP 2 208 017 A2 betrifft eine Technik zur Regelung der Sendeleistung einer Sende-/Empfangsvorrichtung in einem Positionsmesssystem einer Maschine, die mit geringem Energieverbrauch eine robuste und zeitkritische Datenübertragung und einen schnellen Verbindungsaufbau ermöglicht. Dabei erfolgt ein Senden einer ersten Sendeleistungsnachricht mit einer ersten Sendeleistung und Senden einer zweiten Sendeleistungsnachricht mit einer zweiten Sendeleistung, wobei letztere kleiner als die erste Sendeleistung ist, falls eine Sendeleistungsbestätigungsnachricht als Antwort auf die gesendete erste Sendeleistungsnachricht empfangen wurde, und wobei die zweite Sendeleistung größer als die erste Sendeleistung ist, falls keine Sendeleistungsbestätigungsnachricht als Antwort auf die gesendete erste Sendeleistungsnachricht empfangen wurde. Mit den Sendeleistungsnachrichten wird bestimmt, ob eine Funckommunikation zwischen Sende-/Empfangsvorrichtung und einer Basisstation mit der aktuellen Sendeleistung möglich ist. Abhängig von den Übertragungsbedingungen über die Luftschnittstelle, das heißt bei Interferenzen mit anderen Signalen, wird die Sendeleistung der Sende-/Empfangsvorrichtung nachgeregelt. So kann die untere Sendeleistungsgrenze ermittelt werden, um ein permanentes Senden mit überhöhter Sendeleistung zu vermeiden. So wird Energie in der Sende-/Empfangsvorrichtung eingespart. Die Sende-/Empfangsvorrichtung sendet die Sendeleistungsnachrichten an eine mit der Sende-/Empfangsvorrichtung in Verbindung stehende Basisstation. Nach Aussenden der Sendeleistungsnachricht wartet die Sende-/Empfangsvorrichtung auf den Empfang einer Sendeleistungsbestätigungsnachricht. Falls die Sendeleistungsnachricht von einer mit der Sende-/Empfangsvorrichtung in Verbindung stehenden Basisstation empfangen wird, so sendet die Basisstation eine Sendeleistungsbestätigungsnachricht. Abhängig von dem Empfang der Sendeleistungsbestätigungsnachricht weiß die Sende-/Empfangsvorrichtung, ob eine Funkverbindung zwischen Sende-/Empfangsvorrichtung und Basisstation möglich ist. Abhängig von dieser Information kann die Sende-/Empfangsvorrichtung die Sendeleistung für eine nachfolgende Sendeleistungsnachricht erhöhen oder verringern.

Nach der zweiten Sendeleistungsnachricht kann eine dritte Sendeleistungsnachricht mit einer dritten Sendeleistung gesendet werden. Falls die Sendeleistung der zweiten Sendeleistungsnachricht kleiner als die Sendeleistung der ersten Sendeleistungsnachricht war und eine Sendeleistungsbestätigungsnachricht auf die zweite Sendeleistungsnachricht eingeht, so ist die dritte Sendeleistung kleiner als die zweite Sendeleistung. Falls die Sendeleistung der zweiten Sendeleistungsnachricht kleiner als die Sendeleistung der ersten Sendeleistungsnachricht war und keine Sendeleistungsbestätigungsnachricht auf die zweite Sendeleistungsnachricht eingeht, so ist die dritte Sendeleistung größer als die zweite Sendeleistung. Falls die Sendeleistung der zweiten Sendeleistungsnachricht größer als die Sendeleistung der ersten Sendeleistungsnachricht war und eine Sendeleistungsbestätigungsnachricht auf die zweite Sendeleistungsnachricht eingeht, so ist die dritte Sendeleistung gleich der zweiten Sendeleistung. Falls die Sendeleistung der zweiten Sendeleistungsnachricht größer als die Sendeleistung der ersten Sendeleistungsnachricht war und keine Sendeleistungsbestätigungsnachricht auf die zweite Sendeleistungsnachricht eingeht, so ist die dritte Sendeleistung größer als die zweite Sendeleistung.

Zu lösendes Problem

Ziel der hier vorgestellten Lösung ist es, eine Methodik und Vorrichtungen zur Überwachung des Rundlaufs eines (im Betrieb) rotierenden Werkzeugs bereitzustellen.

Hier vorgestellte Lösung

Bei einer dieser Vorrichtungen handelt es sich um ein werkzeugmaschinenunabhängiges Rundlaufüberwachungsmodul mit integriertem Werkzeug, das in der Lage ist, den Rundlauffehler (oder diesem zugrundeliegende Daten) bei Rotation zu bestimmen und gegebenenfalls eines oder mehrere entsprechende Zustands- und/oder Messsignale, insbesondere über eine Kommunikationsschnittstelle, an die Steuerung einer (Rundlaufüberwachungs-)Signalschnittstelle oder einer Werkzeugmaschine zu senden. Dabei verbessern die Vorrichtungen und Methoden die existierenden Lösungen hinsichtlich Genauigkeit und Geschwindigkeit der Erkennung der Plananlage (und in der Folge der Überprüfung des Rundlaufs) und sind schnell, einfach und kostengünstig (im Vergleich zu spindelintegrierten Systemen sogar wesentlich kostengünstiger) herzustellen. Auch eine einfache Integration in bestehende Werkzeugmaschinen bzw. eine einfache Kombination mit erhältlichen Werkzeugen oder Werkzeugsystemen wird ermöglicht. So ist es möglich, dem Bedarf entsprechend mit geringem Aufwand aufgabenspezifische Werkzeuge mit Rundlaufüberwachungsfunktion zusammenzustellen.

Diese Aufgabe wird gemäß einem ersten Aspekt durch ein Rundlaufüberwachungsmodul für ein im Betrieb zu rotierendes Werkzeug gelöst. Das Rundlaufüberwachungsmodul umfasst eine Werkzeugschnittstelle, eingerichtet zum Aufnehmen des zu rotierenden Werkzeugs und eine Werkzeugaufnahmeschnittstelle, eingerichtet zum Einbringen in eine Werkzeugaufnahme insbesondere einer Werkzeugmaschine oder eines Bearbeitungszentrums. Zudem umfasst das Rundlaufüberwachungsmodul eine Sensoreinheit, die dem Rundlaufüberwachungsmodul derart zugeordnet ist, dass eine Drehachse des Rundlaufüberwachungsmoduls durch die Sensoreinheit verläuft, wobei die Sensoreinheit dazu eingerichtet ist, für eine Beschleunigung repräsentative Größen in einer im Wesentlichen normal zur Drehachse des Rundlaufüberwachungsmoduls orientierten Ebene zu erfassen, wenn das Rundlaufüberwachungsmodul, insbesondere zusammen mit dem zu rotierenden Werkzeug und/oder mit der Werkzeugaufnahme, rotiert. Eine Recheneinheit des Rundlaufüberwachungsmoduls ist eingerichtet, um die von der Sensoreinheit erfassten für die Beschleunigung repräsentativen Größen zu empfangen, basierend auf den erfassten für die Beschleunigung repräsentativen Größen eine Gesamtbeschleunigung zu bestimmen, die Gesamtbeschleunigung mit einem von einer Drehzahl des Rundlaufüberwachungsmoduls während des Erfassens der für die Beschleunigung repräsentativen Größen abhängigen Schwellenwert zu vergleichen und zu bestimmen, dass ein Rundlauffehler des zu rotierenden Werkzeugs, des Rundlaufüberwachungsmoduls und/oder der Werkzeugaufnahme vorliegt, wenn die Gesamtbeschleunigung größer als der Schwellenwert ist Eine Kommunikationseinheit des Rundlaufüberwachungsmoduls ist kommunikativ mit der Recheneinheit verbunden und dazu eingerichtet, der Werkzeugmaschine / dem Bearbeitungszentrum zu signalisieren, ob ein Rundlauffehler des zu rotierenden Werkzeugs, des Rundlaufüberwachungsmoduls und/oder der Werkzeugaufnahme vorliegt oder nicht.

Bei der Werkzeugschnittstelle kann es sich z.B. um eine ABS-Aufnahme (ABS-System) oder einen ABS-Adapter (ABS-Anbindung) handeln, in die das zu rotierende Werkzeug oder ein entsprechender ABS-Adapter des zu rotierenden Werkzeugs einbringbar ist. Bei diesem ABS-System kann es sich z.B. um ein ABS-System der Firma Ceratizit S.A. handeln. Alternativ ist es möglich, dass die Werkzeugschnittstelle mit einer Spannzangenaufnahme ausgestattet ist, in die das zu rotierende Werkzeug eingebracht werden kann. Schließlich kann die Werkzeugschnittstelle auf jede andere geeignete Art und Weise stabil und konzentrisch mit dem zu rotierenden Werkzeug verbindbar sein.

In ähnlicher Weise kann die Werkzeugaufnahmeschnittstelle als ABS-Adapter ausgestaltet sein, um in die z.B. ebenfalls als ABS-Aufnahme ausgestaltete Werkzeugaufnahme eingebracht zu werden. Diese Werkzeugaufnahme kann an der Werkzeugmaschine / dem Bearbeitungszentrum vormontiert sein, oder erst zusammen mit dem Rundlaufüberwachungsmodul zwischen Rundlaufüberwachungsmodul und Spindel in die Werkzeugmaschine eingebracht werden. Alternativ kann auch die Werkzeugaufnahmeschnittstelle auf jede andere geeignete Art und Weise stabil und konzentrisch mit der Werkzeugaufnahme verbindbar sein.

Das Rundlaufüberwachungsmodul stellt somit eine anpassbare Verbindung mit Rundlaufüberwachungsfunktion zwischen der Spindel einer Werkzeugmaschine und dem zu rotierenden Werkzeug her. Auf diese Weise wird ein Aufbau eines modularen Rundlaufüberwachungsmoduls bereitgestellt, das für jede gängige Werkzeugmaschinenschnittstelle wie z.B. SK, SK-FC, BT, BT-FC, HSK-A, PSC und HSK-E geeignet ist und somit ohne Verlust der Rundlaufüberwachungsfunktion größtmögliche Flexibilität bietet, da unterschiedliche Werkzeuge mit unterschiedlichen Spindelschnittstellen zur Bearbeitung von Werkstücken kombiniert werden können.

Ein zweiter Aspekt betrifft ein Rundlaufüberwachungs-Werkzeugaufnahmemodul für ein im Betrieb zu rotierendes Werkzeug. Das Rundlaufüberwachungs-Werkzeugaufnahmemodul umfasst eine Werkzeugschnittstelle, eingerichtet zum Aufnehmen des zu rotierenden Werkzeugs und eine Werkzeugaufnahme, eingerichtet zum Einbringen in eine Spindel einer Werkzeugmaschine oder eines Bearbeitungszentrums. Das Rundlaufüberwachungs-Werkzeugaufnahmemodul umfasst zudem eine Sensoreinheit, die dem Rundlaufüberwachungs-Werkzeugaufnahmemodul derart zugeordnet ist, dass eine Drehachse des Rundlaufüberwachungs-Werkzeugaufnahmemoduls durch die Sensoreinheit verläuft, wobei die Sensoreinheit dazu eingerichtet ist, für eine Beschleunigung repräsentative Größen in einer im Wesentlichen normal zur Drehachse des Rundlaufüberwachungs-Werkzeugaufnahmemoduls orientierten Ebene zu erfassen, wenn das Rundlaufüberwachungs-Werkzeugaufnahmemodul, insbesondere zusammen mit dem zu rotierenden Werkzeug und/oder mit der Spindel, rotiert. Eine Recheneinheit des Rundlaufüberwachungs-Werkzeugaufnahmemoduls ist dazu eingerichtet, die von der Sensoreinheit erfassten, für die Beschleunigung repräsentativen Größen zu empfangen, basierend auf den erfassten, für die Beschleunigung repräsentativen Größen eine Gesamtbeschleunigung zu bestimmen, die Gesamtbeschleunigung mit einem von einer Drehzahl des Rundlaufüberwachungs-Werkzeugaufnahmemoduls während des Erfassens der für die Beschleunigung repräsentativen Größen abhängigen Schwellenwert zu vergleichen und zu bestimmen, dass ein Rundlauffehler des zu rotierenden Werkzeugs und/oder der Werkzeugaufnahme vorliegt, wenn die Gesamtbeschleunigung größer als der Schwellenwert ist. Eine Kommunikationseinheit des Rundlaufüberwachungs-Werkzeugaufnahmemoduls ist kommunikativ mit der Recheneinheit verbunden und dazu eingerichtet, der Werkzeugmaschine / dem Bearbeitungszentrum zu signalisieren, ob ein Rundlauffehler des zu rotierenden Werkzeugs und/oder der Werkzeugaufnahme vorliegt oder nicht.

Bei der Werkzeugschnittstelle kann es sich z.B. um eine ABS-Aufnahme (ABS-System) oder einen ABS-Adapter (ABS-Anbindung) handeln, in die das zu rotierende Werkzeug oder ein entsprechender ABS-Adapter des zu rotierenden Werkzeugs einbringbar ist. Alternativ ist es möglich, dass die Werkzeugschnittstelle mit einer Spannzangenaufnahme ausgestattet ist, in die das zu rotierende Werkzeug eingebracht werden kann.

Die Werkzeugaufnahme kann als ABS-Aufnahme ausgestaltet sein und insbesondere als HSK oder als SK ausgeführt sein, der zum Einbringen des Rundlaufüberwachungs-Werkzeugaufnahmemoduls in die Spindel der Werkzeugmaschine / des Bearbeitungszentrums dient.

Das Rundlaufüberwachungs-Werkzeugaufnahmemodul kann demnach aus einem zentralen Gehäuse bestehen, in dem die Sensoreinheit, die Recheneinheit und die Kommunikationseinheit aufgenommen sind und das fest mit der Werkzeugaufnahme verbunden ist. So bietet das Rundlaufüberwachungs-Werkzeugaufnahmemodul, das eine Verbindung zwischen Spindel und zu rotierendem Werkzeug herstellt, die Möglichkeit, ohne Verlust der Rundlaufüberwachungsfunktion unterschiedliche Werkzeuge in flexibler Weise für die Bearbeitung von Werkstücken einzusetzen.

Ein dritter Aspekt betrifft ein Rundlaufüberwachungs-Werkzeugmodul. Das Rundlaufüberwachungs-Werkzeugmodul umfasst ein im Betrieb zu rotierendes Werkzeug und eine Werkzeugaufnahme, eingerichtet zum Einbringen in eine Spindel einer Werkzeugmaschine oder eines Bearbeitungszentrums. Das Rundlaufüberwachungs-Werkzeugmodul umfasst zudem eine Sensoreinheit, die dem Rundlaufüberwachungs-Werkzeugmodul derart zugeordnet, dass eine Drehachse des Rundlaufüberwachungs-Werkzeugmoduls durch die Sensoreinheit verläuft, wobei die Sensoreinheit dazu eingerichtet ist, für eine Beschleunigung repräsentative Größen in einer im Wesentlichen normal zur Drehachse des Rundlaufüberwachungs-Werkzeugmoduls orientierten Ebene zu erfassen, wenn das Rundlaufüberwachungs-Werkzeugmodul, insbesondere zusammen mit der Spindel, rotiert. Eine Recheneinheit des Rundlaufüberwachungs-Werkzeugmoduls ist dazu eingerichtet, die von der Sensoreinheit erfassten, für die Beschleunigung repräsentativen Größen zu empfangen, basierend auf den erfassten für die Beschleunigung repräsentativen Größen eine Gesamtbeschleunigung zu bestimmen, die Gesamtbeschleunigung mit einem von einer Drehzahl des Rundlaufüberwachungs-Werkzeugmoduls während des Erfassens der für die Beschleunigung repräsentativen Größen abhängigen Schwellenwert zu vergleichen und zu bestimmen, dass ein Rundlauffehler des Rundlaufüberwachungs-Werkzeugmoduls vorliegt, wenn die Gesamtbeschleunigung größer als der Schwellenwert ist. Eine Kommunikationseinheit des Rundlaufüberwachungs-Werkzeugmoduls ist kommunikativ mit der Recheneinheit verbunden und dazu eingerichtet, der Werkzeugmaschine / dem Bearbeitungszentrum zu signalisieren, ob ein Rundlauffehler des Rundlaufüberwachungs-Werkzeugmoduls vorliegt oder nicht.

Bei der Werkzeugaufnahme kann es sich demnach um eine mechanische Schnittstelle des zu rotierenden Werkzeugs mit der Spindel der Werkzeugmaschine handeln. Die Werkzeugaufnahme kann als ABS-Aufnahme ausgestaltet sein und insbesondere als HSK oder als SK ausgeführt sein, der zum Einbringen des Rundlaufüberwachungs-Werkzeugmoduls in die Spindel der Werkzeugmaschine / des Bearbeitungszentrums dient.

Das Rundlaufüberwachungs-Werkzeugmodul, das die Verbindung zwischen Spindel und zu rotierendem Werkzeug herstellt, ist z.B. durch einen Werkzeughersteller als Einheit herstellbar. Dadurch entfallen lösbare Schnittstellen (und somit mögliche Quellen der Verunreinigung oder Anlagerungen, die eine exakte Plananlage verhindern), wie etwa die Werkzeugschnittstelle und die Werkzeugaufnahmeschnittstelle gemäß dem ersten Aspekt. So können verschiedene Werkzeuge mit weiter verbesserter Rundlaufüberwachungsfunktion bereitgestellt werden, die gerade bei Hochpräzisionsanwendungen gefragt ist.

Wenn nachstehend Merkmale eines "Moduls" oder eines "Überwachungsmoduls" beschrieben sind, können sich diese Merkmale insbesondere jeweils auf das Rundlaufüberwachungsmodul gemäß dem ersten Aspekt, auf das Rundlaufüberwachungs-Werkzeugaufnahmemodul gemäß dem zweiten Aspekt und auf das Rundlaufüberwachungs-Werkzeugmodul gemäß dem dritten Aspekt beziehen. Dies gilt insbesondere dann, wenn Komponenten wie die Recheneinheit, die Sensoreinheit und die Kommunikationseinheit beschrieben werden, die in den Modulen nach dem ersten bis dritten Aspekt enthalten sind.

Die Recheneinheit des Überwachungsmoduls kann in einer Datenverarbeitungseinheit umfasst sein. Diese Datenverarbeitungseinheit kann zusätzlich einen (Zwischen-) Speicher umfassen. So können in der Datenverarbeitungseinheit die von der Sensoreinheit erfassten Größen verarbeitet und zwischengespeichert werden, oder als Daten an die Werkzeugmaschine oder eine Rundlaufüberwachungs-Signalschnittstelle übertragen werden. Die Datenverarbeitungseinheit, die Sensoreinheit und die Kommunikationseinheit (auch Datenübertragungseinheit) können von einer Elektronikeinheit umfasst sein.

Beim Signalisieren, ob ein Rundlauffehler des zu rotierenden Werkzeugs vorliegt, können digitale IO-Signale (IO: in Ordnung, oder NIO: nicht in Ordnung) als 1-Bit Signale an die Werkzeugmaschine übertragen werden. Die Übertragung kann - wie auch die übrige Kommunikation zwischen dem Überwachungsmodul und der Werkzeugmaschine - insbesondere drahtlos erfolgen.

Die Sensoreinheit kann einen Beschleunigungssensor umfassen. Der Beschleunigungssensor kann ein piezoelektrischer Beschleunigungssensor sein oder auf einem Feder-Masse-System basieren. Alternativ sind Dehnungsmessstreifen einsetzbar oder Beschleunigungssensoren, die mit magnetischer Induktion arbeiten.

Bei dem Beschleunigungssensor der Sensoreinheit kann es sich um einen zweiachsigen Beschleunigungssensor handeln, der z.B. dazu eingerichtet ist, Beschleunigungen in orthogonal zueinander verlaufenden x- und y-Richtungen zu messen. Alternativ kann es sich bei dem Beschleunigungssensor um zwei insbesondere baugleiche einachsige Beschleunigungssensoren handeln, die z.B. übereinander oder nebeneinander und bezüglich deren sensitiver Achsen (die Trägheitsachsen, in denen Beschleunigungen gemessen werden) um 90° versetzt zueinander angeordnet sind, sodass wiederum Beschleunigungen in orthogonal zueinander verlaufenden x- und y-Richtungen messbar sind. Alternativ ist auch ein dreiachsiger Beschleunigungssensor einsetzbar, um zusätzlich in einer orthogonal zu den x- und y-Richtungen verlaufenden z-Richtung Prozessgrößen wie z.B. Vibrationen zu erfassen.

Die Drehachse des Überwachungsmoduls kann zumindest annähernd zentrisch durch einen Körper der Sensoreinheit verlaufen, muss aber nicht durch den Beschleunigungssensor selbst verlaufen (obwohl dies selbstverständlich auch möglich ist). Mit anderen Worten kann die Sensoreinheit so innerhalb des Überwachungsmoduls angeordnet sein, dass wenigstens eine Trägheitsachse der Sensoreinheit, insbesondere innerhalb eines Toleranzabstands, zumindest annähernd koaxial zur Drehachse des Überwachungsmoduls orientiert ist. Bei dieser Trägheitsachse kann es sich - auch im Falle eines zweiachsigen Beschleunigungssensors, der dazu eingerichtet ist, Beschleunigungen in x- und y-Richtung zu messen - um die z-Achse des Beschleunigungssensors handeln. Mit anderen Worten muss diese Trägheitsachse nicht mit einer sensitiven Achse der Sensoreinheit (dies gilt auch dann, wenn die Sensoreinheit zwei einachsige Beschleunigungssensoren umfasst) zusammenfallen, was allerdings bei einem dreiachsigen Beschleunigungssensor der Fall ist.

Kommt ein zwei- oder ein dreiachsiger Beschleunigungssensor zum Einsatz, kann dieser zwei oder drei räumlich zueinander minimal beabstandete Messchips (für zwei oder drei unterschiedliche Messrichtungen) umfassen. Um bei perfektem Rundlauf Beschleunigungswerte gegen Null zu bekommen, kann die Sensoreinheit derart im Überwachungsmodul angeordnet sein, dass die Ausrichtungen eines x-Messchips (der Beschleunigungen in x-Richtung misst) des zwei- oder dreiachsigen Beschleunigungssensors mit der y-z-Ebene des Überwachungsmoduls und eines y-Messchips (der Beschleunigungen in y-Richtung misst) des zwei- oder dreiachsigen Beschleunigungssensors mit der x-z-Ebene des Überwachungsmoduls übereinstimmen. Bei der Trägheitsachse der Sensoreinheit, die insbesondere innerhalb des Toleranzabstandes zumindest annähernd koaxial zur Drehachse des Überwachungsmoduls orientiert ist, handelt es sich bei diesen Varianten nicht um eine sensitive Achse einer der Messchips selbst, sondern um die z-Trägheitsachse des Körpers der Sensoreinheit.

Dabei kann sich, ermöglicht durch die räumlich voneinander getrennte Anordnung der x- und y-Messchips, entlang der z-Trägheitsachse des Körpers der Sensoreinheit und zwischen den einzelnen Messchips eine z.B. runde Ausnehmung durch den Körper der Sensoreinheit erstrecken.

Bei dem Toleranzabstand kann es sich insbesondere um einen von der Drehachse des Überwachungsmoduls ausgehenden radialen (Normal-)Abstand zur Trägheitsachse der Sensoreinheit handeln, der in einem Bereich von bis zu $\pm$ 10 μm liegen kann.

Dass die Trägheitsachse der Sensoreinheit zumindest annähernd koaxial zur Drehachse des Überwachungsmoduls orientiert ist, meint, dass zwischen der Trägheitsachse und der Drehachse ein maximaler Winkelfehler (Winkelversatz) von bis zu $\pm$ 3 ° bestehen kann.

Die Sensoreinheit kann grundsätzlich so im Überwachungsmodul angeordnet sein, dass bei einem gegebenen Rundlauffehler eine Positions- bzw. Lageänderung der Sensoreinheit zu einer insbesondere durch vorherige Kalibrierung bekannten Position bei bekannter Drehzahl gegeben ist. Dies lässt auf eine fehlerbehaftete Plananlage des Überwachungsmoduls an der Werkzeugaufnahme (Spindel) der Werkzeugmaschine schließen.

Insbesondere kann die Sensoreinheit demnach so im Überwachungsmodul montiert sein, dass der Beschleunigungssensor möglichst ideal in der Drehachse angeordnet ist. So ist es möglich, die für die Beschleunigung repräsentativen Größen in der zur Drehachse (die in z-Richtung verläuft) normal verlaufenden x-y-Ebene zu erfassen, da eine Verkippung und/oder ein seitlicher Versatz der Drehachse des Überwachungsmoduls, verursacht durch z.B. einen eingeklemmten Span oder eine schadhafte Spindel, als Veränderung der Beschleunigung in der (radialen) x-y-Ebene detektiert wird. Diese Veränderung kann sich vorzugsweise auf im Zuge eines Kalibriervorgangs ermittelte Referenzbeschleunigungswerte und somit auf eine "gelernte" Referenz-Anlage beziehen.

Die Positionierung der Sensoreinheit kann demnach so gewählt sein, dass der Beschleunigungssensor bei geringstmöglicher Verkippung / Exzentrizität den größtmöglichen Ausschlag liefert, sodass der Beschleunigungssensor den mit zunehmender Verkippung (des Überwachungsmoduls relativ zur Spindel bzw. zu einer Drehachse der Spindel der Werkzeugmaschine) steigenden Rundlauffehler zuverlässig erkennt.

Ein exakt in der Drehachse des Überwachungsmoduls angeordneter Beschleunigungssensor misst auch bei vergleichsweise hohen Drehzahlen eine Zentrifugalbeschleunigung gleich Null (radialer Abstand des Beschleunigungssensors von der Drehachse des Überwachungsmoduls r = 0). Ein Versatz aus dem Zentrum etwa durch einen Einspannfehler (r ≠ 0) führt hingegen dazu, dass der Beschleunigungssensor während der Rotation eine Zentrifugalbeschleunigung erfährt. Zur Überwachung des Werkzeugrundlaufs kann insbesondere diese Zentrifugalbeschleunigung in der x-y-Ebene (Rotationsebene) als die für die Beschleunigung repräsentativen Größen erfasst werden. Die gewählte Position des Beschleunigungssensors im Überwachungsmodul, die diesen möglichst zentrisch zur Werkzeugaufnahme der Werkzeugmaschine ausrichtet, wenn das Überwachungsmodul in die Werkzeugmaschine eingebracht wird, kann dabei insbesondere gewährleisten, dass bei kleinsten Rundlauffehlern eine maximale Veränderung der auf den Beschleunigungssensor wirkenden Zentrifugalkräfte gegeben ist.

Für die Zentrifugalbeschleunigung $a$ gilt: $a = \omega^2 * r$, wobei $\omega = 2 * \pi * n$ und folglich $a = 4 * \pi^2 * n^2 * r$, mit n = Drehzahl des Überwachungsmoduls (und folglich der Sensoreinheit) in 1/sec, $\omega$ = Winkelgeschwindigkeit und r = radialer Abstand des Beschleunigungssensors von der Drehachse des Überwachungsmoduls.

Die Drehzahl geht bei dieser Berechnung der Zentrifugalbeschleunigung im Quadrat ein. Deshalb kann es für die Erfassung (die Ermittlung der Zentrifugalbeschleunigung) wichtig sein, dass die Drehzahl, bei der die Erfassung stattfindet, insbesondere exakt bekannt ist. Diese (Prüf-)Drehzahl kann z.B. über die gesamte Erfassung einen im Wesentlichen konstanten Wert aufweisen oder alternativ innerhalb eines Toleranzbereichs von bis zu ±10 % eines vorgegebenen Drehzahlwertes liegen.

Das Erfassen der für die Beschleunigung repräsentativen Größen mittels der Sensoreinheit kann innerhalb einer bestimmten Auswertezeit (auch Erfassungsdauer) durchgeführt werden. Dabei kann es sich bei der Auswertezeit um ein Zeitfenster von einigen Sekunden, z.B. 0,1 Sekunden bis 5 Sekunden, handeln. Insbesondere kann es sich alternativ jedoch auch um eine bestimmte Anzahl von Umdrehungen (des Überwachungsmoduls und damit auch des Werkzeugs in der Werkzeugmaschine) handeln, über die die für die Beschleunigung repräsentativen Größen erfasst werden. Die Auswertezeit kann z.B. bei 4 oder 8 oder 16 oder 32 oder 64 Umdrehungen liegen, die vorliegende Offenbarung ist jedoch nicht darauf beschränkt. Diese "Auswertezeit" gilt auch für alle anderen von dem Überwachungsmodul zu erfassenden Größen, sofern an den betreffenden Stellen nichts Anderes angegeben ist.

Da die Richtung des Mittenversatzes (Exzentrizität) vor der Erfassung nicht bekannt ist, können insbesondere mittels des zweiachsigen Beschleunigungssensors oder mittels des dreiachsigen Beschleunigungssensors Beschleunigungswerte in x-und y-Richtung (in der Rotationsebene) erfasst und zu einem (Gesamt-)Beschleunigungsvektor verrechnet werden. So kann der Gesamtbeschleunigungswert aus den von der Sensoreinheit erfassten, für die Beschleunigung repräsentativen Größen ermittelt werden zu $a\_ges = \sqrt{(a\_x^2 + a\_y^2)}$. Überschreitet dieser Gesamtbeschleunigungswert den für die Drehzahl bei der Erfassung festgelegten Schwellenwert, kann der Werkzeugmaschine ein Fehler (NIO) gemeldet werden. Alternativ oder zusätzlich kann der Mittenversatz errechnet und der Werkzeugmaschine als Wert übermittelt werden.

Die Berechnung der Gesamtbeschleunigung sowie weitere im Rahmen dieser Offenbarung beschriebene Berechnungen, die auf von der Sensoreinheit erfassten Größen basieren, kann jeweils basierend auf von dem Beschleunigungssensor ausgegebenen Beschleunigungswerten erfolgen. Alternativ ist es möglich, dass solche Berechnungen unter Verwendung von (digitalen) Wandlerwerten (Rohdaten) erfolgen, die von einem dem Beschleunigungssensor zugeordneten Wandler erzeugt werden.

Die Datenverarbeitungseinheit (Recheneinheit) des Überwachungsmoduls kann mit der Sensoreinheit über eine digitale oder über eine analoge Kommunikationsschnittstelle verbunden sein. In Frage kommt hier z.B. eine digitale SPI oder I²C Schnittstelle zwischen der Sensoreinheit und der Datenverarbeitungseinheit. Es ist auch denkbar, am Ausgang der Sensoreinheit analoge Beschleunigungswerte bereitzustellen und diese analogen Beschleunigungswerte dann in der Datenverarbeitungseinheit mittels Analog-Digital-Converter (ADC) zu erfassen.

Ein vierter Aspekt betrifft eine Werkzeugmaschine oder Bearbeitungszentrum. Die Werkzeugmaschine / das Bearbeitungszentrum umfasst eine im Betrieb der Werkzeugmaschine / des Bearbeitungszentrums um eine Drehachse zu rotierende Spindel, die dazu eingerichtet ist, eine Werkzeugaufnahmeschnittstelle eines Rundlaufüberwachungsmoduls gemäß dem ersten Aspekt, eine Werkzeugaufnahme eines Rundlaufüberwachungs-Werkzeugaufnahmemoduls gemäß dem zweiten Aspekt und/oder eine Werkzeugaufnahme eines Rundlaufüberwachungs-Werkzeugmoduls gemäß dem dritten Aspekt aufzunehmen und damit operativ zusammenzuwirken. Eine Kommunikationseinheit der Werkzeugmaschine / des Bearbeitungszentrums ist zum Empfangen von Signalen der Kommunikationseinheit des Rundlaufüberwachungsmoduls gemäß dem ersten Aspekt, der Kommunikationseinheit des Rundlaufüberwachungs-Werkzeugaufnahmemoduls gemäß dem zweiten Aspekt und/oder der Kommunikationseinheit des Rundlaufüberwachungs-Werkzeugmoduls gemäß dem dritten Aspekt eingerichtet. Eine Steuerung der Werkzeugmaschine / des Bearbeitungszentrums ist mit der Kommunikationseinheit der Werkzeugmaschine / des Bearbeitungszentrums verbunden und eingerichtet, um von der Sensoreinheit des Rundlaufüberwachungsmoduls gemäß dem ersten Aspekt, der Sensoreinheit des Rundlaufüberwachungs-Werkzeugaufnahmemoduls gemäß dem zweiten Aspekt und/oder der Sensoreinheit des Rundlaufüberwachungs-Werkzeugmoduls gemäß dem dritten Aspekt erfasste, für die Beschleunigung repräsentative Größen zu empfangen, basierend auf den erfassten für die Beschleunigung repräsentativen Größen eine Gesamtbeschleunigung zu bestimmen, die Gesamtbeschleunigung mit einem von einer Drehzahl der Spindel während des Erfassens der für die Beschleunigung repräsentativen Größen abhängigen Schwellenwert zu vergleichen und zu bestimmen, dass ein Rundlauffehler des Rundlaufüberwachungsmoduls gemäß dem ersten Aspekt, des Rundlaufüberwachungs-Werkzeugaufnahmemoduls gemäß dem zweiten Aspekt und/oder des Rundlaufüberwachungs-Werkzeugmoduls gemäß dem dritten Aspekt vorliegt, wenn die Gesamtbeschleunigung größer als der Schwellenwert ist.

Die Spindel der Werkzeugmaschine / des Bearbeitungszentrums kann insbesondere dazu eingerichtet sein, mit Werkzeugaufnahmen wie Steilkegeln oder Hohlschaftkegeln operativ zusammenzuwirken.

Über die Kommunikationseinheit, die auch die Funktion einer Datenübertragungseinheit erfüllen kann, und die ein Teil eines werkzeugmaschinenseitigen Interface sein kann, können die von dem Überwachungsmodul empfangenen, für die Beschleunigung repräsentativen Größen als Prozessdaten an die Steuerung der Werkzeugmaschine übermittelt werden. Alternativ können die für die Beschleunigung repräsentativen Größen an die Steuerung der Werkzeugmaschine über eine gesonderte Datenübertragungseinheit übermittelt werden, die insbesondere zur drahtlosen Daten- und Signalübertragung von/zu dem Überwachungsmodul sowie insbesondere zur drahtgebundenen Daten- und Signalübertragung von/zu der Werkzeugmaschine eingerichtet sein kann. Dabei können für die kabellose Übertragung vorzugsweise funkbasierte Übertragungstechniken oder eine Übertragung mittels Infrarot-Signalen in Frage kommen.

Die Steuerung kann des Weiteren dazu eingerichtet sein, eine Rotation der Spindel bei der Erfassung der für die Beschleunigung repräsentativen Größen mit einer bestimmten Drehzahl zu veranlassen und/oder diese Drehzahl an das Überwachungsmodul zu übertragen. Wenn kein Rundlauffehler vorliegt, kann eine Mittenachse des Überwachungsmoduls im Wesentlichen koaxial zur Drehachse der zu rotierenden Spindel verlaufen. Die Werkzeugmaschine / das Bearbeitungszentrum kann zusätzlich dazu eingerichtet sein, ein (automatisches) Einbringen des Überwachungsmoduls in die Spindel der Werkzeugmaschine zu veranlassen. Die Werkzeugmaschine / das Bearbeitungszentrum kann zusätzlich dazu eingerichtet sein, z.B. über die Kommunikationseinheit dem Überwachungsmodul zu signalisieren, dass die Erfassung der für die Beschleunigung repräsentativen Größen starten soll. Dieser Startbefehl zur Erfassung kann z.B. erst dann an das Überwachungsmodul übertragen werden, nachdem die Werkzeugmaschine dem Überwachungsmodul signalisiert hat, dass es zur Datenerfassung (hier der für die Beschleunigung repräsentativen Größen) bereit ist.

Wenn die Steuerung der Werkzeugmaschine / des Bearbeitungszentrums bestimmt, dass kein Rundlauffehler des Überwachungsmoduls vorliegt, kann die Werkzeugmaschine / das Bearbeitungszentrum zudem dazu eingerichtet sein, eine Werkstückbearbeitung eines von der Werkzeugmaschine zu bearbeitenden Werkstücks insbesondere direkt im Anschluss an die Bestimmung, dass kein Rundlauffehler vorliegt, freizugeben. Es kann dann ohne weiteren nötigen Werkzeugwechsel direkt mit der Bearbeitung begonnen werden.

Wenn die Steuerung der Werkzeugmaschine / des Bearbeitungszentrums bestimmt, dass ein Rundlauffehler vorliegt, kann die Werkzeugmaschine / das Bearbeitungszentrum zudem dazu eingerichtet sein, eine anstehende Werkstückbearbeitung zu sperren, die Spindel zu stoppen und die gesamte Werkzeugmaschine in einen sicheren Zustand zu versetzen und/oder ein optisches und/oder akustisches Fehlersignal, z.B. über eine Anzeige und/oder einen Lautsprecher der Werkzeugmaschine / des Bearbeitungszentrums, auszugeben. Bevor eine oder mehrere dieser Maßnahmen ergriffen werden, kann die Werkzeugmaschine / das Bearbeitungszentrum dazu eingerichtet sein, das Überwachungsmodul und/oder das Werkzeug aus der Spindel aus- und wieder in diese einzuwechseln. In der Zwischenzeit kann die Spindel (Kegelschnittstelle) zur Reinigung mit einem Druckluftstrom abgeblasen werden. Die entsprechenden Maßnahmen werden dann nur ergriffen, wenn der Rundlauffehler nach dem wieder einwechseln des Überwachungsmoduls weiterbesteht.

Ein fünfter Aspekt betrifft eine Rundlaufüberwachungs-Signalschnittstelle. Die Rundlaufüberwachungs-Signalschnittstelle umfasst eine Kommunikationseinheit, die zum Empfangen von Signalen einer Kommunikationseinheit eines Rundlaufüberwachungsmoduls gemäß dem ersten Aspekt, einer Kommunikationseinheit eines Rundlaufüberwachungs-Werkzeugaufnahmemoduls gemäß dem zweiten Aspekt und/oder einer Kommunikationseinheit eines Rundlaufüberwachungs-Werkzeugmoduls gemäß dem dritten Aspekt und zum Senden von Signalen an eine Kommunikationseinheit einer Werkzeugmaschine / eines Bearbeitungszentrums gemäß dem vierten Aspekt eingerichtet ist. Die Rundlaufüberwachungs-Signalschnittstelle umfasst zudem eine Recheneinheit, die mit der Kommunikationseinheit der Rundlaufüberwachungs-Signalschnittstelle verbunden ist und eingerichtet ist, um von der Sensoreinheit des Rundlaufüberwachungsmoduls gemäß dem ersten Aspekt, der Sensoreinheit des Rundlaufüberwachungs-Werkzeugaufnahmemoduls gemäß dem zweiten Aspekt und/oder der Sensoreinheit des Rundlaufüberwachungs-Werkzeugmoduls gemäß dem dritten Aspekt erfasste, für die Beschleunigung repräsentative Größen zu empfangen, basierend auf den erfassten, für die Beschleunigung repräsentativen Größen eine Gesamtbeschleunigung zu bestimmen, die Gesamtbeschleunigung mit

EP 4 423 472 B1

einem von einer Drehzahl der Spindel, einer Drehzahl des Rundlaufüberwachungsmoduls, einer Drehzahl des Rundlaufüberwachungs-Werkzeugaufnahmemoduls oder einer Drehzahl des Rundlaufüberwachungs-Werkzeugmoduls während des Erfassens der für die Beschleunigung repräsentativen Größen abhängigen Schwellenwert zu vergleichen und zu bestimmen, dass ein Rundlauffehler des Rundlaufüberwachungsmoduls gemäß dem ersten Aspekt, des Rundlaufüberwachungs-Werkzeugaufnahmemoduls gemäß dem zweiten Aspekt und/oder des Rundlaufüberwachungs-Werkzeugmoduls gemäß dem dritten Aspekt vorliegt, wenn die Gesamtbeschleunigung größer als der Schwellenwert ist. Die Kommunikationseinheit der Rundlaufüberwachungs-Signalschnittstelle ist eingerichtet, der Werkzeugmaschine / dem Bearbeitungszentrum zu signalisieren, ob ein Rundlauffehler des im Betrieb zu rotierenden Werkzeugs, des Rundlaufüberwachungsmoduls, des Rundlaufüberwachungs-Werkzeugaufnahmemoduls und/oder des Rundlaufüberwachungs-Werkzeugmoduls vorliegt oder nicht.

Die Rundlaufüberwachungs-Signalschnittstelle mit ihren Komponenten Recheneinheit (Datenverarbeitungseinheit) und Kommunikationseinheit kann mit dem Überwachungsmodul über die Kommunikationseinheit oder über eine gesonderte Datenübertragungseinheit kommunizieren. Diese Datenübertragungseinheit kann insbesondere zur kabellosen Daten- und Signalübertragung zwischen dem Überwachungsmodul und der Rundlaufüberwachungs-Signalschnittstelle sowie insbesondere zur drahtgebundenen Daten-und Signalübertragung zwischen der Rundlaufüberwachungs-Signalschnittstelle und der Werkzeugmaschine dienen. Dabei können für die kabellose Übertragung vorzugsweise funkbasierte Übertragungstechniken oder eine Übertragung mittels Infrarot-Signalen in Frage kommen.

Mittels der Rundlaufüberwachungs-Signalschnittstelle können somit dieselben Berechnungen wie mit dem Überwachungsmodul durchgeführt werden, wenn das Überwachungsmodul die entsprechenden Messgrößen (hier die für die Beschleunigung repräsentativen Größen) an die Rundlaufüberwachungs-Signalschnittstelle überträgt. Nachdem diese Berechnungen durchgeführt sind, können neben der Signalisierung, ob ein Rundlauffehler vorliegt (IO- oder NIO-Signal), auch berechnete Ergebnisse wie die Gesamtbeschleunigung und/oder die der Berechnung zugrundeliegenden Messgrößen an die Steuerung der Werkzeugmaschine übertragen werden. Wenn größere Datenmengen übertragen werden, kann dies in der Form von Datenworten zwischen Rundlaufüberwachungs-Signalschnittstelle und Werkzeugmaschine erfolgen, wobei insbesondere ein digitales Bussystem zur Übertragung zum Einsatz kommen kann. Vorzugsweise können dafür Feldbussysteme wie Profibus, Profinet, Ethercat oder Ethernet zum Einsatz kommen.

Die Rundlaufüberwachungs-Signalschnittstelle kann des Weiteren dazu eingerichtet sein, das Überwachungsmodul zu aktivieren, also in einen Überwachungsmodus (Messmodus) zu versetzen, bevor das Überwachungsmodul die für die Beschleunigung repräsentativen Größen ermittelt. Zudem kann die Rundlaufüberwachungs-Signalschnittstelle des Weiteren dazu eingerichtet sein, die Drehzahl bei der Erfassung der Messgrößen zu bestimmen und an das Überwachungsmodul und/oder an die Werkzeugmaschine / das Bearbeitungszentrum zu übermitteln. Alternativ oder zusätzlich kann die Drehzahl bei der Erfassung von der Steuerung der Werkzeugmaschine vorgegeben werden, oder durch das Überwachungsmodul bestimmt und an die Rundlaufüberwachungs-Signalschnittstelle übertragen werden.

Die Rundlaufüberwachungs-Signalschnittstelle kann dazu eingerichtet sein, insbesondere auf das Aktivieren des Überwachungsmoduls hin, auf ein Signal des Überwachungsmoduls zu warten, mit dem das Überwachungsmodul die Bereitschaft zur Datenerfassung signalisiert. Nachdem die Datenerfassung abgeschlossen ist, kann die Rundlaufüberwachungs-Signalschnittstelle dazu eingerichtet sein, das Überwachungsmodul wieder zu deaktivieren, also in einen Zustand zu versetzen, in dem eine Rundlaufüberwachung nicht möglich ist. So kann zwischen einzelnen Rundlaufmessungen Energie gespart werden. Sowohl das Aktivieren als auch das Deaktivieren des Überwachungsmoduls können alternativ durch das Überwachungsmodul selbst oder durch die Werkzeugmaschine / das Bearbeitungszentrum erfolgen. Die Rundlaufüberwachungs-Signalschnittstelle kann dazu eingerichtet sein, das Ergebnis, ob ein Rundlauffehler vorliegt, mittels eines Prüfsignals (IO oder NIO) an die Steuerung der Werkzeugmaschine zu übertragen, sodass die Steuerung der Werkzeugmaschine gegebenenfalls die voranstehend beschriebenen Maßnahmen (Bearbeitung sperren, Fehler anzeigen etc.) ergreifen kann.

Ein sechster Aspekt betrifft ein Rundlaufüberwachungsverfahren für ein in einer Werkzeugmaschine oder in einem Bearbeitungszentrum im Betrieb zu rotierendes Werkzeug. Das Rundlaufüberwachungsverfahren umfasst die folgenden Schritte: (i) automatisches Einsetzen eines im Betrieb zu rotierenden Überwachungsmoduls oder des im Betrieb zu rotierenden Überwachungsmoduls und des zu rotierenden Werkzeugs in eine Spindel der Werkzeugmaschine / des Bearbeitungszentrums, wobei das zu rotierende Überwachungsmodul eine Sensoreinheit umfasst, die dem zu rotierenden Überwachungsmodul derart zugeordnet ist, dass eine Drehachse des zu rotierenden Überwachungsmoduls durch die Sensoreinheit verläuft; (ii) Drehen der Spindel der Werkzeugmaschine / des Bearbeitungszentrums mit einer vorgegebenen Drehzahl; (iii) Empfangen und/oder Erfassen von für eine Beschleunigung repräsentativen Größen in einer im Wesentlichen normal zur Drehachse des zu rotierenden Überwachungsmoduls orientierten Ebene, während das zu rotierende Überwachungsmodul mit der vorgegebenen Drehzahl rotiert; (iv) Bestimmen einer Gesamtbeschleunigung basierend auf den erfassten für die Beschleunigung repräsentativen Grö-ßen; (v) Vergleichen der Gesamtbeschleunigung mit einem von einer Drehzahl des zu rotierenden Überwachungsmoduls während des Erfassens der für die Beschleunigung repräsentativen Größen abhängigen Schwellenwert; und (vi) Bestimmen, dass ein Rundlauffehler des zu rotierenden Überwachungsmoduls und/oder des zu rotierenden Werkzeugs vorliegt, wenn die Gesamtbeschleunigung größer als der Schwellenwert ist.

Dabei ist unter dem "rotierenden Überwachungsmodul" insbesondere das Rundlaufüberwachungs-Werkzeugmodul gemäß dem dritten Aspekt zu verstehen, das bereits über ein integriertes Werkzeug verfügt. Hingegen sind unter dem "im Betrieb zu rotierenden Überwachungsmodul und dem zu rotierenden Werkzeug" insbesondere das Rundlaufüberwachungsmodul gemäß dem ersten Aspekt und das Rundlaufüberwachungs-Werkzeugaufnahmemodul gemäß dem zweiten Aspekt zu verstehen, in das vor einer Werkstückbearbeitung ein im Betrieb zu rotierendes Werkzeug eingebracht wird.

Das Rundlaufüberwachungsverfahren oder einzelne Schritte davon können dabei von unterschiedlichen Komponenten wie dem Überwachungsmodul (das immer für die Erfassung der für die Beschleunigung repräsentativen Größen mittels der Sensoreinheit verantwortlich ist), der Werkzeugmaschine / dem Bearbeitungszentrum und/oder der Rundlaufüberwachungs-Signalschnittstelle ausgeführt oder wenigstens veranlasst werden. So ist es in einer Variante vorgesehen, dass sämtliche Schritte des Rundlaufüberwachungsverfahrens durch die Werkzeugmaschine ausgeführt werden. Der Schritt (iii) umfasst dann insbesondere das Empfangen der für die Beschleunigung repräsentativen Größen vom Überwachungsmodul und/oder von der Rundlaufüberwachungs-Signalschnittstelle.

Bei bestimmten Varianten können auch lediglich die Schritte (i) und (ii) des Rundlaufüberwachungsverfahrens durch die Werkzeugmaschine ausgeführt werden. Die Schritte (iii) bis (vi) können dann vom Überwachungsmodul oder von der Rundlaufüberwachungs-Signalschnittstelle ausgeführt werden, wobei in letzterem Fall wiederum gilt, dass der Schritt (iii) dann insbesondere ein Empfangen der für die Beschleunigung repräsentativen Größen durch die Rundlaufüberwachungs-Signalschnittstelle umfasst. Sodann können sich weitere Schritte anschließen, wie z.B. ein Signalisieren, ob ein Rundlauffehler vorliegt, an die Rundlaufüberwachungs-Signalschnittstelle (wenn die Schritte (iii) bis (vi) vom Überwachungsmodul ausgeführt werden) oder an die Werkzeugmaschine (wenn die Schritte (iii) bis (vi) von der Rundlaufüberwachungs-Signalschnittstelle ausgeführt werden).

Wenn die Schritte (iii) bis (vi) durch das Überwachungsmodul ausgeführt werden, können die erfassten, für die Beschleunigung repräsentativen Größen vor deren Weiterverarbeitung in der Datenverarbeitungseinheit des Moduls oder in einem anderen Modulspeicher temporär gespeichert werden, um anschließend, vorzugsweise unter Berücksichtigung von in einem Kalibrierlauf ermittelten initialen für die Beschleunigung repräsentativen Größen, die Gesamtbeschleunigung zu bestimmen. Diese Gesamtbeschleunigung wird dann mit dem Schwellenwert verglichen, um festzustellen, ob eine vorgegebene Toleranzschwelle überschritten oder zumindest erreicht wird.

Wenn die Schritte (iii) bis (vi) von der Werkzeugmaschine oder der Rundlaufüberwachungs-Signalschnittstelle ausgeführt werden, können die für die Beschleunigung repräsentativen Größen insbesondere fortlaufend während des Messvorgangs (die Erfassung der für die Beschleunigung repräsentativen Größen) kontinuierlich an die Werkzeugmaschine / die Rundlaufüberwachungs-Signalschnittstelle übertragen werden. In diesem Fall können auch - wenn vorhanden - die für die initiale Beschleunigung repräsentativen Größen an die Werkzeugmaschine / die Rundlaufüberwachungs-Signalschnittstelle übertragen werden. Eine Auswertung, Filterung, Verrechnung mit den Initialwerten und Berechnung der Gesamtbeschleunigung und der Vergleich der Gesamtbeschleunigung mit dem Schwellenwert kann dann durch die Recheneinheit der Rundlaufüberwachungs-Signalschnittstelle / durch die Steuerung der Werkzeugmaschine durchgeführt werden.

Da der Schwellenwert den zulässigen Bereich der Exzentrizität des im Betrieb zu rotierenden Werkzeugs kennzeichnet, kann dieser Wert in allen vorstehend beschriebenen Fällen der Recheneinheit des Überwachungsmoduls, der Steuerung der Werkzeugmaschine und/oder der Recheneinheit der Rundlaufüberwachungs-Signalschnittstelle bekannt sein oder (durch eine der anderen Komponenten) bekannt gemacht werden. Dabei kann der Schwellenwert als analoger Wert oder als digitaler Wert, z.B. in der Einheit Mikrometer ($\mu$m), vorliegen. Der Schwellenwert kann einstellbar sein. Dies kann z.B. über geeignete Mittel direkt am Überwachungsmodul erfolgen. So kann z.B. mittels Magnetstift und SET/ MODE der Schwellenwert am Überwachungsmodul eingegeben werden. Alternativ kann der Schwellenwert in die Steuerung der Werkzeugmaschine / des Bearbeitungszentrums eingegeben werden und dann gegebenenfalls über die Rundlaufüberwachungs-Signalschnittstelle an das Überwachungsmodul übertragen werden. Dieses Vorgehen ist insbesondere dann vorgesehen, wenn die Schritte (iii) bis (vi) des Rundlaufüberwachungsverfahrens vom Überwachungsmodul ausgeführt werden.

Erfolgt die Auswertung der für die Beschleunigung repräsentativen Größen hingegen in der Werkzeugmaschine/in der Rundlaufüberwachungs-Signalschnittstelle, kann der Schwellenwert vorzugsweise direkt an der Werkzeugmaschine eingegeben werden und - bei Auswertung in der Rundlaufüberwachungs-Signalschnittstelle - an diese übertragen und in einem Speicher gespeichert werden.

Das Rundlaufüberwachungsverfahren kann einen weiteren optionalen Schritt des Aktivierens des Überwachungsmoduls umfassen, sodass das Überwachungsmodul in einen Überwachungsmodus (Messmodus) versetzt wird, bevor das Überwachungsmodul die für die Beschleunigung repräsentativen Größen ermittelt. Dieser weitere Schritt geht somit wenigstens dem Schritt (iii) zeitlich voraus. An den Schritt des Aktivierens kann sich ein Schritt anschließen, in dem das Erreichen der Drehzahl beim Erfassen der für die Beschleunigung repräsentativen Werte (also die Prüfdrehzahl) abgewartet wird.

Das Rundlaufüberwachungsverfahren kann einen weiteren optionalen Schritt umfassen, in dem gegebenenfalls auf das Aktivieren des Überwachungsmoduls hin, auf ein Signal des Überwachungsmoduls gewartet wird, mit dem das Überwachungsmodul die Bereitschaft zur Datenerfassung signalisiert. Zudem kann in einem weiteren optionalen Schritt des Rundlaufüberwachungsverfahrens das Überwachungsmodul wieder deaktiviert werden, also in einen Zustand versetzt werden, in dem keine Rundlaufüberwachung stattfindet. Dieser optionale Schritt wird frühestens vollzogen, wenn die Erfassung der Größen nach Schritt (iii) abgeschlossen ist

In einem weiteren optionalen Verfahrensschritt des Rundlaufüberwachungsverfahrens kann die Drehzahl bei der Erfassung der Messgrößen z.B. durch das Überwachungsmodul bestimmt werden und an die Rundlaufüberwachungs-Signalschnittstelle und/oder an die Werkzeugmaschine / das Bearbeitungszentrum übermittelt werden. Dieser Schritt kann insbesondere dann entfallen, wenn die Verfahrensschritte (iii) bis (vi) durch das Überwachungsmodul ausgeführt werden. Alternativ oder zusätzlich kann die Drehzahl bei der Erfassung von der Steuerung der Werkzeugmaschine vorgegeben werden.

Das Rundlaufüberwachungsverfahren kann für eine einzelne vorgegebene Drehzahl bei der Erfassung der für die Beschleunigung repräsentativen Größen durchgeführt werden. Alternativ oder zusätzlich ist es möglich, dass die Verfahrensschritte (iii) bis (vi) für unterschiedliche Drehzahlen wiederholt werden. Dabei sind insbesondere zwischen einer und fünf Wiederholungen bei jeweils unterschiedlichen Drehzahlen möglich, die vorliegende Offenbarung ist jedoch nicht auf die konkrete Anzahl an Wiederholungen beschränkt. Ist dies der Fall, werden die unterschiedlichen Drehzahlen jeweils in Schritt (ii) eingestellt. Das optionale Signalisieren an die Werkzeugmaschine / die Rundlaufüberwachungs-Signalschnittstelle, ob ein Rundlauffehler vorliegt, kann dann z.B. einmal für alle (Prüf-)Drehzahlen gemeinsam oder für jede Prüfdrehzahl einzeln erfolgen, wobei die entsprechende Prüfdrehzahl jeweils zusätzlich übertragen werden kann.

Insbesondere wenn die Verfahrensschritte (iii) bis (vi) wiederholt durchgeführt werden, ist es denkbar, dass eine Bestimmung der Prüfdrehzahl durch das Überwachungsmodul oder wenigstens auf der Basis von durch das Überwachungsmodul erfassten Messgrößen (wie z.B. weiteren für eine Beschleunigung repräsentative Größen) erfolgt.

Sämtlichen voranstehend beschriebenen Aspekten ist gemein, dass die für die Beschleunigung repräsentativen Größen (also die radialen Beschleunigungen in einer x-y-Ebene des Überwachungsmoduls und der dem Überwachungsmodul zugeordneten Sensoreinheit), z.B. unter Verwendung eines Tiefpass- oder Bandpassfilters, gefiltert werden können, bevor die Gesamtbeschleunigung bestimmt wird. Zudem können allen genannten Recheneinheiten und Steuerungen geeignete Speicher zugeordnet sein, in denen empfangene Signale und zu übertragende Signale, die im Rahmen dieser Offenbarung beschrieben sind und die in irgendeiner Weise im Zusammenhang mit der Rundlaufüberwachung stehen, (zwischen)gespeichert werden können.

Ein siebter Aspekt betrifft ein Computerprogrammprodukt, umfassend Befehle, die bewirken, dass die Werkzeugmaschine / das Bearbeitungszentrum des vierten Aspekts die Verfahrensschritte (i) bis (vi) gemäß dem sechsten Aspekt ausführt und/oder dass das Rundlaufüberwachungsmodul des ersten Aspekts, das Rundlaufüberwachungs-Werkzeugaufnahmemodul des zweiten Aspekts, oder das Rundlaufüberwachungs-Werkzeugmodul des dritten Aspekts die Verfahrensschritte (iii) bis (vi) gemäß dem sechsten Aspekt ausführt und/oder dass die Rundlaufüberwachungs-Signalschnittstelle des fünften Aspekts die Verfahrensschritte (iii) bis (vi) gemäß dem sechsten Aspekt ausführt.

Das Computerprogrammprodukt kann weitere Befehle umfassen, die bewirken, dass auch in Bezug auf das Rundlaufüberwachungsverfahren beschriebene optionale Schritte von den entsprechenden Komponenten (Überwachungsmodul, Werkzeugmaschine und/oder Rundlaufüberwachungs-Signalschnittstelle) ausgeführt werden.

Grundsätzlich ist es für die Genauigkeit der Bestimmung des Rundlauffehlers wichtig, dass dem Überwachungsmodul / der Werkzeugmaschine / der Rundlaufüberwachungsschnittstelle die Prüfdrehzahl bei der Erfassung der (initialen) für die Beschleunigung repräsentativen Größen genau bekannt ist, um eine exakte Aussage darüber treffen zu können, ob der Rundlauf des im Betrieb zu rotierenden Werkzeugs noch unterhalb des festgelegten Schwellenwerts liegt.

Dabei kann die Steuerung der Werkzeugmaschine der Recheneinheit der Rundlaufüberwachungs-Signalschnittstelle / dem Überwachungsmodul die exakte Prüfdrehzahl mitteilen. Diese Prüfdrehzahl wird dann als gegeben angenommen, eine weitere Überprüfung im Sinne einer Drehzahlkalibrierung muss nicht erfolgen.

Bei bestimmten Varianten kann das Überwachungsmodul des Weiteren eine weitere Sensoreinheit umfassen, die von der Drehachse radial beabstandet ist und dazu eingerichtet ist, im Wesentlichen zeitgleich zur Erfassung der für die Beschleunigung repräsentativen Größen weitere für eine Beschleunigung repräsentative Größen in einer im Wesentlichen normal zur Drehachse orientierten Ebene zu erfassen. Die Recheneinheit ist weiterhin eingerichtet, um die von der weiteren Sensoreinheit erfassten, weiteren für die Beschleunigung repräsentativen Größen zu empfangen und aus den weiteren für die Beschleunigung repräsentativen Größen die Drehzahl des Rundlaufüberwachungsmoduls / des Rundlaufüberwachungs-Werkzeugaufnahmemoduls / des Rundlaufüberwachungs-Werkzeugmoduls während des Erfassens der für die Beschleunigung repräsentativen Größen zu bestimmen. Alternativ kann bei einigen Varianten die Kommunikationseinheit dazu eingerichtet sein, die weiteren für die Beschleunigung repräsentativen Größen an die Werkzeugmaschine / das Bearbeitungszentrum gemäß dem vierten Aspekt und/oder an die Rundlaufüberwachungs-Signalschnittstelle gemäß dem fünften Aspekt zu übertragen.

Die weitere (zweite) Sensoreinheit kann bezüglich deren Sensitivität und der möglichen Erfassungsrichtungen ähnlich oder gleich wie die (erste) Sensoreinheit ausgestaltet sein. So kann es sich bei der weiteren Sensoreinheit auch um einen zweiachsigen Beschleunigungssensor handeln, der so eingerichtet und im Überwachungsmodul angeordnet ist, dass er weitere für die Beschleunigung repräsentative Größen in einer x-y-Ebene und normal zur Drehachse des Überwachungsmoduls erfassen kann. Alternativ ist es insbesondere möglich, dass die weitere (zweite) Sensoreinheit einen einachsigen Beschleunigungssensor umfasst, dessen sensitive Achse in radialer Richtung angeordnet ist, also derart, dass dieser einachsige Beschleunigungssensor die weiteren für die Beschleunigung repräsentativen Größen in der x-y-Ebene und normal zur Drehachse des Überwachungsmoduls erfassen kann. Wird der einachsige Beschleunigungssensor in der weiteren Sensoreinheit verwendet, umfassen die für "die weiteren für die Beschleunigung repräsentativen Größen" in der Regel lediglich eine einzelne "für die Beschleunigung repräsentative Größe". Aus diesem Grund werden die Begriffe "für die Beschleunigung repräsentativen Größen" und "für die Beschleunigung repräsentative Größe" im Rahmen dieser Offenbarung auch synonym verwendet, sofern an entsprechender Stelle nichts Anderes angegeben ist oder sich ein gegenteiliger technischer Sinngehalt aufdrängt.

Die weitere Sensoreinheit kann in einer Variante auch zwei gegenüberliegende, radial zur Drehachse beabstandete Beschleunigungssensoren umfassen, die in einer normal zur Drehachse orientierten Ebene angeordnet sind. Hierbei haben die Beschleunigungssensoren jeweils Messachsen, die in einer Flucht oder in einer die Drehachse enthaltenden, zur Ebene orthogonalen Ebene liegen. Vorzugsweise liefern die Beschleunigungssensoren Messwerte, aus denen jeweilige Mittelwerte der weiteren für die Beschleunigung repräsentativen Größen gebildet werden. Während die oben beschriebene mit nur einem Sensor ermittelte Drehzahl durch einen etwaig vorhandenen Rundlauffehler beeinflusst sein kann, lässt sich diese Beeinflussung durch die Anordnung der beiden gegenüberliegenden Sensoren minimieren oder gar eliminieren. Bei einem vorhandenen Rundlauffehler vergrößert sich z.B. der radiale Abstand zur Drehachse des ersten Beschleunigungssensors während sich der radiale Abstand des zweiten Beschleunigungssensors in entsprechend Maße verringert. Der Mittelwert der mit beiden gegenüberliegenden Beschleunigungssensoren gemessenen Beschleunigungen ist also unabhängig von einem ggf. vorhandenen Rundlauffehler. Die Berechnung der Drehzahl kann ebenfalls in der Recheneinheit erfolgen.

Wenn die weiteren für die Beschleunigung repräsentativen Größen an die Werkzeugmaschine / die Rundlaufüberwachungs-Signalschnittstelle übertragen werden, kann die Bestimmung der Drehzahl basierend auf diesen Größen durch die Steuerung der Werkzeugmaschine / durch die Recheneinheit der Rundlaufüberwachungs-Signalschnittstelle erfolgen.

Die weitere Sensoreinheit kann z.B. benachbart zu und/oder anliegend an einer inneren Umfangsfläche des Überwachungsmoduls angeordnet sein. Diese Umfangsfläche kann eine im Wesentlichen zylindrische Umfangsfläche sein. Die weitere Sensoreinheit kann somit insbesondere außerhalb der zentrischen Position (außermittig) platziert sein, sodass sie von der Sensoreinheit radial beabstandet ist und sodass die Drehachse des Überwachungsmoduls nicht durch die weitere Sensoreinheit verläuft.

Ein derart angeordneter außermittiger Beschleunigungssensor (als die weitere Sensoreinheit) liefert die weiteren für die Beschleunigung repräsentativen Größen (als Beschleunigungswerte oder als Wandlerwerte). Aus diesen für die Zentrifugalbeschleunigung der weiteren Sensoreinheit repräsentativen Größen wird dann die Drehzahl berechnet.

Bei einigen Varianten kann die Recheneinheit des Überwachungsmoduls dazu eingerichtet sein, die Drehzahl des Überwachungsmoduls während des Erfassens der für die Beschleunigung repräsentativen Größen basierend auf einer beim Erfassen der für die Beschleunigung repräsentativen Größen herrschenden Signalfrequenz zu bestimmen, wenn die Drehachse des Überwachungsmoduls beim Erfassen der für die Beschleunigung repräsentativen Größen im Wesentlichen horizontal orientiert ist.

Dies kann insbesondere bei Anwendungen vorteilhaft sein, bei denen das Überwachungsmodul ausschließlich oder wenigstens zu Rundlauf-Prüfzwecken ausschließlich horizontal orientiert sein muss, da auf diese Weise keine weitere Sensoreinheit im Überwachungsmodul zur Drehzahlbestimmung benötigt wird. Dadurch können insbesondere Kosten gespart werden. Denn bei einer horizontalen Orientierung des Überwachungsmoduls beim Erfassen der für die Beschleunigung repräsentativen Größen wird diesen Größen ein durch die Erdbeschleunigung verursachtes sinusförmiges Signal überlagert. Dieses sinusförmige Signal kann in der Recheneinheit des Überwachungsmoduls separat ausgewertet werden und liefert eine Amplitude, die zumindest annähemd der Erdbeschleunigung (1 g) entspricht. Die Frequenz des sinusförmigen Signals entspricht der Drehzahl beim Erfassen, also der Prüfdrehzahl. Diese Art der Drehzahlbestimmung kann besonders effizient sein, da sie nicht kalibriert werden muss.

Bei einigen Varianten kann das Überwachungsmodul des Weiteren eine photosensitive Einheit mit einer am Außenumfang des Überwachungsmoduls befindlichen photosensitiven Fläche umfassen, wobei die photosensitive Einheit dazu eingerichtet ist, während des Erfassens der für die Beschleunigung repräsentativen Größen Helligkeitsunterschiede zu erfassen, wobei die Recheneinheit dazu eingerichtet ist, die Drehzahl des Überwachungsmoduls während des Erfassens der für die Beschleunigung repräsentativen Größen basierend auf einer Frequenz der Helligkeitsunterschiede zu bestimmen.

Dabei kann es sich somit um eine optische Prüfdrehzahlerkennung handeln, wobei die photosensitive Einheit einen Photodetektor, z.B. eine Photodiode, aufweisen kann, die derart in das Überwachungsmodul integriert sein kann, dass die photosensitive Fläche radial nach außen gerichtet ist. Während der Drehzahlerkennung kann dann ein Lichtsignal, welches während der Rotation des Überwachungsmoduls durch die herrschenden Lichtverhältnisse entsteht, detektiert werden. Durch die Abfolge von Hell-Dunkel-Unterschieden entsteht ein Lichtmuster, das von der photosensitiven Einheit in eine Spannung umgesetzt wird. Dieses Licht- und somit auch das Spannungsmuster wiederholt sich bei jeder Umdrehung. So ist es möglich, durch die Anwendung einer entsprechenden Signalauswertung die Grundfrequenz des Lichtmusters zu ermittelt. Diese Grundfrequenz des Lichtmusters entspricht der Prüfdrehzahl.

Bei bestimmten Abwandlungen ist es dabei denkbar, dass eine IR-Photodiode in der photosensitiven Einheit eingesetzt wird. Ist dies der Fall, wird nicht das Umgebungslicht detektiert, sondern Lichtstrahlen mit Frequenzen im Infrarotbereich, die z.B. von IR-LEDs abgestrahlt werden, die der Werkzeugmaschine zugeordnet sind und insbesondere an oder in der Werkzeugmaschine derart angeordnet sind, dass sie bei in der Spindel der Werkzeugmaschine befindlichem Überwachungsmodul dessen photosensitive Fläche anstrahlen können. So kann insbesondere bei schlechten (dunklen) Lichtverhältnissen eine zuverlässige Bestimmung der Prüfdrehzahl erfolgen. Auch diese Art der optischen Prüfdrehzahlerkennung kann besonders effizient sein, da sie nicht kalibriert werden muss.

Bei einigen Varianten des Überwachungsmoduls kann wenigstens die Sensoreinheit und vorzugsweise zusätzlich die weitere Sensoreinheit auf einer Sensorplatine angeordnet sein, wobei die Sensorplatine mit einem Platinenhalter verbunden ist, und wobei eine Position des Platinenhalters über Verstellmittel des Überwachungsmoduls normal zur Drehachse anpassbar ist.

Die Sensorplatine ist in einer Variante am Platinenhalter fixiert. Zudem ist in einer Variante der Platinenhalter schwimmend aufgehängt (gelagert) und ist in einer Variante über die Verstellmittel exakt im (Dreh)Zentrum des Überwachungsmoduls positioniert. Dafür dienen z.B. radial am Platinenhalter des Überwachungsmoduls angebrachte Gewindestifte zur seitlichen Feinjustage des Platinenhalters und somit der Sensoreinheit. Diese Feinjustage wird in einer Variante insbesondere herstellerseitig vorgenommen, die vorliegende Offenbarung ist jedoch nicht darauf beschränkt.

Weitere Gewindestifte, die sich von den Gewindestiften zur Feinjustage des Platinenhalters unterscheiden und insbesondere zur benutzerseitigen Feinwuchtung des Überwachungsmoduls dienen können, können unterschiedliche Gewichte aufweisen und/oder dazu ausgebildet sein, eine Zusatzmasse aufzunehmen. Über Gewindebohrungen am Umfang des Überwachungsmoduls kann insbesondere nach einem Werkzeugwechsel mittels dieser Gewindestifte die Feinwuchtung des Überwachungsmoduls vorgenommen werden.

Bei bestimmten Varianten kann das Überwachungsmodul des Weiteren eine Energieversorgungseinheit umfassen, die dazu eingerichtet ist, vorzugsweise in Reaktion auf ein Wake-up-Signal von einem Energiespar- oder Standby-Modus in einen Überwachungsmodus versetzt zu werden und/oder die Sensoreinheit, die weitere Sensoreinheit, die Recheneinheit und/oder die Kommunikationseinheit vorzugsweise in Reaktion auf ein Wake-up-Signal von einem Energiespar- oder Standby-Modus in einen Überwachungsmodus zu versetzen.

Z.B. kann es sich bei der voranstehend beschriebenen Aktivierung des Rundlaufüberwachungsmoduls um ein Aktivieren mittels des Wake-up-Signals handeln.

Im Energiesparmodus können die Recheneinheit (Datenverarbeitungseinheit), die Sensoreinheit und die Kommunikationseinheit (auch Datenübertragungseinheit) der Elektronikeinheit des Überwachungsmoduls auf Standby sein und vergleichsweise wenig Energie verbrauchen. Im Überwachungsmodus (auch Messmodus) kann sich die Elektronikeinheit in einem Standardbetrieb befinden, in der alle im Rahmen dieser Offenbarung beschriebenen Messungen durchführbar sind. Die Elektronikeinheit kann im Messmodus im Vergleich zum Energiesparmodus viel Energie verbrauchen.

Bei einigen Varianten kann die Energieversorgungseinheit einen Energiespeicher zum Speichern elektrischer Energie umfassen. Bei einigen Varianten kann die Energieversorgungseinheit des Weiteren eine Generatoreinheit zum Erzeugen elektrischer Energie umfassen. Die Energieversorgungseinheit kann demnach für die Erzeugung und/oder für die Speicherung sowie vorzugsweise auch für die Aufbereitung der Versorgungsspannung sämtlicher Komponenten der Elektronikeinheit zuständig sein. Dabei kann die Energieversorgungseinheit die Komponenten der Elektronikeinheit mit Energie versorgen, die in wenigstens einer Batterie oder in wenigstens einem Akkumulator gespeichert ist. In diesem Falle kann die Generatoreinheit entfallen und die Batterie / der Akkumulator kann eine vergleichsweise hohe Kapazität und/oder Energiedichte aufweisen. Alternativ oder zusätzlich ist eine Eigenstromerzeugung im Überwachungsmodul über die Generatoreinheit möglich, wofür z.B. die Energie der rotierenden Spindel der Werkzeugmaschine oder ein unter Druck stehendes Medium genutzt werden können. Diese verschiedenen Energieformen können durch Verwendung der Generatoreinheit in elektrische Energie umgewandelt werden. In diesen Fällen können (insbesondere gegenüber der Energieversorgung aus einem Akkumulator) für die Energiespeicherung vergleichsweise kleine Energiespeicher mit geringerer Kapazität und/oder Energiedichte wie z.B. eine oder mehrere kleine Batterien und/oder einer oder mehrere kleine Kondensatoren zum Einsatz kommen. Dabei kann die Generatoreinheit z.B. einen ersten Teil aufweisen, der drei um 120° versetzt zueinander angeordnete Induktionsspulen umfasst. Ein zweiter Teil der Generatoreinheit, der relativ zum ersten Teil der Generatoreinheit drehbar ist, kann z.B. einen oder mehrere Permanentmagneten umfassen. Alternativ kann auch der erste Teil die Permanentmagneten und der zweite Teil die Spulen aufweisen. Wenn der erste Teil relativ zum zweiten Teil rotiert, werden Wechselspannungen erzeugt, die bezüglich deren Phasenlage um 120° zueinander verschoben sind. Die vorliegende Offenbarung ist jedoch nicht auf diese konkrete Ausgestaltung der Generatoreinheit beschränkt. So sind auch Varianten mit sechs Induktionsspulen denkbar, von denen z.B. je zwei Induktionsspulen in Reihe geschaltet sind, oder Varianten mit neun Induktionsspulen, von denen z.B. je drei Induktionsspulen in Reihe geschaltet sind. In diesen Fällen sind auch mehr Permanentmagnete im zweiten Teil der Generatoreinheit vorhanden, die Anzahl der Permanentmagnete erhöht sich also insbesondere mit steigender Anzahl an Induktionsspulen. Die Energieversorgungseinheit kann zudem einen Gleichrichter umfassen, der die in der Generatoreinheit erzeugten Wechselspannungen in eine Gleichspannung umwandelt und diese glättet.

Bei bestimmten Varianten des Überwachungsmoduls kann das Wake-up-Signal ein Signal sein oder durch ein Signal ausgelöst werden, das von der weiteren Sensoreinheit erzeugt wird, sobald die weiteren für die Beschleunigung repräsentativen Größen eine Wake-up-Schwelle überschreiten, oder über die Kommunikationseinheit von der Werkzeugmaschine / dem Bearbeitungszentrum gemäß dem vierten Aspekt und/oder von der Rundlaufüberwachungs-Signalschnittstelle gemäß dem fünften Aspekt empfangen wird, oder erzeugt wird, wenn eine von der Energieversorgungseinheit erzeugte Energiemenge ein vorgegebenes Maß überschreitet.

So kann in einer Variante die weitere Sensoreinheit derart eingestellt sein, dass diese bei Erreichen oder Überschreiten einer eingestellten Wake-up-Schwelle das Wake-Up-Signal erzeugt. Durch dieses Wake-Up-Signal können die Energieversorgungseinheit, die Recheneinheit und die Kommunikationseinheit des Überwachungsmoduls aus dem Energiesparmodus in den Überwachungsmodus wechseln. Damit dabei eine möglichst sichere Aktivierung des Überwachungsmoduls bzw. dessen Komponenten gewährleistet werden und damit eine Fehl-Aktivierung vermieden werden kann, ist folgender Ablauf (Aktivierungsablauf) vorstellbar.

Zunächst wird das Überwachungsmodul (siehe z.B. Schritt (i) gemäß dem sechsten Aspekt) in die Spindel der Werkzeugmaschine eingewechselt (eingesetzt). Dann wird das Überwachungsmodul in der Spindel gedreht (siehe Schritt (ii) gemäß dem sechsten Aspekt), wodurch die weitere Sensoreinheit eine Zentrifugalbeschleunigung erfährt und das Wake-up-Signal generiert. Das Wake-Up-Signal der weiteren Sensoreinheit aktiviert die Elektronikeinheit des Überwachungsmoduls. Die Elektronikeinheit kann wie vorstehend beschrieben prüfen, ob tatsächlich eine Drehzahl am Überwachungsmodul anliegt. Wenn sich das Überwachungsmodul tatsächlich dreht, verbleibt die Elektronikeinheit im Überwachungsmodus. In einer Variante wird das Überwachungsmodul (innerhalb der Spindel oder allein, also von der Spindel entnommen) nicht gedreht. Die Elektronikeinheit kann dann wiederum prüfen, ob dennoch eine Drehzahl am Überwachungsmodul anliegt. Wenn sich das Überwachungsmodul tatsächlich nicht dreht, wechselt die Elektronikeinheit zurück in den Energiesparmodus. Auf diese Weise kann sichergestellt werden, dass das Überwachungsmodul so lange wie notwendig, jedoch so kurz wie möglich im Überwachungsmodus verbleibt. Dadurch wird schließlich Energie zur Versorgung der Komponenten der Elektronikeinheit bzw. des gesamten Überwachungsmoduls gespart.

Wenn das Wake-up-Signal von der Werkzeugmaschine / der Rundlaufüberwachungs-Signalschnittstelle empfangen wird, sendet die Steuerung der Werkzeugmaschine / die Recheneinheit der Rundlaufüberwachungs-Signalschnittstelle über deren entsprechende Kommunikationseinheit das Signal zur Aktivierung (das Wake-up-Signal) an das Überwachungsmodul, das daraufhin in den Überwachungsmodus wechselt. Wenn das Wake-up-Signal erzeugt wird, wenn die von der Energieversorgungseinheit erzeugte Energiemenge ein vorgegebenes Maß überschreitet, erfolgt zunächst auch ein Einwechseln des Überwachungsmoduls in die Spindel der Werkzeugmaschine nach Schritt (i) gemäß dem sechsten Aspekt. Sobald das Überwachungsmodul nach Schritt (ii) gemäß dem sechsten Aspekt gedreht wird, beginnt die Generatoreinheit, Energie zu erzeugen. Wenn dabei ein bestimmtes Maß erreicht ist, wird die Elektronikeinheit automatisch mit Energie versorgt und in den Überwachungsmodus versetzt. Zusätzlich zu allen Varianten der Aktivierung, also der Versetzung des Überwachungsmoduls in den Überwachungsmodus, kann eine Protokollierung von Schockereignissen wie z.B. ein Sturz auf den Fußboden oder eine Kollision mit einem Objekt im Maschinenraum erfolgen. Die Ergebnisse dieser Protokollierung können im Modul gespeichert und/oder an die Werkzeugmaschine und/oder an die Rundlaufüberwachungs-Signalschnittstelle übertragen werden. Der voranstehend beschriebene Aktivierungsablauf kann durchgeführt werden oder nicht, und zwar unabhängig davon, mittels welcher Variante die Aktivierung des Überwachungsmoduls erfolgt. Bei einigen Varianten umfasst die Generatoreinheit einen Stator, der direkt oder indirekt mit der Werkzeugaufnahme des Überwachungsmoduls gekoppelt ist, oder direkt oder indirekt mit der Werkzeugaufnahme gemäß dem ersten Aspekt koppelbar ist, und wobei die Generatoreinheit des Weiteren einen Rotor umfasst, der dem Überwachungsmodul so zugeordnet ist, dass er mit dem Stator derart zusammenwirkt, dass die Generatoreinheit bei einer Rotationsbeschleunigung des Überwachungsmoduls um die Drehachse elektrische Energie erzeugt. Dabei kann es sich bei der Rotationsbeschleunigung um eine positive sowie auch um eine negative Rotationsbeschleunigung handeln, die jeweils entstehen, wenn die Spindeldrehzahl erhöht wird beziehungsweise wenn die Spindeldrehzahl verringert wird. Alternativ kann der Stator direkt oder indirekt mit dem Überwachungsmodul gekoppelt sein. Bei dem Stator kann es sich um den voranstehend beschriebenen ersten Teil der Generatoreinheit handeln. In diesem Falle kann es sich bei dem Rotor um den voranstehend beschriebenen zweiten Teil der Generatoreinheit handeln. Alternativ ist es möglich, dass es sich bei dem Stator um den voranstehend beschriebenen zweiten Teil der Generatoreinheit handelt. In diesem Falle kann es sich bei dem Rotor um den voranstehend beschriebenen ersten Teil der Generatoreinheit handeln. Dabei kann ein Schwungrad mit Permanentmagneten den Rotor darstellen. Der Stator kann dann mit einer oder mehreren Induktionsspulen versehen sein. Bei den Induktionsspulen kann es sich um Spulen mit z.B. Mangan-Zink-Ferrit-Kern handeln, die über eine Platine miteinander verschaltet sind. Zudem können die Spulen in entsprechenden Aussparungen eines Spulenkäfigs angeordnet sein und/oder mit diesem verklebt sein. So kann bei hohen Bearbeitungsdrehzahlen dennoch eine hohe Stabilität gewährleistet werden. Wird die Spindel der Werkzeugmaschine um die Drehachse beschleunigt (oder später wieder abgebremst), entsteht aufgrund der Massenträgheit des Schwungrads eine Drehzahldifferenz zwischen Stator und Rotor (also dem Schwungrad). Dadurch wird in den Induktionsspulen eine Spannung induziert, die dann direkt dem Verbraucher (also den Komponenten des Elektronikmoduls selbst, insbesondere wenn sich dieses gerade im Überwachungsmodus befindet) zugeführt wird, oder in dem Energiespeicher des Überwachungsmoduls gespeichert wird. Auf diese Weise wird bei einer Drehzahländerung der Spindel solange eine Spannung erzeugt, bis das Schwungrad die (neue) Spindeldrehzahl erreicht hat, also wenn keine negative oder positive Beschleunigung mehr vorliegt. Die theoretisch bei einer Drehzahländerung der Spindel verfügbare mechanische Energie (Rotationsenergie) errechnet sich: $E\_rot = 1/2 * I * (\omega\_2 - \omega\_1)^2$ Dabei ergibt sich das Trägheitsmoment $I$ eines Hohlzylinders, der um die Symmetrieachse rotiert zu: $I = m((r\_1^2 + r\_2^2)/2)$. Da die Masse und die Radien des Schwungrades bekannt sind, kann bei gegebener Kreisfrequenz ($\omega = 2\pi f$) die Rotationsenergie berechnet werden, wobei bei dieser Betrachtung sowohl Reibungs- als auch Wirbelstromverluste wie auch Verluste auf elektrischer Seite (in den Induktionsspulen, im Gleichrichter, in elektrischen Widerständen etc.) unberücksichtigt bleiben.

Der Zeitbedarf für einen Rundlaufüberwachungszyklus, also die Aktivierung der Elektronikeinheit, das Erfassen der für die Beschleunigung repräsentativen Größen, der weiteren für die Beschleunigung repräsentativen Größen und gegebenenfalls der Drehzahl(en), die Bestimmung der Gesamtbeschleunigung, die Bestimmung, ob ein Rundlauffehler vorliegt und das Signalisieren, ob ein Rundlauffehler vorliegt kann dabei insbesondere zwischen einer Sekunde und zwei Sekunden betragen. Um den Energiebedarf für diesen Zeitraum abzudecken, ist bereits die beim Hochfahren der Spindel und damit des zu rotierenden Werkzeugs auf eine übliche Bearbeitungsdrehzahl für ein Werkstück durch die Generatoreinheit erzeugbare Energiemenge ausreichend. Sollte die Energiemenge in bestimmten Fällen dennoch nicht ausreichend sein, z.B. weil die Bearbeitungsdrehzahl sehr gering ist, kann durch wiederholte Drehzahländerung zusätzliche Energie generiert werden. So kann die Spindel z.B. für einen relativ kurzen Zeitraum (z.B. 2 bis 3 Sekunden) auf 1000 Umdrehungen/min beschleunigt und anschließend auf eine Bearbeitungsdrehzahl von 500 Umdrehungen/min abgebremst werden, wobei beim Beschleunigen sowie beim Abbremsen Energie erzeugt werden kann. Bei einigen Varianten kann das Überwachungsmodul des Weiteren einen Fluidkanal umfassen, der sich fluiddicht zwischen zwei in Achsrichtung der Drehachse beabstandeten Außenseiten des Überwachungsmoduls erstreckt. Bei einigen Varianten kann die Generatoreinheit eine Turbineneinheit mit einem Turbinenrad aufweisen, das innerhalb des Fluidkanals angeordnet ist, und einen in der Turbineneinheit integrierten Generator umfassen, der dazu eingerichtet ist, bei einem Fluiddurchfluss durch das Turbinenrad elektrische Energie zu erzeugen. Auf diese Weise kann die voranstehend erwähnte Energieumwandlung eines unter Druck stehenden Mediums, z.B. eines in der Werkzeugmaschine zum Einsatz kommenden Kühlund/oder Schmiermittels realisiert werden. Dabei kann das in der Spindel zur Verfügung stehende Medium über den Fluidkanal und/oder ein Kühlmittelrohr in das Innere des Überwachungsmoduls zur Turbine geleitet werden.

Durch den Durchfluss des Mediums durch das Turbinenrad dreht sich dieses, sodass durch den integrierten Generator eine Spannung induziert wird, die wiederum dem Überwachungsmodul selbst bzw. dessen Komponenten als Verbraucher zugeführt oder im Energiespeicher des Überwachungsmoduls gespeichert wird. Bei dem Turbinenrad kann es sich insbesondere um den zweiten Teil der voranstehend beschriebenen Generatoreinheit (Generator) handeln. Die Permanentmagnete können insbesondere an einer unteren Oberfläche des Turbinenrads angebracht oder dort in dieses eingebracht sein. Der Stator mit den Induktionsspulen kann dann im Überwachungsmodul unterhalb des Turbinenrads fest auf einer Platine angeordnet sein. Um das Funktionieren dieser Form der Energieerzeugung zu überwachen, kann durch das Überwachungsmodul z.B. ein Fehler an die Werkzeugmaschine / die Rundlaufüberwachungs-Signalschnittstelle ausgegeben werden, wenn im Überwachungsmodul festgestellt wird, dass keine Energie gewonnen wird, selbst wenn die Spindel der Werkzeugmaschine positiv oder negativ beschleunigt wird.

Da die Sensoreinheit exakt im (Dreh-)Zentrum (in der Drehachse) des Überwachungsmoduls angeordnet sein kann, kann es dabei notwendig sein, das Medium, das üblicherweise durch einen Kühlmittelkanal zentral geführt wird, an der Sensorplatine vorbeizuleiten. Hierfür kann ein Verteiler im Überwachungsmodul vorgesehen sein, der den Strom des Mediums an der Sensorplatine und an der Sensoreinheit vorbeileitet und gleichzeitig das zu rotierende Werkzeug mit dem Medium versorgen kann.

Durch die Eigenstromerzeugung (Eigenenergieerzeugung) ist es möglich, eine kontinuierliche Energieversorgung für das Überwachungsmodul bereitzustellen. Dies kann insbesondere dann wünschenswert sein, wenn während eines Bearbeitungsprozesses eines Werkstücks kontinuierlich Daten durch die Sensoreinheit oder die weitere Sensoreinheit aufgezeichnet und an eine externe Auswerteeinheit wie die Rundlaufüberwachungs-Signalschnittstelle oder die Werkzeugmaschine übermittelt werden sollen. Bei einigen Varianten des Überwachungsmoduls ist die Sensoreinheit dazu eingerichtet, zeitlich gesondert von einem Normalbetrieb, in welchem das Überwachungsmodul, insbesondere zusammen mit der Spindel rotiert, initiale für eine Beschleunigung repräsentative Größen in der im Wesentlichen normal zur Drehachse orientierten Ebene bei einer im Wesentlichen konstanten Drehzahl oder bei mehreren unterschiedlichen im Wesentlichen konstanten Drehzahlen zu erfassen, wobei die Recheneinheit eingerichtet ist, um die initialen für die Beschleunigung repräsentativen Größen zusammen mit der entsprechenden Drehzahl / den entsprechenden Drehzahlen in einem Speicher des Überwachungsmoduls zu speichern, und/oder wobei die Kommunikationseinheit dazu eingerichtet ist, die initialen für die Beschleunigung repräsentativen Größen vorzugsweise zusammen mit der entsprechenden Drehzahl / den entsprechenden Drehzahlen an die Werkzeugmaschine / das Bearbeitungszentrum gemäß dem vierten Aspekt und/oder an die Rundlaufüberwachungs-Signalschnittstelle gemäß dem fünften Aspekt zu übertragen. Die Erfassung der initialen für die Beschleunigung repräsentativen Größen kann, gesondert von dem Normalbetrieb (in dem die Werkzeugmaschine ein Werkstück bearbeiten kann) insbesondere in einem Kalibrierbetrieb (Kalibrierlauf) erfolgen. Dieser Kalibrierlauf kann insbesondere unter Bedingungen stattfinden, bei denen sich die Werkzeugmaschine, die Spindel, der Werkzeugwechsler, der Arbeitsraum der Werkzeugmaschine, die Rundlaufüberwachungs-Signalschnittstelle und das Überwachungsmodul (hier insbesondere die möglichst korrekte zentrische Ausrichtung der Sensoreinheit) in einem Zustand befinden, in dem sie fehlerfrei arbeiten. Insbesondere ist im Kalibrierbetrieb eine möglichst ideale Plananlage der Werkzeugaufnahme in der Spindel vorgesehen, wobei sich keine Späne oder sonstige Verschmutzungen im Bereich der Spindel und der Werkzeugaufnahme befinden. Dies kann gegebenenfalls herstellerseitig und/oder durch den Benutzer überwacht werden.

Der Kalibrierlauf, der insbesondere herstellerseitig vorgenommen werden kann, kann insbesondere vorgesehen sein, da es montagetechnisch (in erster Linie aufgrund von Herstellungs- und Montagetoleranzen) äußerst komplex sein kann, die Sensoreinheit ganz exakt im Zentrum (also in der Drehachse des Überwachungsmoduls) zu positionieren. Auch ein exakt mittiges Einspannen des Überwachungsmoduls in der Spindel (sodass die Drehachsen von Überwachungsmodul und Spindel exakt koaxial verlaufen) kann nicht immer erwartet werden, da auch gewisse Toleranzen herrschen. Dadurch kann eine "Außermittigkeit" der Sensoreinheit entstehen, bei der insbesondere eine Trägheitsachse (z.B. die z-Achse, bei der es sich nicht um eine sensitive Achse handeln muss) der Sensoreinheit (oder alternativ eine Trägheitsachse des Beschleunigungssensors der Sensoreinheit) insbesondere innerhalb des voranstehend beschriebenen Toleranzabstands radial von der Drehachse des Überwachungsmoduls beabstandet ist und der voranstehend beschriebene Winkelfehler zwischen der Drehachse des Überwachungsmoduls und der Trägheitsachse der Sensoreinheit eingehalten wird. Durch diese Außermittigkeit können Offsetwerte entstehen, die die eigentlichen für die Beschleunigung repräsentativen Größen verfälschen können.

Aus diesem Grund können die genannten Offsetwerte im Kalibrierlauf als initiale, für die Beschleunigung repräsentative Größen ermittelt und bei der Berechnung der Gesamtbeschleunigung berücksichtigt werden. Der Kalibrierlauf bezeichnet somit einen "Lerngang" zur Bestimmung der initialen für die Beschleunigung repräsentativen Größen des entsprechenden Überwachungsmoduls. Der Kalibrierlauf kann in einem Kalibriermodus erfolgen, in dem die initialen für die Beschleunigung repräsentative Größen für eine Prüfdrehzahl oder für mehrere Prüfdrehzahlen ermittelt werden. Die Prüfdrehzahl(en) selbst können dabei wie voranstehend beschrieben vorgegeben und/oder ermittelt werden. Wenn die Prüfdrehzahl unter Verwendung der weiteren Sensoreinheit ermittelt wird, ist es insbesondere möglich, dass diese Drehzahlermittlung ebenfalls beim Hersteller oder über den Kalibriervorgang bei bekannter Drehzahl kalibriert wird.

Sodann kann eine von der Prüfdrehzahl abhängige Funktion der initialen für die Beschleunigung repräsentativen Größen berechnet werden. Diese drehzahlabhängige Funktion kann im Speicher des Überwachungsmoduls gespeichert werden und/oder an die Rundlaufüberwachungs-Signalschnittstelle / die Werkzeugmaschine übertragen werden. Die für die Kalibrierung notwendigen Berechnungen können dann durch die Werkzeugmaschine / die Rundlaufüberwachungs-Signalschnittstelle ausgeführt werden.

Das Erfassen der initialen für die Beschleunigung repräsentativen Größen kann - ähnlich wie das Erfassen der für die Beschleunigung repräsentativen Größen - über eine bestimmte Auswertezeit erfolgen, die insbesondere durch eine bestimmte Anzahl von Umdrehungen (z.B. zwischen 4 und 100 Umdrehungen) der Spindel gekennzeichnet sein kann. Über die Auswertezeit kann die Drehzahl (oder die Drehzahlen) im Wesentlichen konstant sein oder innerhalb eines Bereichs von höchstens 10 % der Drehzahl(en) schwanken, um möglichst genaue initiale Beschleunigungsgrößen zu ermitteln. Dabei kann es vorgesehen sein, dass das Erfassen der initialen für die Beschleunigung repräsentativen Größen erst dann gestartet wird, wenn die Drehzahl(en) erreicht ist/sind, also außerhalb der Hochlaufphase der Spindel auf die entsprechende(n) Drehzahl(en). Dies gilt auch für das Ermitteln der für die Beschleunigung repräsentativen Größen. Sind die initialen für die Beschleunigung repräsentativen Größen und die für die Beschleunigung repräsentativen Größen bei im Wesentlichen denselben Drehzahlen bekannt, kann die Gesamtbeschleunigung im Sinne einer resultierenden Gesamtbeschleunigung als eine Funktion aus diesen Größen ermittelt werden. Wie auch das Verfahren gemäß dem sechsten Aspekt kann der Kalibrierlauf zumindest teilweise von unterschiedlichen voranstehend beschriebenen Komponenten wie Überwachungsmodul, Rundlaufüberwachungs-Signalschnittstelle, Werkzeugmaschine und/oder durch ein Zusammenwirken dieser Komponenten durchgeführt werden.

Wird der Kalibrierlauf komplett durch das Überwachungsmodul selbst durchgeführt, kann das Überwachungsmodul der Werkzeugmaschine / der Rundlaufüberwachungs-Signalschnittstelle ihre Bereitschaft für den Kalibrierlauf signalisieren. Dann können die initialen, für die Beschleunigung repräsentativen Größen erfasst, gefiltert und gespeichert werden, wobei das Erfassen insbesondere bei über die Erfassungsdauer stabiler Drehzahl erfolgen kann. Wenn der Kalibrierlauf für mehrere Drehzahlen durchgeführt wird, kann während der Erfassung zusätzlich die Ermittlung der jeweiligen Drehzahl erfolgen. Dann kann die Drehzahl gegebenenfalls verändert und das Filtern und Ermitteln der für die initiale Beschleunigung repräsentativen Größen für die geänderte Drehzahl erneut durchgeführt werden. Daraus resultiert die angesprochene drehzahlabhängige Funktion oder - bei einem Kalibrierlauf mit einer einzelnen Drehzahl - ein Paar aus Prüfdrehzahl und initialen Beschleunigungswerten, die im Überwachungsmodul gespeichert werden können. Wenn dieser Ablauf abgeschlossen ist, kann das Überwachungsmodul der Werkzeugmaschine / der Rundlaufüberwachungs-Signalschnittstelle signalisieren, dass der Kalibrierlauf abgeschlossen ist. Alternativ oder zusätzlich kann das Überwachungsmodul ein Signal (IO oder NIO) übermitteln, um der Werkzeugmaschine / der Rundlaufüberwachungs-Signalschnittstelle zu signalisieren, dass der Kalibriervorgang erfolgreich abgeschlossen wurde, oder dass dabei ein Fehler aufgetreten ist.

Alternativ können die Filterung und die Speicherung der initialen für die Beschleunigung repräsentativen Größen auch in der Werkzeugmaschine / in der Rundlaufüberwachungsschnittstelle erfolgen. Auch hier kann das Werkzeugmodul seine Bereitschaft für den Kalibrierlauf, gegebenenfalls auf eine Anfrage der Werkzeugmaschine / der Rundlaufüberwachungs-Signalschnittstelle hin, an diese übertragen. Dann können die initialen, für die Beschleunigung repräsentativen Größen wiederum bei der über die Erfassungsdauer stabilen Drehzahl erfasst werden. Die erfassten Werte können z.B. kontinuierlich an die Werkzeugmaschine / die Rundlaufüberwachungs-Signalschnittstelle übertragen werden, bis die Erfassungsdauer erreicht ist. Dann kann, wenn der Kalibrierlauf für mehrere Drehzahlen durchgeführt werden soll, die Drehzahl verändert werden. Das Erfassen und Übertragen der initialen für die Beschleunigung repräsentativen Werte kann dann bei der neu eingestellten Drehzahl erfolgen, bis die Erfassungsdauer erneut erreicht ist. Wenn die initialen Beschleunigungswerte für alle Prüfdrehzahlen erfasst und übertragen sind, kann der Kalibrierlauf, z.B. durch ein Signal der Werkzeugmaschine / der Rundlaufüberwachungs-Signalschnittstelle, beendet werden. In der Werkzeugmaschine / der Rundlaufüberwachungs-Signalschnittstelle können die initialen Beschleunigungswerte dann gefiltert und zusammen mit der Drehzahl / den Drehzahlen beim Kalibrierlauf, insbesondere als drehzahlabhängige Funktion der initialen Beschleunigungswerte, gespeichert werden.

Bei einigen Varianten des Überwachungsmoduls kann die Recheneinheit des Weiteren eingerichtet sein, um die von der Sensoreinheit erfassten für die Beschleunigung repräsentativen Größen und/oder die initialen für die Beschleunigung repräsentativen Größen und/oder die von der weiteren Sensoreinheit erfassten weiteren für die Beschleunigung repräsentativen Größen und/oder die Drehzahl des Überwachungsmoduls während des Erfassens der für die Beschleunigung repräsentativen Größen jeweils für ein bestimmtes Zeitfenster von vorzugsweise zwischen 50 ms und 200 ms in Form eines Datenpakets aufzubereiten, wobei das Aufbereiten durch Operationen wie Signalfilterung, Mittelwertbildung und/oder Ermitteln eines Frequenzspektrums pro Zeitfenster erfolgt, und das Datenpaket nach der Aufbereitung an die Werkzeugmaschine / das Bearbeitungszentrum gemäß dem vierten Aspekt und/oder an die Rundlaufüberwachungs-Signalschnittstelle gemäß dem fünften Aspekt zu übertragen.

Dabei kann es sich um eine Variante der kontinuierlichen Prozessdatenübertragung handeln, bei der sämtliche von den Sensoreinheiten und/oder den weiteren Einheiten (z.B. die photosensitive Einheit) des Überwachungsmoduls erfasste Größen kontinuierlich an die Werkzeugmaschine / die Rundlaufüberwachungs-Signalschnittstelle übertragen werden. Dies ist besonders bei der Überwachung und Regelung von komplexen Fertigungsprozessen wichtig, in die das Überwachungsmodul / die Werkzeugmaschine / die Rundlaufüberwachungs-Signalschnittstelle eingebunden sein kann. Insbesondere bei geforderter hoher zeitlicher Auflösung (wenn z.B. basierend auf den von den Sensoreinheiten erfassten Größen auch eine Vibrationsmessung durchgeführt werden soll), oder wenn gleichzeitig eine Vielzahl von erfassten Größen vom Überwachungsmodul übertragen werden sollen, kann für diese kontinuierliche Übertragung eine hohe Bandbreite erforderlich sein. Eine drahtlose Datenübertragung zwischen Überwachungsmodul und Werkzeugmaschine / Rundlaufüberwachungs-Signalschnittstelle kann dabei einen Flaschenhals darstellen und sich somit limitierend auf die Datenübertragung auswirken. In diesen Fällen ist es möglich, dass eine Teilauswertung der von den Sensoreinheiten erfassten Größen im Überwachungsmodul stattfindet, sodass eine sichere und vollständige funkbasierte Datenübertragung erfolgen kann. Bei dieser Variante ist es insbesondere denkbar, dass das Überwachungsmodul den Rundlauf des im Betrieb zu rotierenden Werkzeugs kontinuierlich und vorzugsweise während des gesamten Bearbeitungszyklus eines Werkstücks (oder zumindest den Teil des Bearbeitungszyklus, der unter Verwendung des entsprechenden Überwachungsmoduls ausgeführt wird) überwacht. Dazu kann wiederum die Werkzeugmaschine / die Rundlaufüberwachungs-Signalschnittstelle, gegebenenfalls auf eine Anfrage hin, auf ein Signal des Überwachungsmoduls warten, das dessen Bereitschaft zur Datenerfassung signalisiert. Das Überwachungsmodul kann dann insbesondere die für die Beschleunigung repräsentativen Größen und die weiteren für die Beschleunigung repräsentativen Größen kontinuierlich als Prozessparameter erfassen und jeweils innerhalb des Zeitfensters oder am Ende des Zeitfensters das Datenpaket mit diesen und gegebenenfalls weiteren Prozessparametern wie Kühlmitteldurchfluss und/oder -Druck oder ermittelte Vibrationen an die Werkzeugmaschine / die Rundlaufüberwachungs-Signalschnittstelle übertragen. Die erfassten Prozessparameter und/oder das Datenpaket können im Speicher des Überwachungsmoduls zwischengespeichert werden.

Im Rahmen der Aufbereitung der Prozessparameter als Datenpaket, die nicht zwingend erfolgen muss, insbesondere jedoch bei komplexen Prozessparametern wie bei Vibrationen sinnvoll ist, kann z.B. ein Ermitteln des RMS-Werts der erfassten Größen über das Zeitfenster erfolgen. Zudem kann das Datenpaket den innerhalb des Zeitfensters aufgetretenen Peak-Wert und das über eine FFT ermittelte Frequenzspektrum der erfassten Größen pro Zeitfenster umfassen. So kann pro Zeiteinheit ein Datenpaket mit der Zusammenfassung der im jeweiligen Zeitfenster ermittelten Prozessgrößen an die Werkzeugmaschine / die Rundlaufüberwachungs-Signalschnittstelle übertragen werden.

Die Auswertung der Datenpakete mit Drehzahlbestimmung, filtern der Prozessparameter bzw. der erfassten Beschleunigungsgrößen, ermitteln von Beschleunigungswerten, bestimmen der Gesamtbeschleunigung und/oder vergleichen derer mit dem Schwellenwert kann in diesen Fällen in der Werkzeugmaschine / in der Rundlaufüberwachungs-Signalschnittstelle erfolgen. Wenn die Auswertung in der Rundlaufüberwachungs-Signalschnittstelle stattfindet, kann die Rundlaufüberwachungs-Signalschnittstelle der Werkzeugmaschine anschließend signalisieren, ob ein Rundlauffehler des Überwachungsmoduls vorliegt oder nicht.

Bei einigen Varianten des Überwachungsmoduls ist die Kommunikationseinheit des Weiteren dazu eingerichtet, die von der Sensoreinheit erfassten für die Beschleunigung repräsentativen Größen und/oder die initialen für die Beschleunigung repräsentativen Größen und/oder die von der weiteren Sensoreinheit erfassten weiteren für die Beschleunigung repräsentativen Größen und/oder die Drehzahl des Überwachungsmoduls während des Erfassens der für die Beschleunigung repräsentativen Größen und/oder das Datenpaket an die Werkzeugmaschine / das Bearbeitungszentrum gemäß dem vierten Aspekt und/oder an die Rundlaufüberwachungs-Signalschnittstelle gemäß dem fünften Aspekt zu übertragen, wenn ein Zwischenspeicher des Überwachungsmoduls zumindest annähernd voll ist.

Diese Variante kann z.B. insbesondere mit der Variante kombiniert werden (insofern gelten die für diese Variante beschriebenen Ausführungen sinngemäß), wonach die erfassten Prozessgrößen pro Zeitfenster an die Werkzeugmaschine / die Rundlaufüberwachungs-Signalschnittstelle übertragen werden. Dabei ist es denkbar, dass die erfassten Prozessgrößen zunächst im Überwachungsmodul zwischengespeichert werden und dass die Übertragung der Prozessgrößen begonnen wird, sobald der Speicher des Überwachungsmoduls voll oder zu 90 % oder zu 80 % oder zu 70 % voll ist. Diese Übertragung kann dann bis zum Erreichen der vorgesehenen Erfassungsdauer aufrechterhalten werden, oder bis der Speicher des Überwachungsmoduls wieder annähernd leer (z.B. nur noch zu 30 % oder zu 20 % oder zu 10 % gefüllt) oder komplett leer ist.

Bei einigen Varianten des Überwachungsmoduls kann die Recheneinheit dazu eingerichtet sein, die Gesamtbeschleunigung basierend auf einer Subtraktion der für die initiale Beschleunigung repräsentativen Größen von den entsprechenden für die Beschleunigung repräsentativen Größen zu bestimmen.

Diese Bestimmung der Gesamtbeschleunigung kann - wenn nicht alle Schritte gemäß dem sechsten Aspekt durch das Überwachungsmodul ausgeführt werden - selbstverständlich auch durch die Werkzeugmaschine / die Rundlaufüberwachungs-Signalschnittstelle vorgenommen werden.

Bei dem Gesamtbeschleunigungswert kann es sich demnach um einen resultierenden Wert der von der Sensoreinheit für die Beschleunigung repräsentativen Größen (ax, ay) unter Berücksichtigung der initialen für die Beschleunigung repräsentativen Größen (auch Initialwerte ax_initial, ay_initial) handeln. Sind diese Größen bei im Wesentlichen korrespondierenden Drehzahlen bekannt, kann die Gesamtbeschleunigung (im Sinne einer resultierenden Gesamtbeschleunigung) errechnet werden zu $a\_ges = a\_resultierend = \sqrt{((a\_x - a\_{(x,\,initial)})^2 + (a\_y - a\_{(y,\,initial)})^2)}$. Wenn im Rahmen dieser Offenbarung von der resultierenden Gesamtbeschleunigung die Rede ist, bedeutet dies jedenfalls, dass die Initialwerte ax_initial, ay_initial berücksichtigt sind, während der Ausdruck ages für eine Gesamtbeschleunigung sowohl unter Berücksichtigung der Initialwerte als auch ohne Berücksichtigung der Initialwerte verwendet wird.

Der Schwellenwert, mit dem diese Gesamtbeschleunigung verglichen wird, um zu bestimmen, ob ein Rundlauffehler des Überwachungsmoduls vorliegt oder nicht, kann insbesondere ein Schwellenwert sein, der sich auf die Abweichung der für die Beschleunigung repräsentativen Größen von den Initialwerten bezieht. So kann dieser Schwellenwert den noch zulässigen Bereich der Exzentrizität (also die Abweichung von einem idealen Rundlauf, bei der aber noch kein Rundlauffehler im Sinne dieser Offenbarung vorliegt) des zu rotierenden Werkzeugs kennzeichnen. Es kann demnach insbesondere ein Rundlauffehler des Überwachungsmoduls vorliegen (der Werkzeugmaschine / der Rundlaufüberwachungsschnittstelle wird NIO signalisiert), wenn die Gesamtbeschleunigung den Schwellenwert überschreitet. Dabei kann der (drehzahlabhängige) Schwellenwert z.B. als digitaler Wert oder als analoger Wert und z.B. als $\mu$m-Wert vorgegeben sein.

Bei einigen Varianten des Überwachungsmoduls kann die Recheneinheit dazu eingerichtet sein, dann, wenn ein Rundlauffehler vorliegt, den Betrag des Rundlauffehlers und/oder die Richtung des Rundlauffehlers zu bestimmen. Die Kommunikationseinheit kann dann dazu eingerichtet sein, den Betrag und/oder die Richtung des Rundlauffehlers an die Werkzeugmaschine / das Bearbeitungszentrum gemäß dem vierten Aspekt oder an die Rundlaufüberwachungs-Signalschnittstelle gemäß dem fünften Aspekt zu übertragen. Zusätzlich oder alternativ kann die Kommunikationseinheit dazu eingerichtet sein, dann, wenn ein Rundlauffehler vorliegt, der Werkzeugmaschine / dem Bearbeitungszentrum gemäß dem vierten Aspekt und/oder der Rundlaufüberwachungs-Signalschnittstelle gemäß dem fünften Aspekt das Vorliegen des Rundlauffehlers zu signalisieren, während das Überwachungsmodul, insbesondere zusammen mit der Spindel, rotiert.

Auf diese Weise ist es insbesondere möglich, der Werkzeugmaschine / der Rundlaufüberwachungs-Signalschnittstelle - vorzugsweise bevor ein Werkstück durch die Werkzeugmaschine bearbeitet wird - auf schnelle und effiziente Weise zu signalisieren, dass ein Rundlauffehler des Überwachungsmoduls vorliegt, sodass von der Werkzeugmaschine schnell entsprechende Gegenmaßnahmen ergriffen werden können. Der Betrag des Rundlauffehlers und die Richtung des Rundlauffehlers können z.B. als digitale Werte (z.B.: 30 μm bei 110°) übermittelt werden. Der Betrag r des Rundlauffehlers errechnet sich dabei unter Berücksichtigung von aresultierend und der Drehzahl n bei der Erfassung zu $r = a\_resultierend/(4 * \pi\text{\textasciicircum}2 * n^2)$. Bei der Bestimmung der Richtung des Rundlauffehlers kann der Winkel $\alpha$ der größten Rundlaufabweichung von der Recheneinheit des Überwachungsmoduls bestimmt werden. Dabei wird bei der Berechnung unterschieden, in welchem Quadrant der Richtungsvektor liegt. Die Bestimmung des Richtungswinkels $\alpha$ der größten Rundlaufabweichung über eine Tangens-Funktion unter Betrachtung von ay, ay_initial, ax und ax_initial kann im Wesentlichen nach der folgenden Tabelle ausgeführt werden.

| ax - ax_initial | ay - ay_initial | Quadrant | Berechnung |
|---|---|---|---|
| > 0 | > 0 | QI | $\alpha = arctan((a\_y - a\_(y\_initial))/(a\_x - a\_(x\_initial)))$ |
| = 0 | > 0 | - | $\alpha = 90°$ |
| < 0 | > 0 | QII | $\alpha = arctan((a\_y - a\_(y\_initial))/(a\_x - a\_(x\_initial))) + 180°$ |
| < 0 | < 0 | QIII | $\alpha = arctan((a\_y - a\_(y\_initial))/(a\_x - a\_(x\_initial))) + 180°$ |
| = 0 | < 0 | - | $\alpha = 270°$ |
| > 0 | < 0 | QIV | $\alpha = arctan((a\_y - a\_(y\_initial))/(a\_x - a\_(x\_initial))) + 360°$ |

Bei einigen Varianten ist das Überwachungsmodul dazu eingerichtet, das Erfassen der weiteren für die Beschleunigung repräsentativen Größen, das Erfassen der weiteren für die Beschleunigung repräsentativen Größen, das Bestimmen der Gesamtbeschleunigung, das Bestimmen, ob ein Rundlauffehler vorliegt und das Signalisieren, ob ein Rundlauffehler vorliegt, innerhalb eines Zeitraums durchzuführen, in dem das Überwachungsmodul, insbesondere zusammen mit der Spindel, von einer Werkzeugmaschine / einem Bearbeitungszentrum von einer Spindelstartposition zu einer Bearbeitungsposition eines Werkstücks bewegt wird, und wobei dieser Zeitraum insbesondere weniger als 5 Sekunden und vorzugsweise weniger als 3 Sekunden beträgt. Der Zeitraum kann z.B. zwischen einer Sekunde und zwei Sekunden betragen. So ist es im Gegensatz zu vielen anderen taktilen Rundlaufüberwachungsmethoden (oder solchen mit Lasermesssystem) möglich, die gesamte Rundlaufüberprüfung inklusive der Übertragung des Ergebnisses im Wesentlichen hauptzeitparallel, also während der Anfahrt des zu rotierenden Werkzeugs zur Bearbeitungsstelle, durchzuführen. Bei einigen Varianten kann das Überwachungsmodul des Weiteren wenigstens eine Antenneneinheit mit wenigstens einer Antenne und wenigstens einer Antennenabdeckung umfassen, wobei die Antenne innerhalb des Überwachungsmoduls angeordnet ist und die Antennenabdeckung die Antenne aus Sicht der Drehachse nach Außen abdeckt, wobei sich die Antennenabdeckung in Achsrichtung der Drehachse über eine größere Länge als die Antenne erstreckt.

Die Antenne kann insbesondere zur drahtlosen Datenübertragung und Kommunikation mit der Werkzeugmaschine / der Rundlaufüberwachungs-Signalschnittstelle dienen. Es kann auch eine weitere Antenne oder es können auch zwei (oder gegebenenfalls drei oder mehr) weitere Antennen in der Antenneneinheit vorgesehen sein. Alternativ können auch zwei, drei oder mehr Antenneneinheiten mit jeweils einer Antenne und einer Antennenabdeckung vorgesehen sein. Bei einigen Varianten kann die Antennenabdeckung entfallen. Dadurch ist eine bessere kreisförmige Abstrahlcharakteristik erreichbar und es wird insbesondere bei einem schnell rotierenden Überwachungsmodul eine bessere Datenübertragungsqualität erreicht.

Allen voranstehend beschriebenen Aspekten ist gemein, dass, insbesondere während ein Werkstück durch die Werkzeugmaschine mit dem Überwachungsmodul bearbeitet wird, auftretende Vibrationen erfasst werden können. Dafür können insbesondere die durch die Sensoreinheit erfassten für die Beschleunigung repräsentativen Größen und/oder die von der weiteren Sensoreinheit erfassten weiteren für die Beschleunigung repräsentativen Größen analysiert werden. Dabei können insbesondere die Schwingungsbreite (Peak-to-Peak-Wert), der Effektivwert (RMS-Wert) sowie RMS-Werte harmonischer Schwingungsanteile der erfassten Größen analysiert werden. Vorzugsweise kann auch das Frequenzspektrum der erfassten Größen z.B. mittels FFT analysiert werden.

Wenn die Sensoreinheit / die weitere Sensoreinheit einen dreiachsigen Beschleunigungssensor umfasst, können dabei die Beschleunigungsgrößen in allen drei Achsrichtungen (X, Y und Z) betrachtet werden; ähnliches gilt bei einem zweiachsigen Beschleunigungssensor, wo die Beschleunigungsgrößen in beiden Achsrichtungen (X und Y) betrachtet werden können. Alternativ ist es auch denkbar, die Vibrationen basierend auf einer entlang einer einzelnen der drei oder zwei Achsrichtungen auftretenden Beschleunigungen zu analysieren. In diesen Fällen kann insbesondere die Achsrichtung betrachtet werden, entlang derer die größte Beschleunigung auftritt.

Die Analyse der Vibrationen (Schwingungen) kann im Überwachungsmodul stattfinden. Dann sendet das Überwachungsmodul ein Fehlersignal an die Werkzeugmaschine / die Rundlaufüberwachungs-Signalschnittstelle, wenn die Vibrationen eine definierte Toleranzschwelle erreichen oder überschreiten. Alternativ ist es möglich, dass lediglich die Rohdaten, die der Vibrationsanalyse zugrunde liegen, also die für die Beschleunigung repräsentativen Größen und/oder die weiteren für die Beschleunigung repräsentativen Größen, an die Werkzeugmaschine / die Rundlaufüberwachungs-Signalschnittstelle übertragen werden, dort ausgewertet und mit der definierten Toleranzschwelle verglichen werden. Wenn die Toleranzschwelle überschritten wird, kann die Werkzeugmaschine Bearbeitungsparameter ändern und/oder die Bearbeitung stoppen und die Werkzeugmaschine in einen sicheren Zustand versetzen. Durch die Messung und Analyse der Vibrationen sowie weiterer Prozessparameter während einer Werkstückbearbeitung ist es insbesondere möglich, zusätzlich zur Rundlaufüberwachung den gesamten Zerspanungsprozess, den Zustand des Werkzeugs (Verschleiß, Werkzeugbruch) und den Spindellagerzustand zu überwachen, um bei auftretenden Problemen schnell reagieren zu können.

So ist die Recheneinheit des Überwachungsmoduls bei einigen Varianten dazu eingerichtet, wenigstens einen weiteren Prozessparameter zu überwachen, wenn das Überwachungsmodul insbesondere zusammen mit dem zu rotierenden Werkzeug und/oder mit der Werkzeugaufnahme und/oder mit der Spindel rotiert, wobei der wenigstens eine Prozessparameter eine Vibration, eine Temperatur, einen Kühlmitteldruck, einen Kühlmitteldurchfluss, eine Schnittkraft und/oder ein Drehmoment umfasst. Übersteigt oder unterschreitet einer der Parameter dabei einen bestimmten Schwellenwert, kann das Überwachungsmodul der Rundlaufüberwachungs-Signalschnittstelle / der Werkzeugmaschine einen entsprechenden Fehler signalisieren.

Jedes der Überwachungsmodule kann dafür zusätzlich weitere Sensorik aufweisen. Dazu zählt z.B. ein Temperatursensor zur Überwachung der Werkzeugtemperatur, insbesondere während der Bearbeitung eines Werkstücks durch die Werkzeugmaschine mit eingesetztem Überwachungsmodul. Des Weiteren können DMS-Sensoren und/oder Piezo-Sensoren am/im Überwachungsmodul vorgesehen sein, um bei der Werkstückbearbeitung auftretende Größen wie Kräfte (z.B. Schnittkräfte) und Drehmomente zu ermitteln. Zudem kann dem Überwachungsmodul ein Durchflusssensor zugeordnet sein. Dadurch ist es z.B. möglich, kontinuierlich zu überprüfen, ob genügend Medium durch das Turbinenrad fließt, um mittels der Turbineneinheit Energie zu erzeugen.

Der Durchflusssensor kann eine Durchflusssensoreinheit umfassen, die innerhalb des Überwachungsmoduls angeordnet ist. Alternativ ist es möglich, den Mediendurchfluss über die Drehzahl des Turbinenrads zu ermitteln. Zusätzlich und/oder alternativ kann im Überwachungsmodul ein Drucksensor vorgesehen sein, der den Druck des Mediums im Fluidkanal / im Kühlmittelrohr misst. Bei einem Druckabfall kann auf mangelnden Fluss des Mediums und in der Folge auf ein Problem bei der Energieerzeugung durch die Turbineneinheit geschlossen werden. Die Rundlaufüberwachungs-Signalschnittstelle und die Werkzeugmaschine können dann dazu eingerichtet sein, den vom Überwachungsmodul signalisierten Fehler zum empfangen (im Falle der Werkzeugmaschine gegebenenfalls über die Rundlaufüberwachungs-Signalschnittstelle) und entsprechende Gegenmaßnahmen einzuleiten.

Zur weiteren Energieersparnis kann in einer weiteren Variante das Überwachungsmodul bis zu einem "Aufwachen" vollständig im "Tiefschlaf' gehalten sein. In diesem Fall kann eine Betriebsbereitschaft über eine vordefinierte Drehzahl(-abfolge) für (jeweils) eine vordefinierte Zeitdauer(-abfolge) hergestellt werden, als auch über eine manuelle Aktivierung mittels Eingabegerät erfolgen. Dies ist im Unterschied zu sehen zu etablierten Funkübertragungssystemen, bei denen Endgeräte in regelmäßigen Abständen aus dem Tiefschlaf aufwachen und nachfragen, ob eine Kommunikation erforderlich ist, oder in regelmäßigen Abständen ihren Zustand senden. Bei hier vorgestellten Varianten kann das Überwachungsmodul nur zu bestimmten Ereignissen ein Ereignis-Signal senden. Die Empfangseinheit bestätigt den Empfang des Signals mit einem Bestätigungs-Signal, wie dies z.B. in der EP 2 208 017 A2 erläutert ist. Das Bestätigungs-Signal kann auch Anweisungen enthalten. Diese Anweisungen können einen Betriebsartenwechsel in der Funkübertragung beinhalten, sodass die Überwachungseinheit keine weiteren Ereignis-Signale versendet, sondern in eine bidirektionale Datenübertragung wechselt.

In einer Variante kann eine Betriebsartenanwahl über ein Drehzahlstufen-Profil erfolgen. Die Kommunikation zwischen dem Überwachungsmodul und einer Empfängerbasisstation kann in einer Variante z.B. in der EP 2 208 017 A2 erläuterten Weise aufgebaut werden. Dabei wird in einer Variante das Überwachungsmodul der Basisstation bekannt gegeben durch einen Anlern- oder Pairing-Vorgang. Das Überwachungsmodul führt in einer Variante den Anlern-Vorgang aus, indem die Spindel der Werkzeugmaschine ein vordefiniertes Drehzahl-Muster oder ein vordefiniertes erstes Drehzahl-Profil ausführt. Das Überwachungsmodul ist dazu eingerichtet, mittels seiner (z.B. Beschleunigungs-Sensorik) oder über eine Auswertung der Generatorspannung das Profil zu erkennen und daraufhin wechselt in die Betriebsart "Anlern- oder Pairing-Vorgang ausführen" zu wechseln. Mittels vordefinierter weiterer Drehzahl-Profile sind weitere Funktionen durch das Überwachungsmodul ausführbar, z.B. eine Funktion "Kalibrier-Vorgang ausführen". Hier nimmt das Überwachungsmodul selbstständig die Kalibrierwerte auf. Nach erfolgreicher Kalibrierung wird ein Bestätigungs-Signal gesendet. Als Parameter der Drehzahl-Profile sind in einer Variante (i) die Drehzahl, (ii) die Dauer einer vordefinierten Drehzahl(-abfolge), (iii) die Steigung der Änderung von einer Drehzahlstufe zur nächsten und/oder (iv) die Dauer der Änderung von einer Drehzahlstufe zur nächsten der Spindel der Werkzeugmaschine vorgesehen. Insbesondere über eine Auswertung der Generatorspannung sind die einzelnen Parameter dieser Profile zu detektieren. Ein Beispiel eines solchen Drehzahl-Profils ist: 200 upm für 1 sec, anschließend 400 upm für 0,5 sec, anschließend 200 upm für 1 sec. Ein weiteres Beispiel eines solchen Drehzahl-Profils ist : 200 upm für 1 sec, anschließend 0,5 sec für den Übergang auf 500 upm (Steigung der Änderung: $\Delta$upm/$\Delta$t = 300/0,5 = 600), anschließend 500 upm für 0,5 sec, anschließend 0,5 sec für den Übergang auf 300 upm (Steigung der Änderung: $\Delta$upm/$\Delta$t = 200/0,5 = 400), anschließend 300 upm für 1 sec. Es sei verstanden, dass die Abfolge mehrere unterschiedliche Drehzahl-Stufen haben kann, die jeweils ihrerseits länger oder kürzer sein können. Dies gilt auch für die Dauer der Drehzahl-Änderungen.

Neben den Funktionen "Anlern- oder Pairing-Vorgang ausführen", "Kalibrier-Vorgang ausführen", sind auch die Funktionen "Aufwachen- oder Wake-up-Signal erzeugen", "Überwachungs- oder Messmodus einnehmen", "Tiefschlaf- oder Standby-Modus einnehmen" und andere Funktionen mittels solchen vordefinierten Drehzahlen oder Drehzahlabfolgen der Spindel der Werkzeugmaschine von der Steuerung der Werkzeugmaschine an das Rundlaufüberwachungssystem zu übermitteln.

Das Rundlaufüberwachungsmodul, das Rundlaufüberwachungs-Werkzeugaufnahmemodul oder das Rundlaufüberwachungs-Werkzeugmodul sind in einer Variante dazu eingerichtet, das Erfassen der für die Beschleunigung repräsentativen Größen, das Erfassen der weiteren für die Beschleunigung repräsentativen Größen, das Bestimmen der Gesamtbeschleunigung, das Bestimmen, ob ein Rundlauffehler vorliegt, oder das Signalisieren, ob ein Rundlauffehler vorliegt, erst dann zu beginnen, wenn eine definierte Drehzahl erreicht ist, wobei während der Auswertezeit die Spindel-Drehzahl im Wesentlichen konstant ist oder innerhalb eines Bereichs von höchstens 10 % der Drehzahl variiert.

Die Werkzeugmaschine (oder deren Steuerung), die Rundlaufüberwachungs-Signalschnittstelle und das Überwachungsmodul (also sowohl das Rundlaufüberwachungsmodul gemäß dem ersten Aspekt als auch das Rundlaufüberwachungs-Werkzeugaufnahmemodul gemäß dem zweiten Aspekt als auch das Rundlaufüberwachungs-Werkzeugmodul gemäß dem dritten Aspekt) können von einem Rundlaufüberwachungssystem umfasst sein. Ein derartiges Rundlaufüberwachungssystem kann alle voranstehend in Bezug auf die einzelnen Komponenten beschriebenen Merkmale umfassen. Die Rundlaufüberwachungs-Signalschnittstelle kann dabei insbesondere als Kommunikationsinterface (Maschineninterface) zwischen dem Überwachungsmodul und der Werkzeugmaschine dienen. Dabei kann es vorgesehen sein, dass zumindest teilweise Auswertungen von vom Überwachungsmodul erfasster Größen in dem Maschineninterface (Rundlaufüberwachungs-Signalschnittstelle) erfolgen, oder dass lediglich vom Überwachungsmodul an die Werkzeugmaschine zu übermittelnde Daten vom Maschineninterface weitergeleitet werden, um die entsprechenden Auswertungen in der Werkzeugmaschine selbst auszuführen. Die Kommunikation und Datenübertragung zwischen Überwachungsmodul und Maschineninterface kann dabei insbesondere drahtlos stattfinden und vorzugsweise eine funkbasierte Übertragung oder eine IR-Übertragung sein. Die Kommunikation und Datenübertragung zwischen Maschineninterface und Werkzeugmaschine kann drahtgebunden stattfinden und bei Auswertungen im Maschineninterface z.B. mittels I/O Statussignalen erfolgen. Alternativ können Datenworte (bei einer größeren Anzahl zu übertragender Daten, z.B. bei der kontinuierlichen Prozessdatenüberwachung) zwischen Maschineninterface und Werkzeugmaschine über ein digitales Bussystem (z.B. Feldbussysteme wie Profibus, Profinet, Ethercat oder Ethernet) übertragen werden. Die Anmelderin behält sich vor, einen unabhängigen Anspruch auf ein derartiges Rundlaufüberwachungssystem zu richten.

Durch die voranstehend beschriebenen Aspekte werden modulare Lösungen zur Verbesserung der Rundlaufüberwachung eines im Betrieb zu rotierenden Werkzeugs bereitgestellt. Dabei entstehen keine zusätzlichen Installationskosten, wenn bereits ein Messsystem insbesondere mit einer funkbasierten Kommunikationsschnittstelle auf der Werkzeugmaschine installiert ist. So ergibt sich eine leichte Nachrüstbarkeit, was (neben dem generellen Aufbau des Überwachungsmoduls) zu einer wesentlichen Kostenersparnis gegenüber konventionellen spindelintegrierten Systemen führt; denn die aufwändige Bauweise von in einer Spindel integrierten Sensoren und die tiefe Integration in die Werkzeugmaschine machen diese spindelintegrierten Systeme teuer und ein Nachrüsten geht mit einem erheblichen Eingriff in die Werkzeugmaschinenstruktur einher.

Die Modularität führt auch zu einer erhöhten Flexibilität, da die Überwachungsmodule nicht maschinengebunden sind, sondern in den verschiedensten Werkzeugmaschinen eingesetzt werden können. So können je nach Bedarf mit geringem Aufwand entsprechende aufgabenspezifische Werkzeuge mit Rundlaufüberwachung zusammengestellt werden. Auch bei Umstellung einer ganzen Produktionslinie können die Überwachungsmodule flexibel mit anderen Zerspanungswerkzeugen kombiniert werden.

Im Vergleich zu einer taktilen Rundlaufüberprüfung oder einer Rundlaufmessung mit einem Lasermesssystem kann die Rundlaufüberwachung gemäß den voranstehend beschriebenen Aspekten schneller und insbesondere zumindest nahezu hauptzeitparallel während der Anfahrt des Werkzeugs zur Bearbeitungsstelle durchgeführt werden, da die Rundlaufüberwachungsmodule in sehr kurzer Zeit die notwendigen Messergebnisse liefern.

Es ist für den Fachmann ersichtlich, dass die zuvor beschriebenen Aspekte und Merkmale (mit Ausnahme derer,

**EP 4 423 472 B1**

die sich auf die strukturellen Komponenten beziehen, die lediglich mit Bezug auf das Überwachungsmodul beschrieben wurden) beliebig in einem Überwachungsmodul, in einer Rundlaufüberwachungs-Signalschnittstelle, in einer Werkzeugmaschine, in einem Rundlaufüberwachungssystem und/oder in einem Rundlaufüberwachungsverfahren für ein in einer Werkzeugmaschine / in einem Bearbeitungszentrum im Betrieb zu rotierendes Werkzeug kombiniert werden können.

Kurzbeschreibung der Fig.

Weitere Ziele, Merkmale, Vorteile, Anwendungsmöglichkeiten und mögliche Abwandlungen ergeben sich aus der nachfolgenden Beschreibung von nicht einschränkend zu verstehenden Ausführungsbeispielen und Varianten mit Bezug auf die zugehörigen Zeichnungen. Dabei zeigen alle beschriebenen und/oder bildlich dargestellten Merkmale für sich oder in beliebiger Kombination den hier offenbarten Gegenstand. Die Abmessungen und Proportionen der in den Fig. schematisch gezeigten Komponenten sind hierbei nicht maßstäblich. Gleiche oder gleichwirkende Komponenten sind mit denselben Bezugszeichen versehen. Wo immer in der vorliegenden Offenbarung auf Wertebereiche verwiesen wird, sind die oberen und unteren Bereichsgrenzen in den Bereichen enthalten. Es wird angemerkt, dass sämtliche Berechnungen in dieser Offenbarung sowie die Darstellungen von Werten in den Fig. auf digitalen Ausgabewerten (als Rohdaten) von z.B. Beschleunigungssensoren erfolgen. Alternativ können insbesondere sämtliche Berechnungen auf analogen Ausgangswerten der entsprechenden Beschleunigungssensoren beruhen. Wenn im Rahmen der nachfolgenden Beschreibung (Teil-)Verfahrensschritte mit Bezug auf eine bestimmte Fig. beschrieben werden und in einer weiteren Fig. dieselben (Teil-)Verfahrensschritte existieren, so ist dort die Beschreibung mit Bezug auf die bestimmte Fig. gleichermaßen gültig, sofem nicht etwas Anderes angegeben ist. Wenn Begriffe wie "im Wesentlichen" oder "ungefähr" im Zusammenhang mit der strukturellen Einheit einer Vorrichtung (Überwachungsmodul etc.) gebraucht werden, sind mit den Ausdrücken "im Wesentlichen" oder "ungefähr" technische Merkmal gemeint, die innerhalb der technischen Toleranzgrenzen der jeweiligen Herstellungsverfahren hervorgebracht werden.

Fig. 1 zeigt ein Rundlaufüberwachungsmodul gemäß bestimmten Ausführungsbeispielen.

Fig. 2 zeigt ein Rundlaufüberwachungs-Werkzeugaufnahmemodul gemäß bestimmten Ausführungsbeispielen.

Fig. 3 zeigt ein Rundlaufüberwachungs-Werkzeugmodul gemäß bestimmten Ausführungsbeispielen.

Fig. 4 zeigt eine Werkzeugmaschine / ein Bearbeitungszentrum im Zusammenwirken mit einem Überwachungsmodul gemäß bestimmten Ausführungsbeispielen.

Fig. 5 zeigt eine Rundlaufüberwachungs-Signalschnittstelle im Zusammenwirken mit einer Werkzeugmaschine / einem Bearbeitungszentrum und mit einem Überwachungsmodul gemäß bestimmten Ausführungsbeispielen.

Fig. 6 zeigt ein Ablaufdiagramm eines Rundlaufüberwachungsverfahrens gemäß bestimmten Ausführungsbeispielen.

Fig. 7 zeigt eine Anordnung einer Sensorplatine, eines Platinenhalters, von Verstellmitteln für den Platinenhalter, einer Antenne mit Antennenabdeckung und einer photosensitiven Einheit innerhalb des Überwachungsmoduls gemäß bestimmten Ausführungsbeispielen.

Fig. 8 zeigt von der Sensoreinheit des Überwachungsmoduls erfasste für eine Beschleunigung repräsentative Größen bei verschiedenen Drehzahlen gemäß bestimmten Ausführungsbeispielen.

Fig. 9A zeigt schematisch, wie ein Betrag und ein Winkel eines Rundlauffehlers eines Überwachungsmoduls gemäß bestimmten Ausführungsbeispielen ermittelt werden.

Fig. 9B zeigt eine Gesamtbeschleunigung über der Drehzahl für verschiedene Positionen einer Sensoreinheit gemäß bestimmten Ausführungsbeispielen.

Fig. 10 zeigt für die Beschleunigung repräsentative Größen, initiale für die Beschleunigung repräsentative Größen, eine Gesamtbeschleunigung und einen Schwellenwert über der Drehzahl gemäß bestimmten Ausführungsbeispielen.

Fig. 11 zeigt ein einer durch die Sensoreinheit erfassten Größe überlagertes Sinussignal bei horizontaler Ausrichtung des Überwachungsmoduls und bei verschiedenen Drehzahlen.

Fig. 12 zeigt ein einer durch die Sensoreinheit erfassten Größe überlagertes Sinussignal bei horizontaler Ausrichtung des Überwachungsmoduls und bei verschiedenen Drehzahlen.

Fig. 13A zeigt die Anordnung und Ausgestaltung eines Fluidkanals und weiterer optionaler Komponenten eines Überwachungsmoduls gemäß bestimmten Ausführungsbeispielen.

Fig. 13B zeigt schematisch eine Sensorplatine und eine Sensoreinheit mit Fluidkanal gemäß bestimmten Ausführungsbeispielen.

Fig. 14 zeigt eine Turbineneinheit zur Eigenenergieerzeugung in einem Überwachungsmodul gemäß bestimmten Ausführungsbeispielen.

Fig. 15 zeigt ein Schwungrad zur Eigenenergieerzeugung in einem Überwachungsmodul gemäß bestimmten Ausführungsbeispielen.

Fig. 16 zeigt den Ablauf eines Kalibriervorgangs mit Auswertung im Überwachungsmodul gemäß bestimmten Ausführungsbeispielen.

Fig. 17 zeigt den Ablauf eines Kalibriervorgangs mit Auswertung in der Rundlaufüberwachungs-Signalschnittstelle / in der Werkzeugmaschine gemäß bestimmten Ausführungsbeispielen.

Fig. 18 zeigt einen Prüfablauf zur Rundlaufüberwachung eines im Betrieb zu rotierenden Werkzeugs mit Auswertung im Überwachungsmodul bei einer einzelnen Prüfdrehzahl gemäß bestimmten Ausführungsbeispielen.

Fig. 19 zeigt einen Prüfablauf zur Rundlaufüberwachung eines im Betrieb zu rotierenden Werkzeugs mit Auswertung im Überwachungsmodul bei mehreren Prüfdrehzahlen gemäß bestimmten Ausführungsbeispielen.

Fig. 20 zeigt einen Ablauf zur Rundlaufüberwachung eines im Betrieb zu rotierenden Werkzeugs mit Auswertung in der Rundlaufüberwachungs-Signalschnittstelle / der Werkzeugmaschine bei mehreren Prüfdrehzahlen gemäß bestimmten Ausführungsbeispielen.

Fig. 21 zeigt einen Ablauf einer kontinuierlichen Prozessdatenübertragung an die Rundlaufüberwachungs-Signalschnittstelle / die Werkzeugmaschine gemäß bestimmten Ausführungsbeispielen.

Fig. 22 zeigt einen Ablauf an der Werkzeugmaschine bei einer Kommunikation mit dem Überwachungsmodul / der Rundlaufüberwachungs-Signalschnittstelle über IO-Signale gemäß bestimmten Ausführungsbeispielen.

Detaillierte Beschreibung der Figuren

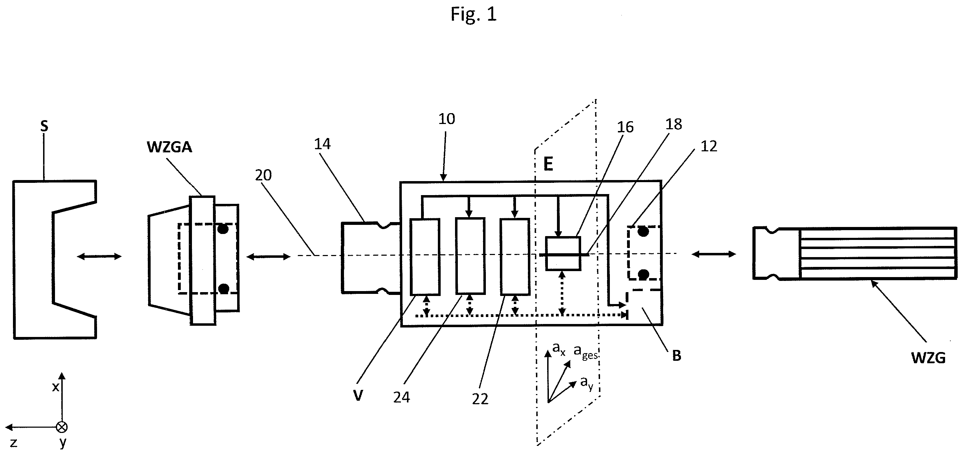

Die Fig. 1 zeigt ein Rundlaufüberwachungsmodul 10 (im Folgenden auch als Überwachungsmodul 10 bezeichnet), mit dem der Rundlauf eines im Betrieb zu rotierenden Werkzeugs WZG überwacht wird. Das Rundlaufüberwachungsmodul 10 umfasst einen im Wesentlichen rotationssymmetrischen Hohlkörper, in dem sämtliche für die Rundlaufüberwachung notwendigen Versorgungs-, Mess-, Rechen- und Kommunikationseinheiten aufgenommen sind.

Bei dem Werkzeug WZG handelt es sich um ein im Betrieb (zur Bearbeitung eines Werkstücks) zu rotierendes Werkzeug WZG, das hier beispielhaft als Fräser ausgeführt ist. Zusätzlich sind in der Fig. 1 eine Werkzeugaufnahme WZGA und eine Spindel S einer Werkzeugmaschine dargestellt, die bei der Rundlaufüberwachung mit dem Rundlaufüberwachungsmodul 10 zusammenwirken. Die Werkzeugaufnahme WZGA ist hier außerhalb der Spindel S dargestellt, sie kann aber auch schon in die Spindel S integriert sein, wenn das Rundlaufüberwachungsmodul 10 zur Überwachung des Rundlaufs des Werkzeugs WZG in die Spindel S der Werkzeugmaschine eingebracht wird. Wenn das Überwachungsmodul 10 zusammen mit der Spindel S und dem Werkzeug WZG zur Bearbeitung eines Werkstücks rotiert, wird der Rundlauf des Überwachungsmoduls 10 und damit indirekt der Rundlauf des Werkzeugs WZG (beziehungsweise der Rundlauf der Kombination aus Überwachungsmodul 10, Werkzeugaufnahme WZGA und Werkzeug WZG) überwacht. Wenn ein Rundlauffehler vorliegt, deutet dies auf eine z.B. durch in der Spindel S anhaftende Späne verursachte fehlerhafte Plan- oder Kegelanlage insbesondere der Werkzeugaufnahme WZGA und damit des Rundlaufüberwachungsmoduls 10 in der Spindel S hin.

Wie in einer Schnittdarstellung durch das Rundlaufüberwachungsmodul 10 gemäß Fig. 1 ersichtlich, weist das Rundlaufüberwachungsmodul 10 einen im Wesentlichen zylindrischen Körper auf, der rotationssymmetrisch bezüglich seiner Drehachse 20 sein kann. Das Rundlaufüberwachungsmodul 10 umfasst eine Werkzeugschnittstelle 12, die zum Aufnehmen des Werkzeugs WZG ausgestaltet ist. Im vorliegenden Beispiel umfasst die Werkzeugschnittstelle 12 eine Aufnahme, die mit einem entsprechenden Gegenstück des Werkzeugs WZG zusammenpasst (in der Fig. 1 als Doppelpfeil zwischen der Schnittstelle 12 und dem Werkzeug WZG angedeutet).

In ähnlicher Weise verfügt das Rundlaufüberwachungsmodul 10 über eine Werkzeugaufnahmeschnittstelle 14, die mit einer entsprechenden Aufnahme der Werkzeugaufnahme WZGA zusammenpasst (in der Fig. 1 als Doppelpfeil zwischen der Schnittstelle 14 und der Werkzeugaufnahme WZGA angedeutet). Über die Schnittstellen 12, 14 kann das Rundlaufüberwachungsmodul 10 also - entweder herstellerseitig oder durch einen Bediener - mit der Werkzeugaufnahme WZGA und dem Werkzeug WZG gekoppelt werden. Wenn das Rundlaufüberwachungsmodul 10, die Werkzeugaufnahme WZGA und das Werkzeug WZG dann im montierten Zustand zusammen in die Spindel S der Werkzeugmaschine eingebracht werden (in der Fig. 1 als Doppelpfeil zwischen der Spindel S und der Werkzeugaufnahme WZGA angedeutet), rotieren die Werkzeugaufnahme WZGA, das Rundlaufüberwachungsmodul 10 und das Werkzeug WZG gemeinsam um die Drehachse 20 des Rundlaufüberwachungsmoduls 10 zur Bearbeitung eines Werkstücks. Die Drehzahl wird dabei durch die rotierende Spindel S vorgegeben.

Innerhalb des Überwachungsmoduls 10 ist eine Elektronikeinheit angeordnet, die eine erste Sensoreinheit 16, eine zweite optionale Sensoreinheit B, eine Recheneinheit 22, eine Kommunikationseinheit 24 und eine Energieversorgungseinheit V umfasst. Wie in Fig. 1 durch die Pfeile von der Energieversorgungseinheit V zu den entsprechenden Komponenten angedeutet, versorgt die Energieversorgungseinheit V die erste Sensoreinheit 16, die zweite Sensoreinheit B, die Recheneinheit 22 und die Kommunikationseinheit 24 mit der notwendigen elektrischen Energie, um die in dieser Offenbarung beschriebenen Mess-, Rechen- und Kommunikationsoperationen durchzuführen, die für die Rundlaufüberwachung des Werkzeugs WZG notwendig sind.

Eine Kommunikation innerhalb des Rundlaufüberwachungsmoduls 10 zwischen der Recheneinheit 22 und der ersten Sensoreinheit 16, der zweiten Sensoreinheit B und der Kommunikationseinheit 24 erfolgt über in Fig. 1 als gestrichelte Pfeile dargestellte Kommunikationsleitungen, die hier beispielhaft als SPI-Bus ausgeführt sind.

Zur Überwachung des Rundlaufs des Rundlaufüberwachungsmoduls 10 und somit des Werkzeugs WZG, werden während einer Rotation des Rundlaufüberwachungsmoduls 10 um die Drehachse 20 - entweder vor, nach und/oder während der Bearbeitung eines Werkstücks - mittels der ersten Sensoreinheit 16 Zentrifugalbeschleunigungen in einer Rotationsebene E betrachtet. Dafür umfasst die erste Sensoreinheit 16 einen zweiachsigen Beschleunigungssensor, der so im Rundlaufüberwachungsmodul 10 angeordnet ist, dass er Beschleunigungen in einer x-y-Ebene (Rotationsebene E) erfasst, die im Wesentlichen normal zur Drehachse 20 orientiert ist. Diese Rotationsebene E ist in der Fig. 1 als durch das Rundlaufüberwachungsmodul 10 verlaufend angedeutet.

Um eine derartige Art der Erfassung der Beschleunigung zu realisieren, ist die erste Sensoreinheit 16 so im Drehzentrum des Rundlaufüberwachungsmoduls 10 angeordnet, dass die Drehachse des Rundlaufüberwachungsmoduls 10 durch die Sensoreinheit 16 verläuft. Wie in Fig. 1 gezeigt, verlaufen dabei die Drehachse 20 und eine Trägheitsachse 18 des Beschleunigungssensors der ersten Sensoreinheit 16 im Idealfall im Wesentlichen koaxial. Durch diese Anordnung der Trägheitsachse der Sensoreinheit 16 in z-Richtung verlaufen die weiteren Trägheitsachsen der Sensoreinheit 16 in x- und in y-Richtung im Wesentlichen orthogonal zur Drehachse 20, sodass die Beschleunigungen in der Ebene E gemessen werden können. Im vorliegenden Beispiel hat die Sensoreinheit 16 lediglich zwei sensitive Trägheitsachsen, nämlich in x- und in y-Richtung. Die dritte Trägheitsachse, nämlich die in z-Richtung, ist im vorliegenden Beispiel nicht sensitiv (es werden keine Beschleunigungen entlang dieser Achse erfasst) und dient deswegen insbesondere der exakten Ausrichtung der Sensoreinheit 16 mit der Drehachse 20. In anderen Beispielen kann die Sensoreinheit 16 allerdings so ausgestaltet sein, dass auch in z-Richtung eine Beschleunigungsmessung erfolgen kann.

Für die Zentrifugalbeschleunigung a gilt: $a = \omega^2 * r$, wobei $\omega = 2 * \pi * n$ und folglich $a = 4 * \pi^2 * n^2 * r$, mit n = Drehzahl des Rundlaufüberwachungsmoduls 10 (und folglich der Sensoreinheit 16) in 1/sec, $\omega$ = Winkelgeschwindigkeit und r = radialer Abstand der Sensoreinheit 16 von der Drehachse 20 des Überwachungsmoduls 10. Demnach steigt die Zentrifugalbeschleunigung, die auf die Sensoreinheit 16 wirkt, mit ansteigender Drehzahl der Spindel S, wobei die Drehzahl quadratisch in die Betrachtung eingeht.

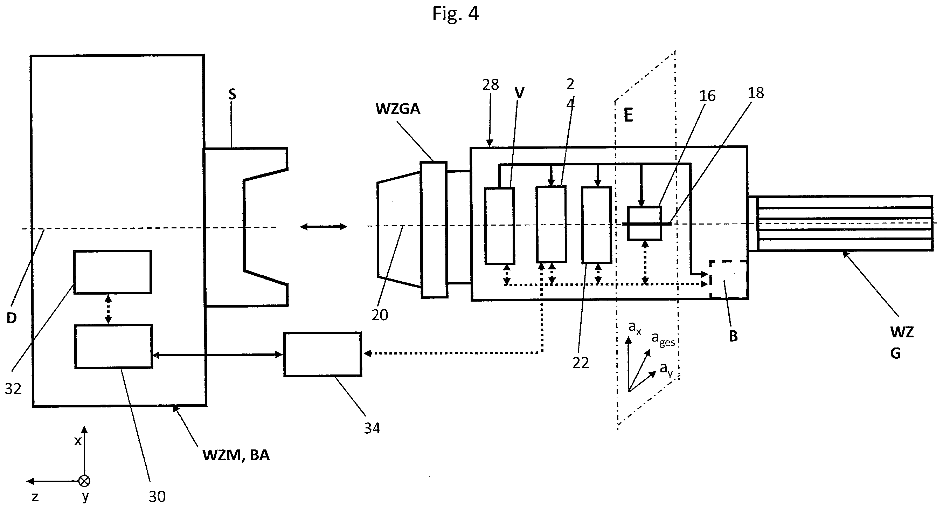

Wenn die Trägheitsachse der Sensoreinheit 16 allerdings exakt mit der Drehachse 20 des Überwachungsmoduls 10 zusammenfällt und zusätzlich die Drehachse 20 koaxial zu einer Drehachse D (siehe auch Fig. 4) der Spindel S verläuft, ergibt sich selbst bei relativ hohen Drehzahlen der Spindel S eine Zentrifugalbeschleunigung von Null, da der radiale Abstand Null ist (r = 0). Dies ist demnach bei optimaler Ausrichtung der Sensoreinheit 16 der Fall, wenn kein Rundlauffehler vorliegt.

Wenn allerdings z.B. ein Einspannfehler der Werkzeugaufnahme WZGA in der Spindel S vorliegt, weil etwa beim Einbringen der Werkzeugaufnahme WZGA in die Spindel S ein Span eingeklemmt wird, ergibt sich ein Versatz des Überwachungsmoduls 10 und somit der Sensoreinheit 16 gegenüber der Drehachse D der Spindel S. Der radiale Abstand ist dann nicht mehr Null (r ≠ 0), sodass während der Rotation eine Zentrifugalbeschleunigung auf die Sensoreinheit 16 wirkt. Die Sensoreinheit 16 erfasst dann bei Rotation für die Beschleunigung in x-Richtung und für die Beschleunigung in y-Richtung repräsentative Größen ax, ay und überträgt diese an die Recheneinheit 22, insbesondere in der Form von digitalen Sensorwerten, die die Beschleunigung in der jeweiligen Richtung kennzeichnen bzw. sich in der Recheneinheit 22 in die Beschleunigung in der jeweiligen Richtung umrechnen lassen. Basierend auf den für die Beschleunigung repräsentativen Größen in x- und y-Richtung ax, ay wird dann durch die Recheneinheit 22 ein Gesamtbeschleunigungswert $a\_ges = \sqrt{(a\_x^2 + a\_y^2)}$ ermittelt und mit einem Schwellenwert verglichen. Wenn die Gesamtbeschleunigung größer als der Schwellenwert ist, liegt ein Rundlauffehler des Überwachungsmoduls 10 vor.

Die optionale weitere Sensoreinheit B ist beispielhaft als einachsiger Beschleunigungssensor ausgeführt, dessen sensitive Achse orthogonal zur Drehachse (20) in radialer Richtung angeordnet ist und der dazu eingerichtet ist, wenigstens eine weitere für eine Beschleunigung repräsentative Größe (in der Folge auch weitere Beschleunigungsgröße genannt) zu erfassen. Die vorliegende Offenbarung ist jedoch nicht darauf beschränkt. So kann die optionale Sensoreinheit B alternativ gleich wie die erste Sensoreinheit B ausgeführt sein, also als zweiachsiger Beschleunigungssensor, der dazu eingerichtet ist, in zwei orthogonal zueinander verlaufenden Richtungen weitere für eine Beschleunigung repräsentative Größen (in der Folge auch weitere Beschleunigungsgrößen genannt) zu erfassen. Da die weitere Sensoreinheit B als einachsiger oder als zweiachsiger Beschleunigungssensor ausgeführt sein kann, der entweder eine oder zwei weitere für die Beschleunigung repräsentative(n) Größe(n) misst, werden die Ausdrücke "weitere für die Beschleunigung repräsentative Größe" und "weitere für die Beschleunigung repräsentativen Größen" im Rahmen dieser Offenbarung auch synonym verwendet, sofern an entsprechender Stelle nichts anderes angegeben ist oder sich ein gegenteiliger technischer Sinngehalt aufdrängt.

Die weitere Sensoreinheit B ist radial zur Drehachse (20) beabstandet und derart im Rundlaufüberwachungsmodul 10 angeordnet, dass sie diese weitere(n) Beschleunigungsgröße(n) ebenfalls in der normal zur Drehachse 20 des Überwachungsmoduls orientierten Ebene E, also als Zentrifugalbeschleunigungen, erfasst. Aus diesen weiteren Beschleunigungsgrößen kann insbesondere die Drehzahl während der Erfassung der für die Beschleunigung repräsentativen Größen ax, ay ermittelt werden, indem z.B. auf Basis der Formel $a = 4 * \pi^2 * n^2 * r$ durch Umstellen nach n und bei bekannter Winkelgeschwindigkeit die Drehzahl n berechnet wird. Die außermittige Position der weiteren Sensoreinheit B bewirkt eine deutliche Signaländerung (der für die Beschleunigung repräsentative(n) Größe(n)) bei sich ändernder Drehzahl. Ein Rundlauffehler des Überwachungsmoduls 10, 26, 28 bewirkt in Relation zur Radiusposition (radialer Abstand zur Drehachse 20) der weiteren Sensoreinheit B eine nur sehr kleine Radiusänderung, wodurch der Einfluss des Rundlauffehlers auf die Genauigkeit der Drehzahlbestimmung vernachlässigbar ist.

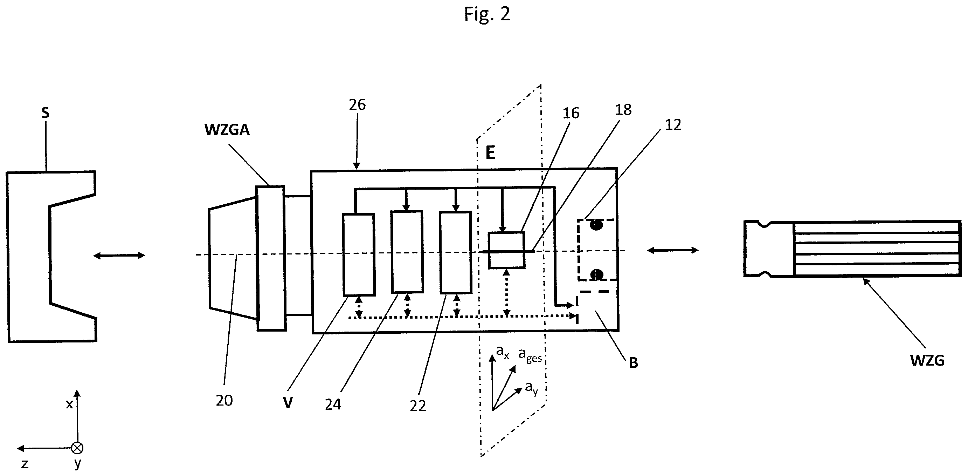

Die Fig. 2 zeigt ein Rundlaufüberwachungs-Werkzeugaufnahmemodul 26 (im Folgenden auch als Überwachungsmodul 26 bezeichnet), mit dem der Rundlauf eines im Betrieb zu rotierenden Werkzeugs WZG überwacht wird. Das Rundlaufüberwachungs-Werkzeugaufnahmemodul 26 umfasst einen im Wesentlichen rotationssymmetrischen Hohlkörper, der vorzugsweise als Hohlzylinder ausgestaltet ist und in dem sämtliche für die Rundlaufüberwachung notwendigen Versorgungs-, Mess-, Rechen- und Kommunikationseinheiten aufgenommen sind.

Bei dem Werkzeug WZG handelt es sich um ein im Betrieb (zur Bearbeitung eines Werkstücks) zu rotierendes Werkzeug WZG, das hier beispielhaft als Fräser ausgeführt ist. Zusätzlich ist in der Fig. 2 eine Spindel S einer Werkzeugmaschine (siehe auch Fig. 4) dargestellt, die bei der Rundlaufüberwachung mit dem Rundlaufüberwachungs-Werkzeugaufnahmemodul 26 zusammenwirkt. Wenn das Rundlaufüberwachungs-Werkzeugaufnahmemodul 26 zusammen mit der Spindel S und dem Werkzeug WZG zur Bearbeitung eines Werkstücks rotiert, wird der Rundlauf des Werkzeugs WZG überwacht. Wenn ein Rundlauffehler des Werkzeugs WZG vorliegt, deutet dies auf eine z.B. durch in der Spindel S anhaftende Späne verursachte fehlerhafte Plananlage des Rundlaufüberwachungs-Werkzeugaufnahmemoduls 26 in der Spindel S hin.

Das Rundlaufüberwachungs-Werkzeugaufnahmemodul 26 umfasst weiterhin eine Werkzeugaufnahme WZGA, über die das Rundlaufüberwachungs-Werkzeugaufnahmemodul 26 in die Spindel S der Werkzeugmaschine eingebracht wird. Die Werkzeugaufnahme WZGA ist hier beispielhaft als Hohlschaftkegel (HSK) ausgeführt und fest mit dem Rundlaufüberwachungs-Werkzeugaufnahmemodul 26 gekoppelt.

Ansonsten umfasst das Rundlaufüberwachungs-Werkzeugaufnahmemodul 26 dieselben Komponenten erste Sensoreinheit 16 (mit nichtsensitiver Trägheitsachse 18 in z-Richtung), optionale zweite Sensoreinheit B, Recheneinheit 22 und Kommunikationseinheit 24. Diese Komponenten weisen im Rundlaufüberwachungs-Werkzeugaufnahmemodul 26 dieselbe Funktionalität wie im Rundlaufüberwachungsmodul 10 auf und sind identisch angeordnet und untereinander operativ (zur Kommunikation und zur Energieversorgung) verbunden, sodass diesbezüglich auf die Ausführungen zur Fig. 1 inklusive der Ausführungen zur Betrachtung der Zentrifugalbeschleunigungen in der Ebene E verwiesen wird.

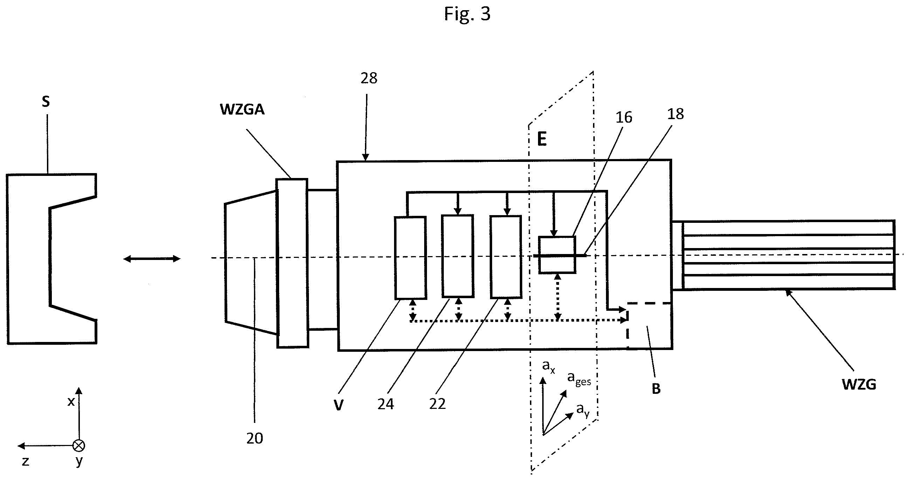

Die Fig. 3 zeigt ein Rundlaufüberwachungs-Werkzeugmodul 28 (im Folgenden auch als Überwachungsmodul 28 bezeichnet), mit dem der Rundlauf eines im Betrieb zu rotierenden Werkzeugs WZG überwacht wird. Das Rundlaufüberwachungs-Werkzeugmodul 28 umfasst einen im Wesentlichen rotationssymmetrischen Hohlkörper, der vorzugsweise als Hohlzylinder ausgestaltet ist und in dem sämtliche für die Rundlaufüberwachung notwendigen Versorgungs-, Mess-, Rechen- und Kommunikationseinheiten aufgenommen sind.

Bei dem Werkzeug WZG handelt es sich um ein im Betrieb (zur Bearbeitung eines Werkstücks) zu rotierendes Werkzeug WZG, das hier beispielhaft als Fräser ausgeführt ist. Zusätzlich ist in der Fig. 3 eine Spindel S einer Werkzeugmaschine (siehe auch Fig. 4) dargestellt, die bei der Rundlaufüberwachung mit dem Rundlaufüberwachungs-Werkzeugmodul 28 zusammenwirkt. Wenn das Rundlaufüberwachungs-Werkzeugmodul 28 zusammen mit der Spindel S zur Bearbeitung eines Werkstücks rotiert, wird der Rundlauf des Werkzeugs WZG überwacht. Wenn ein Rundlauffehler des Werkzeugs WZG vorliegt, deutet dies auf eine z.B. durch in der Spindel S anhaftende Späne verursachte fehlerhafte Plananlage des Rundlaufüberwachungs-Werkzeugmoduls 28 in der Spindel S hin.

Das Rundlaufüberwachungs-Werkzeugmodul 28 umfasst ähnlich dem in der Fig. 2 gezeigten Rundlaufüberwachungs-Werkzeugmodul 26 zusätzlich eine Werkzeugaufnahme WZGA, über die das Rundlaufüberwachungs-Werkzeugmodul 28 in die Spindel S der Werkzeugmaschine eingebracht wird. Die Werkzeugaufnahme WZGA ist hier beispielhaft als Hohlschaftkegel (HSK) ausgeführt und fest mit dem Rundlaufüberwachungs-Werkzeugmodul 28 gekoppelt.

Im Gegensatz zu den in den Fig. 1 und 2 gezeigten Überwachungsmodulen 10 und 26 umfasst das Rundlaufüberwachungs-Werkzeugmodul 28 das Werkzeug WZG. Das Werkzeug WZG und das Rundlaufüberwachungs-Werkzeugmodul 28 sind fest miteinander gekoppelt und werden als komplette Einheit mitsamt der Werkzeugaufnahme WZGA in die Spindel S eingebracht. Ansonsten umfasst das Rundlaufüberwachungs-Werkzeugmodul 28 dieselben Komponenten erste Sensoreinheit 16 (mit nichtsensitiver Trägheitsachse 18 in z-Richtung), optionale zweite Sensoreinheit B, Recheneinheit 22 und Kommunikationseinheit 24. Diese Komponenten weisen im Rundlaufüberwachungs-Werkzeugmodul 28 dieselbe Funktionalität wie im Rundlaufüberwachungsmodul 10 auf und sind identisch angeordnet und untereinander operativ (zur Kommunikation und zur Energieversorgung) verbunden, sodass diesbezüglich auf die Ausführungen zur Fig. 1 inklusive der Ausführungen zur Betrachtung der Zentrifugalbeschleunigungen in der Ebene E verwiesen wird.

Mit Bezug auf die Fig. 4 wird eine Werkzeugmaschine WZM beschrieben, die beispielhaft als mehrachsiges Bearbeitungszentrum BA ausgeführt ist. Mittels der Werkzeugmaschine WZM wird im Zusammenwirken mit einem der Überwachungsmodule 10, 26 oder 28 der Rundlauf eines im Betrieb zu rotierenden Werkzeugs WZG überwacht. Das Beispiel in der Fig. 4 wird anhand des Rundlaufüberwachungs-Werkzeugmoduls 28 verdeutlicht. Es sei jedoch darauf hingewiesen, dass das Rundlaufüberwachungs-Werkzeugmodul 28 hier nur stellvertretend für eines der Überwachungsmodule 10, 26, 28 steht und die Werkzeugmaschine WZM in derselben Weise mit dem Rundlaufüberwachungsmodul 10 sowie dem Rundlaufüberwachungs-Werkzeugaufnahmemodul 26 im Betrieb zusammenwirken kann.

Die Werkzeugmaschine WZM der Fig. 4 umfasst eine Hauptspindel S, die beispielhaft in drei orthogonale Richtungen X, Y, Z innerhalb eines Arbeitsraums der Werkzeugmaschine WZM bewegt und um die Z-Achse rotiert werden kann. Eine derartige Rotation um eine Drehachse D (die in der Zeichenebene der Fig. 4 in z-Richtung verläuft) der Spindel S der Werkzeugmaschine WZM erfolgt in der Regel bei der Bearbeitung eines Werkstücks durch die Werkzeugmaschine WZM.

Zudem umfasst die Werkzeugmaschine eine Steuerung 32, eine Kommunikationseinheit 30 und einen Werkzeugwechsler (in der Fig. nicht gezeigt), der dazu eingerichtet ist, wenigstens die Überwachungsmodule 10, 26 und 28 aufzunehmen. Auf diese Weise kann, durch die Steuerung 32 der Werkzeugmaschine WZM veranlasst, vor oder nach der Bearbeitung eines Werkstücks jederzeit ein Überwachungsmodul 10, 26, 28 (die Überwachungsmodule 10 und 26 sind dann insbesondere schon mit einem Werkzeug WZG gekoppelt) in die Spindel S eingewechselt werden, um den Rundlauf des Werkzeugs WZG insbesondere während eines folgenden Bearbeitungsschrittes zu überprüfen.

Dafür ist die Steuerung 32 der Werkzeugmaschine WZM weiterhin dazu eingerichtet, eine Drehzahl der Spindel S einzustellen. Zudem ist die Steuerung 32 dazu eingerichtet, eine Kommunikation mit dem Überwachungsmodul 28 über die Kommunikationseinheit 30 zu steuern. Dafür kommuniziert die Kommunikationseinheit 30 der Werkzeugmaschine WZM drahtgebunden mit einer Datenübertragungseinheit 34. Die Datenübertragungseinheit 34 ist über eine Funkverbindung mit der Kommunikationseinheit 24 des Überwachungsmoduls 28 gekoppelt und dazu eingerichtet und bestimmt, Signale und Daten wie die Größen ax, ay und weitere im Rahmen dieser Offenbarung beschriebene Größen von der Kommunikationseinheit 24 des Überwachungsmoduls 28 zu empfangen und an die Werkzeugmaschine WZM, genauer an deren Kommunikationseinheit 30, zu übertragen.

In einer alternativen Variante, die in Fig. 4 nicht gezeigt ist, ist die Funktion der Datenübertragungseinheit 34 von der Kommunikationseinheit 30 der Werkzeugmaschine WZM umfasst. Die Datenübertragungseinheit 34 entfällt dann als physische Einheit. In diesen Fällen findet eine Daten- und Signalübertragung zwischen der Werkzeugmaschine WZM und dem Überwachungsmodul 28 direkt und vorzugsweise mittels Funk- oder Infrarotsignalen statt.

Zur Rundlaufüberwachung erfasst die Sensoreinheit 16 des Überwachungsmoduls 28 die für die Beschleunigung repräsentativen Größen ax, ay, wie dies mit Bezug auf Fig. 1 beschrieben wurde. Über die Kommunikationseinheit 24 werden die Größen ax, ay dann (gemäß Fig. 4 über die Datenübertragungseinheit 34 und über die Kommunikationseinheit 30 der Werkzeugmaschine WZM) an die Recheneinheit 32 der Werkzeugmaschine WZM übertragen. Die Recheneinheit 32 ermittelt aus den Größen ax, ay die Gesamtbeschleunigung ages, um diese dann mit dem Schwellenwert zu vergleichen. Liegt die Gesamtbeschleunigung ages über dem Schwellenwert, bestimmt die Werkzeugmaschine WZM, dass ein Rundlauffehler des Überwachungsmoduls 28 vorliegt.

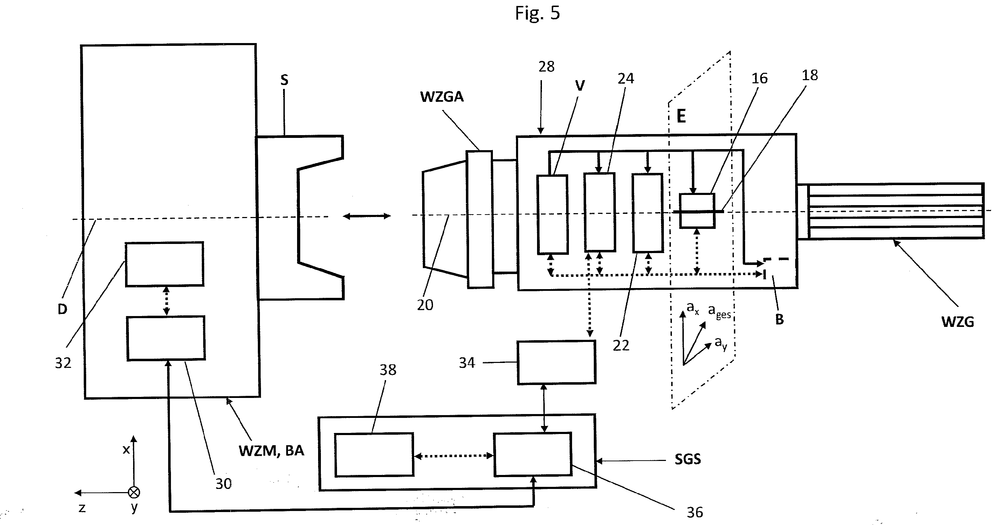

Die Fig. 5 zeigt eine Rundlaufüberwachungs-Signalschnittstelle SGS mit einer Kommunikationseinheit 36 und einer Recheneinheit 38. Die Rundlaufüberwachungs-Signalschnittstelle SGS ist dazu eingerichtet, mit der Werkzeugmaschine WZM (z.B. die Werkzeugmaschine aus Fig. 4) und mit einem der Überwachungsmodule 10, 26, 28 operativ zusammenzuwirken, um den Rundlauf eines im Betrieb zu rotierenden Werkzeugs WZG zu überwachen. Das Beispiel in der Fig. 5 wird anhand des Rundlaufüberwachungs-Werkzeugmoduls 28 verdeutlicht. Es sei jedoch darauf hingewiesen, dass das Rundlaufüberwachungs-Werkzeugmodul 28 hier nur stellvertretend für eines der Überwachungsmodule steht und die Rundlaufüberwachungs-Signalschnittstelle SGS in derselben Weise mit dem Rundlaufüberwachungsmodul 10 sowie dem Rundlaufüberwachungs-Werkzeugaufnahmemodul 26 im Betrieb zusammenwirken kann.

Die Recheneinheit 38 der Rundlaufüberwachungs-Signalschnittstelle SGS ist dazu eingerichtet, eine Kommunikation mit dem Überwachungsmodul 28 über die Kommunikationseinheit 36 zu steuern. Dafür kommuniziert die Kommunikationseinheit 36 der Rundlaufüberwachungs-Signalschnittstelle SGS drahtgebunden mit einer Datenübertragungseinheit 34. Die Datenübertragungseinheit 34 ist über eine Funkverbindung mit der Kommunikationseinheit 24 des Überwachungsmoduls 28 gekoppelt und dazu eingerichtet und bestimmt, Signale und Daten wie die Größen ax, ay und weitere im Rahmen dieser Offenbarung beschriebene Größen von der Kommunikationseinheit 24 des Überwachungsmoduls 28 zu empfangen und an die Rundlaufüberwachungs-Signalschnittstelle SGS, genauer an deren Kommunikationseinheit 36, zu übertragen.

In einer alternativen Variante, die in Fig. 5 nicht gezeigt ist, ist die Funktion der Datenübertragungseinheit 34 von der Kommunikationseinheit 36 der Rundlaufüberwachungs-Signalschnittstelle SGS umfasst. Die Datenübertragungseinheit 34 entfällt dann als physische Einheit. In diesen Fällen findet eine Daten- und Signalübertragung zwischen der Rundlaufüberwachungs-Signalschnittstelle und dem Überwachungsmodul 28 direkt und vorzugsweise mittels Funk- oder Infrarotsignalen statt.

Zudem ist die Recheneinheit 38 der Rundlaufüberwachungs-Signalschnittstelle SGS dazu eingerichtet, eine Kommunikation mit der Werkzeugmaschine WZM über eine drahtgebundene Kommunikationsschnittstelle der Kommunikationseinheit 36 zu steuern. Diese "Kommunikationsverbindung", die hier beispielhaft als Feldbussystem ausgeführt ist, ist in der Fig. 5 durch den Doppelpfeil mit durchgezogener Linie zwischen der Kommunikationseinheit 36 der Rundlaufüberwachungs-Signalschnittstelle SGS und der Kommunikationseinheit 30 der Werkzeugmaschine WZM verdeutlicht.

Die Rundlaufüberwachungs-Signalschnittstelle SGS ist dazu eingerichtet, die vom Überwachungsmodul 28 in der Ebene E erfassten, für die Beschleunigung repräsentativen Größen ax, ay über die Kommunikationseinheit 36 zu empfangen. Die Recheneinheit 38 der Rundlaufüberwachungs-Signalschnittstelle SGS ist weiter dazu eingerichtet und bestimmt, aus den vom Überwachungsmodul 28 empfangenen Größen ax, ay die Gesamtbeschleunigung ages zu bestimmen. Die Gesamtbeschleunigung ages wird dann mit dem Schwellenwert verglichen. Liegt die Gesamtbeschleunigung ages über dem Schwellenwert, bestimmt die Rundlaufüberwachungs-Signalschnittstelle SGS, dass ein Rundlauffehler des Überwachungsmoduls 28 vorliegt.

Die Recheneinheit 38 der Rundlaufüberwachungs-Signalschnittstelle SGS ist zudem dazu eingerichtet und bestimmt, der Werkzeugmaschine WZM zu signalisieren, ob ein Rundlauffehler vorliegt oder nicht. Dies erfolgt über die drahtgebundene Kommunikationsverbindung zwischen der Kommunikationseinheit 36 der Rundlaufüberwachungs-Signalschnittstelle SGS und der Kommunikationseinheit 30 der Werkzeugmaschine WZM, über die die Rundlaufüberwachungs-Signalschnittstelle SGS der Werkzeugmaschine WZM mittels eines Prüfsignals (IO / NIO) mitteilt, ob ein Rundlauffehler vorliegt (NIO), oder ob kein Rundlauffehler vorliegt (IO).

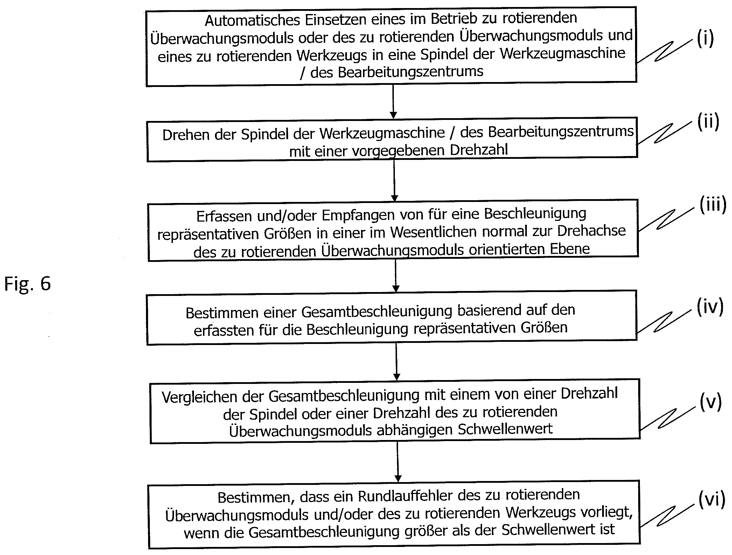

Mit Bezug auf die Fig. 6 wird nun ein Rundlaufüberwachungsverfahren für ein in einer Werkzeugmaschine WZM im Betrieb zu rotierendes Werkzeug beschrieben. Dabei können alle Verfahrensschritte von der mit Bezug auf Fig. 4 beschriebenen Werkzeugmaschine WZM ausgeführt werden. Alternativ ist es möglich, dass einige der Verfahrensschritte von dem Überwachungsmodul 10, 26, 28 ausgeführt und/oder einige der Verfahrensschritte von der Rundlaufüberwachungs-Signalschnittstelle SGS ausgeführt werden. Insbesondere das Bestimmen der Gesamtbeschleunigung ages, das Vergleichen der Gesamtbeschleunigung mit dem Schwellenwert sowie das Bestimmen, ob ein Rundlauffehler vorliegt (diese drei Schritte werden in der Folge auch als "Auswertung" bezeichnet), können sowohl von den Überwachungsmodulen 10, 26, 28 als auch von der Rundlaufüberwachungs-Signalschnittstelle SGS als auch von der Werkzeugmaschine WZM ausgeführt werden.

Wie in der Fig. 6 gezeigt, weist das Rundlaufüberwachungsverfahren einen ersten Schritt (i) auf, in dem ein automatisches Einsetzen eines im Betrieb zu rotierenden Überwachungsmoduls 10, 26, 28 oder des im Betrieb zu rotierenden Überwachungsmoduls 10, 26 und des zu rotierenden Werkzeugs WZG in eine Spindel S der Werkzeugmaschine WZM erfolgt. Dabei wird insbesondere mit der Spindel S der Werkzeugwechsler der Werkzeugmaschine WZG angefahren, um eines der darin enthaltenen Überwachungsmodule 10, 26, 28 in die Spindel S einzuwechseln. Handelt es sich dabei um das Überwachungsmodul 10 oder das Überwachungsmodul 26, sind diese in der Regel bereits mit dem Werkzeug WZG und der Werkzeugaufnahme WZGA (Überwachungsmodul 10) beziehungsweise mit dem Werkzeug WZG (Überwachungsmodul 26) gekoppelt.

In einem zweiten Schritt (ii) wird die Spindel S der Werkzeugmaschine WZM mit einer vorgegebenen Drehzahl gedreht. Diese Drehzahl (auch Prüfdrehzahl) wird von der Werkzeugmaschine (oder eines Benutzers der Werkzeugmaschine) eingestellt und von der Werkzeugmaschine - gegebenenfalls über die Rundlaufüberwachungs-Signalschnittstelle SGS - an das Überwachungsmodul 10, 26, 28 übertragen oder direkt an die Rundlaufüberwachungs-Signalschnittstelle SGS übertragen, wenn die Auswertung im Überwachungsmodul 10, 26, 28 beziehungsweise in der Rundlaufüberwachungs-Signalschnittstelle SGS stattfindet.

In einem dritten Schritt (iii) werden die für eine Beschleunigung repräsentativen Größen ax, ay in einer im Wesentlichen normal zur Drehachse 20 des zu rotierenden Überwachungsmoduls 10, 26, 28 orientierten Ebene E erfasst oder empfangen, während das zu rotierende Überwachungsmodul 10, 26, 28 mit der vorgegebenen Drehzahl rotiert. Dieses Erfassen wird insbesondere mit einem der Überwachungsmodule 10, 26, 28 durchgeführt, wie dies mit Bezug auf Fig. 1 beschrieben wurde. Die entsprechenden Ausführungen zur Fig. 1 sind demnach auch hier gültig. Führt die Werkzeugmaschine WZM oder die Rundlaufüberwachungs-Signalschnittstelle SGS das Rundlaufüberwachungsverfahren aus, werden im dritten Schritt die Beschleunigungsgrößen ax, ay vom Überwachungsmodul 10, 26, 28 als Rohdaten an die Werkzeugmaschine / die Rundlaufüberwachungs-Signalschnittstelle SGS übertragen und dort empfangen.

Sodann wird in den Schritten (iv) bis (vi) die oben genannte Auswertung durchgeführt, wobei in einem vierten Schritt (iv) die Gesamtbeschleunigung ages basierend auf den erfassten für die Beschleunigung repräsentativen Größen ax, ay bestimmt wird, in einem fünften Schritt (v) die Gesamtbeschleunigung ages mit einem von einer Drehzahl des zu rotierenden Überwachungsmoduls 10, 26, 28 während des Erfassens der für die Beschleunigung repräsentativen Größen ax, ay abhängigen Schwellenwert verglichen wird, und in einem sechsten Schritt (vi) bestimmt wird, dass ein Rundlauffehler des zu rotierenden Überwachungsmoduls 10, 26, 28 und/oder des zu rotierenden Werkzeugs WZG vorliegt, wenn die Gesamtbeschleunigung ages größer als der Schwellenwert ist.

Insbesondere wenn die Auswertung (Schritte (iv) bis (vi)) im Überwachungsmodul 10, 26, 28 oder in der Rundlaufüberwachungs-Signalschnittstelle SGS stattfindet, kann sich ein optionaler Schritt (vii) anschließen, in dem das Überwachungsmodul 10, 26, 28 oder die Rundlaufüberwachungs-Signalschnittstelle SGS der Werkzeugmaschine WZM über die beschriebenen Kommunikationseinheiten 24 und/oder 36 (siehe auch Fig. 5) signalisiert, ob ein Rundlauffehler des Überwachungsmoduls 10, 26, 28 und damit des Werkzeugs WZG vorliegt oder nicht.

Die vorliegende Offenbarung betrifft auch ein Computerprogrammprodukt (in den Fig. nicht gezeigt) mit Befehlen, die bewirken, dass insbesondere die mit Bezug auf Fig. 6 beschriebenen Verfahrensschritte (i) bis (vi) und optional der Verfahrensschritt (vii) sowie weitere nachfolgend beschriebene Verfahrensschritte ausgeführt werden. Dabei umfasst das Computerprogrammprodukt gemäß einem Beispiel Befehle, die bewirken, dass die Werkzeugmaschine (wie mit Bezug auf Fig. 4 beschrieben) die Verfahrensschritte (i) bis (vi) des Rundlaufüberwachungsverfahrens ausführt. Gemäß einem weiteren Beispiel umfasst das Computerprogrammprodukt Befehle, die bewirken, dass das Überwachungsmodul 10, 26, 28 die Verfahrensschritte (iii) bis (vi) des Rundlaufüberwachungsverfahrens ausführt. Gemäß einem noch weiteren Beispiel umfasst das Computerprogrammprodukt Befehle, die bewirken, dass die Rundlaufüberwachungs-Signalschnittstelle (SGS) die Verfahrensschritte (iii) bis (vi) des Rundlaufüberwachungsverfahrens ausführt. Diese verschiedenen Varianten können auch in einem einzigen Computerprogrammprodukt kombiniert vorliegen.

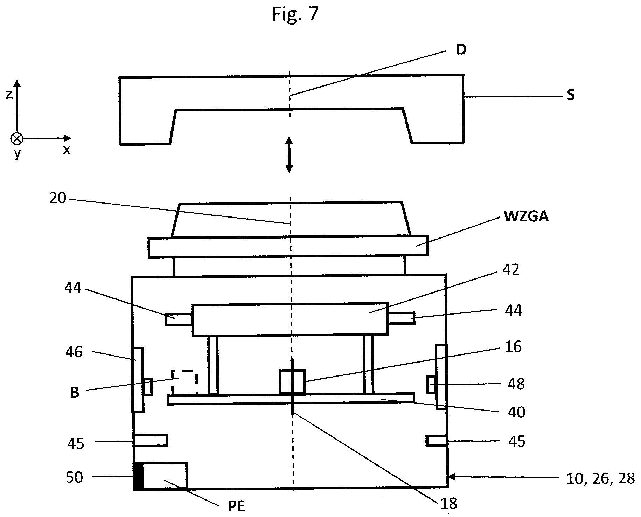

Nachfolgend werden mit Bezug auf die Fig. 7 bis 22 weitere optionale Merkmale und Ausgestaltungen des Überwachungsmoduls 10, 26, 28 und weitere (Teil-)Verfahrensaspekte des Rundlaufüberwachungsverfahrens beim Erfassen und/oder Auswerten der für die Beschleunigung repräsentativen Größen ax, ay sowie weitere für die Rundlaufüberwachung relevante Prozessgrößen beschrieben. Dabei sind die mit Bezug auf weitere optionale Schritte des Rundlaufüberwachungsverfahrens beschriebenen Merkmale auch auf das Überwachungsmodul 10, 26, 28 übertragbar und umgekehrt. Wann immer im Rahmen der Beschreibung der Fig. 7 bis 22 von der ersten Sensoreinheit 16 (mit Trägheitsachse 18 in z-Richtung), der zweiten Sensoreinheit B, der Energieversorgungseinheit V, der Recheneinheit 22 oder der Kommunikationseinheit 24 die Rede ist, beziehen sich diese Beschreibungen auf die entsprechenden Komponenten jedes Überwachungsmoduls 10, 26 und 28.

Die Fig. 7 zeigt einen Schnitt durch ein Überwachungsmodul 10, 26, 28, eine Werkzeugaufnahme WZGA und eine Spindel S einer Werkzeugmaschine WZM (vgl. auch Fig. 4) in einer Einspannsituation, also kurz bevor die Spindel S das Überwachungsmodul 10, 26, 28 aus dem Werkzeugwechsler in die Spindel einwechselt. In der Schnittansicht sind die erste Sensoreinheit 16 und die weitere optionale Sensoreinheit B dargestellt, die auf einer Sensorplatine 40 angeordnet sind. Die Sensorplatine 40 ist hier beispielhaft über vertikale Streben mit einem Platinenhalter 42 verbunden. Der Platinenhalter 42 ist im Überwachungsmodul 10, 26, 28 schwimmend gelagert, weshalb keine exakte Art der Aufhängung in der Fig. 7 gezeigt ist. In der Fig. 7 sind zudem zwei Gewindestifte 44 dargestellt, die als Verstellmittel für den schwimmend aufgehängten Platinenhalter 42 dienen und die direkt auf den Platinenhalter 42 drücken. Zudem zeigt die Fig. 7, dass das Überwachungsmodul 10, 26, 28 zwei optionale Antennenabdeckungen 46 sowie zwei optionale Antennen 48 umfasst (zur besseren Übersichtlichkeit sind die Referenzzeichen 46, 48 in der Fig. 7 nur einmal angeführt). Schließlich umfasst das Überwachungsmodul 10, 26, 28 eine photosensitive Einheit PE mit einer am Außenumfang des Überwachungsmoduls 10, 26, 28 befindlichen und radial nach außen gerichteten photosensitiven Fläche 50.

Die Antennen 48 und die Antennenabdeckungen 46 bilden gemeinsam eine Antenneneinheit. Dabei sind die Antennenabdeckungen 46 hier beispielhaft direkt am Außenumfang des Überwachungsmoduls 10, 26, 28 angeordnet und können z.B. einen separat vom übrigen Körper des Überwachungsmoduls 10, 26, 28 gefertigten Körper umfassen und/oder einen aus einem anderen Material bestehenden Teilabschnitt des Überwachungsmoduls 10, 26, 28 bilden. Die Antennen 48 sind innerhalb des Überwachungsmoduls 10, 26, 28 zwischen den Antennenabdeckungen 46 und der Drehachse 20 angeordnet, wobei die in der Fig. 7 gezeigte horizontale Position der Antennen 48 lediglich beispielhaft ist; sie können auch weiter zur Drehachse 20 hin angeordnet sein. Die Antennenabdeckung 46 erstreckt sich in Achsrichtung der Drehachse 20 hier beispielhaft um das Vierfache der Antennen 48. In anderen Varianten kann sich die Antennenabdeckung 46 in Achsrichtung der Drehachse 20 um das Zweifache bis Zehnfache erstrecken, wobei alle ganzzahligen Zwischenwerte als weitere mögliche Bereichsgrenzen eingeschlossen sind. Die Antennenabdeckungen 46 decken somit die Antennen 48 nach außen hin ab, um sie vor Beschädigung, Schmutz und Kühlschmiermittel zu schützen. Die Antennenabdeckungen 46 können wenigstens überwiegend oder komplett nichtleitende Materialien umfassen, um die Ausbreitung der Funkwellen nicht zu beeinträchtigen. Die Antennenabdeckungen können z.B. Kunststoffe, Glas, Keramik und/oder Vergussmassen umfassen.

Über die Gewindestifte 44 wird der schwimmend aufgehängte Platinenhalter 42 und damit die Sensoreinheit 16 oder wie hier im Beispiel deren z-Trägheitsachse 18 direkt im Drehzentrum des Überwachungsmoduls 10, 26, 28 angeordnet. Die Gewindestifte 44 dienen somit der Wuchtung der Sensoreinheit 16. Dabei wird die Sensoreinheit 16 bzw. deren z-Trägheitsachse wenigstens nahezu koaxial zur Drehachse 20 des Überwachungsmoduls 10, 26, 28 ausgerichtet. Diese Zentrierung wird bevorzugt bereits bei der Herstellung des Überwachungsmoduls 10, 26, 28 vorgenommen.

Weitere Gewindestifte 45 sind über in der Fig. 7 nicht gezeigte radiale Gewindebohrungen am Umfang des Körpers des Überwachungsmoduls 10, 26, 28 in dieses einbringbar und ermöglichen somit eine Feinjustage der Sensoreinheit 16, die insbesondere auch benutzerseitig vorgenommen werden kann. Die radialen Gewindebohrungen sind dazu ausgebildet, eine Vielzahl unterschiedlich schwerer Gewindestifte 45 (die unterschiedlichen Gewichte der Gewindestifte 45 sind in der Fig. 7 durch deren unterschiedliche Größe angedeutet) aufzunehmen und alle diese Gewindestifte können Zusatzmassen aufnehmen. Dadurch kann für jedes Überwachungsmodul 10, 26, 28 z.B. in Abhängigkeit der zum Einsatz kommenden optionalen Komponenten und der daraus resultierenden Gewichtsverhältnisse im/des Überwachungsmodul(s) 10, 26, 28 oder auch nach einem Wechsel des Werkzeugs WZG (dies betrifft insbesondere die Überwachungsmodule 10 und 26 gemäß den Fig. 1 und 2) die Feinwuchtung vorgenommen werden.

Die Fig. 7 zeigt auch, dass die weitere Sensoreinheit B, die ebenfalls auf der Sensorplatine 40 angeordnet ist, zu der Sensoreinheit 16 radial beabstandet ist. Dabei beträgt der Abstand zwischen der weiteren Sensoreinheit B und der Sensoreinheit 16 normal zur Drehachse 20 etwa 75 % des Radius des Überwachungsmoduls 10, 26, 28. Die vorliegende Offenbarung ist allerdings nicht darauf beschränkt. Der Abstand kann auch zwischen 3 % und 90 % (wobei alle ganzzahligen Zwischenwerte als weitere mögliche Bereichsgrenzen eingeschlossen sind) betragen. Wesentlich ist lediglich, dass die weitere Sensoreinheit B nicht koaxial zur Drehachse 20 ausgerichtet ist, da an dieser Position keine zuverlässige Drehzahlbestimmung möglich ist.

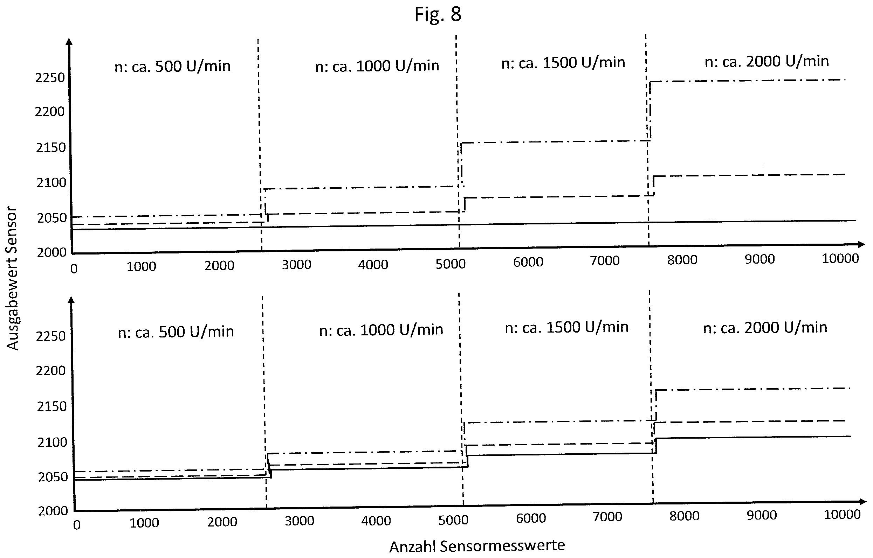

Mit Bezug auf die Fig. 8 wird anhand von realen Messdaten noch einmal detaillierter auf das für die Rundlaufüberwachung genutzte Messprinzip eingegangen. Dabei sind zur Veranschaulichung in zwei Diagrammen jeweils die (absoluten) digitalen Ausgabewerte der Sensoreinheit 16 in x-Richtung (ax, oberes Diagramm) und in y-Richtung (ay, unteres Diagramm) über der Anzahl der gemessenen Werte und jeweils bei verschiedenen Drehzahlen gezeigt.

Das Überwachungsmodul 10, 26, 28 ist bei der Messung nach Fig. 8 vertikal in einer Spindel S angeordnet, sodass die Drehachse 20 des Überwachungsmoduls 10, 26, 28 der Vertikalen folgt und die für die Beschleunigung repräsentativen Größen (die Ausgabewerte des Sensors) von der Sensoreinheit 16 in der zur Vertikalen normal orientierten Ebene E, also in einer horizontalen Rotationsebene des Überwachungsmoduls 10, 26, 28, erfasst werden. Die Prüfdrehzahlen betragen in etwa 500 U/min, 1000 U/min, 1500 U/min und 2000 U/min und die entsprechenden Abschnitte der Diagramme der Fig. 8, die die Ausgabewerte der Sensoreinheit 16 bei diesen Prüfdrehzahlen zeigen, sind durch gestrichelte vertikale Linien getrennt. Der Messbereich der Sensoreinheit 16 beträgt hier beispielhaft $\pm$ 2 g, die Auflösung (Empfindlichkeit) der Sensoreinheit 16 beträgt hier beispielhaft 1024 Digitalwerte (entsprechend 10 Bit) pro g und die Abtastrate beträgt - ebenso beispielhaft - 0,5 kHz.

Die Diagramme der Fig. 8 unterscheiden sich insbesondere dadurch, dass im oberen Diagramm die Ausgabewerte der Sensoreinheit 16 in x-Richtung (ax) gezeigt sind und das untere Diagramm die Ausgabewerte der Sensoreinheit 16 in y-Richtung (ay) darstellt. Zudem sind für jede Achse drei verschiedene Kurven gezeigt. Dabei stellen die durchgezogenen Kurven die Ausgabewerte der Sensoreinheit 16 bei möglichst koaxialer Ausrichtung der z-Trägheitsachse 18 der Sensoreinheit 16 zur Drehachse 20 des Überwachungsmoduls 10, 26, 28 dar. Die gestrichelten Kurven stellen die Ausgabewerte der Sensoreinheit 16 dar, wenn deren z-Trägheitsachse 18 aufgrund von Verkippung / Exzentrizität des Überwachungsmoduls 10, 26, 28 in einem radialen Abstand von rund 10 $\mu$m zur Drehachse 20 angeordnet ist. Schließlich stellen die strichgepunkteten Kurven die Ausgabewerte der Sensoreinheit 16 dar, wenn deren z-Trägheitsachse 18 aufgrund von Verkippung / Exzentrizität des Überwachungsmoduls 10, 26, 28 in einem radialen Abstand von rund 30 $\mu$m zur Drehachse 20 angeordnet ist.

Wie aus dem oberen Diagramm der Fig. 8 ersichtlich, ist die Sensoreinheit 16 in der x-Richtung tatsächlich zumindest annähernd koaxial zur Drehachse 20 des Überwachungsmoduls 10, 26, 28 angeordnet, was schon aufgrund von Toleranzen bei der Fertigung der Sensoreinheit 16, aber auch aufgrund von Montage- und Fertigungstoleranzen des Überwachungsmoduls 10, 26, 28 komplex ist. Dadurch ergibt sich selbst bei einer Erhöhung der Drehzahl keine erhöhte Beschleunigung in x-Richtung. Der Beschleunigungswert ax verbleibt demnach bis zur Drehzahl von etwa 2000 U/min konstant, es ist keine erhöhte Beschleunigung ax messbar. Im Gegensatz dazu zeigen die gestrichelte Kurve und die strichgepunktete Kurve im oberen Diagramm der Fig. 8, wie sich der Beschleunigungswert ax verhält, wenn die Sensoreinheit in x-Richtung um 10 $\mu$m beziehungsweise um 30 $\mu$m von der Drehachse 20 beabstandet ist. Bei einer Drehzahl von 500 U/min ergeben sich geringe Änderungen der Beschleunigungswerte ax bei 10 $\mu$m und bei 30 $\mu$m. Danach nimmt der Beschleunigungswert ax insbesondere bei einem Mittenversatz der Sensoreinheit 16 in x-Richtung von 30 $\mu$m (strichgepunktete Kurve) mit jeder Drehzahlerhöhung stärker zu, sodass sich bei einer Drehzahl von etwa 2000 U/min bereits ein ax-Wert von über 2200 einstellt, was einer zusätzlichen Beschleunigung von über 1 g (hier im Beispiel etwa 1,3 m/s$^2$) entspricht. Wie im unteren Diagramm der Fig. 8 gezeigt, verhalten sich die Beschleunigungskurven in y-Richtung bei einem Mittenversatz von 10 $\mu$m (gestrichelte Kurve) sowie bei einem Mittenversatz in y-Richtung von 30 $\mu$m (strichgepunktete Kurve) nahezu identisch zur Messung des entsprechenden Mittenversatzes in der x-Richtung, weshalb hier auf die Beschreibung zum oberen Diagramm der Fig. 8 verwiesen wird. Die durchgezogene Kurve im unteren Diagramm in Fig. 8 stellt die von der Sensoreinheit 16 erfassten Beschleunigungswerte in y-Richtung dar. Während diese ay-Werte bei einer relativ geringen Drehzahl von etwa 500 U/min noch nahezu konstant nahe Null sind (der Sensorwert von 2050 entspricht in etwa 0 g), steigen diese mit steigender Drehzahl bei ca. 2000 U/min auf bis knapp 2100 an, was etwa 0,5 m/s$^2$ entspricht. Dabei handelt es sich zwar um einen vergleichsweise geringen Beschleunigungswert, der allerdings kennzeichnet, dass die Sensoreinheit 16 bei der Messung nicht exakt koaxial zur Drehachse 20 ausgerichtet war.

Da ein korrekter Rundlauf bei Hochpräzisionsanwendungen im Bereich der Werkstückbearbeitung äußerst wichtig ist, kann eine derartige "Unwucht" der Sensoreinheit 16, die aus einem leichten Radial- und/oder Winkelversatz (der noch innerhalb entsprechender Toleranzgrenzen liegt) der Sensoreinheit 16 zur Drehachse 20 resultiert, ausgeglichen werden, indem z.B. ein Kalibrierlauf durchgeführt wird. In diesem Kalibrierlauf werden initiale für die Beschleunigung repräsentative Größen ax, ay (in der Folge auch initiale (Beschleunigungs-)Größen genannt) mittels der im Überwachungsmodul 10, 26, 28 verbauten Sensoreinheit 16 gemessen. Dieses Erfassen der für die initiale Beschleunigung repräsentativen Größen ax_initial, ay_initial wird grundsätzlich auf dieselbe Weise ausgeführt, wie das Erfassen der für die Beschleunigung repräsentativen Größen ax, ay (vgl. hierzu auch die Beschreibung zu Fig. 1). Die initialen Größen ax_initial, ay_initial werden nach der Erfassung hier beispielhaft zusammen mit der Prüfdrehzahl bei der Erfassung in einem Speicher des Überwachungsmoduls 10, 26, 28 gespeichert. Altemativ können die initialen Größen ax_initial, ay_initial über die Kommunikationseinheit 24 des Überwachungsmoduls 10, 26, 28 an die Rundlaufüberwachungs-Signalschnittstelle und/oder an die Werkzeugmaschine WZM übertragen und dort in lokalen Speichern gespeichert werden.

Der Kalibrierlauf, der für eine oder für mehrere Prüfdrehzahlen durchgeführt werden kann, wird zeitlich gesondert von einem Normalbetrieb, in dem ein Werkstück in der Werkzeugmaschine WZM bearbeitet wird, ausgeführt, wenn die Spindel S hochgelaufen ist, das heißt, wenn eine im Wesentlichen konstante Prüfdrehzahl herrscht oder diese um maximal 10 % von der vorgegebenen Prüfdrehzahl abweicht. Werden mehrere Kalibrierläufe für unterschiedliche Drehzahlen durchgeführt, ergibt sich daraus eine drehzahlabhängige Funktion der initialen Größen ax_initial, ay_initial, die im Speicher des Überwachungsmoduls 10, 26, 28 und/oder der Rundlaufüberwachungs-Signalschnittstelle SGS und/oder der Werkzeugmaschine WZM gespeichert wird.

Zudem wird der Kalibrierlauf hier beispielhaft unter herstellerseitig überwachten Idealbedingungen durchgeführt, wobei die Spindel S und das Überwachungsmodul 10, 26, 28 sauber sind und sich keine Späne im Wirkbereich dieser Komponenten befinden, sodass das Überwachungsmodul 10, 26, 28 ideal plan an der Spindel S anliegt.

Die ermittelten initialen Größen ax_initial, ay_initial werden dann bei der Bestimmung der Gesamtbeschleunigung ages in der Form von Offsetwerten berücksichtigt. Der Gesamtbeschleunigungswert ages wird im Sinne einer resultierenden Gesamtbeschleunigung aresultierend wie folgt berechnet.

$$a\_ges = a\_resultierend = \sqrt{((a\_x - a\_(x\_initial))^2 + (a\_y - a\_(y\_initial))^2)}$$

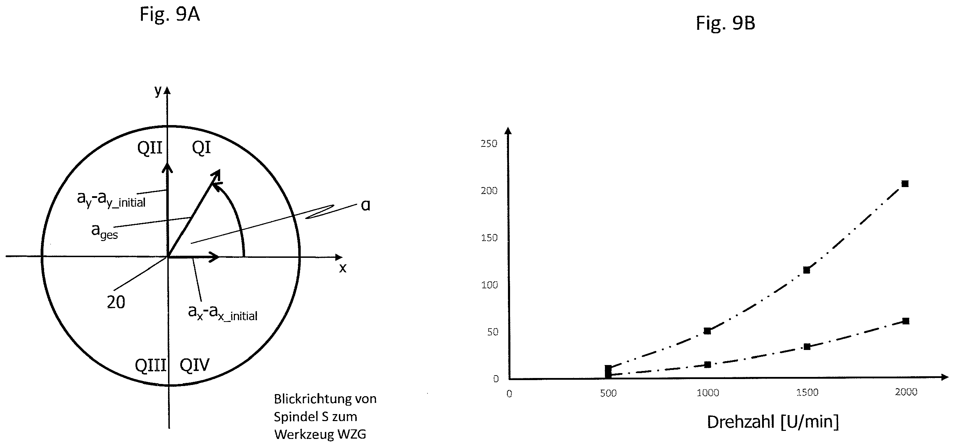

Die Fig. 9A verdeutlicht, wie sich die ermittelte Gesamtbeschleunigung $a_{resultierend}$ aus den Beschleunigungskomponenten ax, ax_initial, ay und ay_initial zusammensetzt und folglich, wie aus der ermittelten Gesamtbeschleunigung $a_{resultierend}$, also unter Berücksichtigung der initialen Beschleunigungswerte ax_initial und ay_initial, ein Betrag r und ein Winkel eines Rundlauffehlers bestimmt werden. Dabei ist in der Fig. 9A ein in vier Quadranten eingeteilter Einheitskreis dargestellt, durch dessen Mittelpunkt die Drehachse 20 mit Blickrichtung von der Spindel S zum Werkzeug WZG verläuft.

Während der Betrag r (in $\mu$m) des Rundlauffehlers unter Berücksichtigung der bei der Erfassung der Beschleunigungsgrößen herrschenden Drehzahl n zu $r = a\_resultierend/(4 * \pi^2 * n^2)$ bestimmt wird, hängt der Betrag des Winkels des Rundlauffehlers davon ab, in welchem Quadrant der Richtungsvektor der Gesamtbeschleunigung aresultierend liegt. Die Berechnung des Richtungswinkels $\alpha$ der Rundlaufabweichung wird gemäß der folgenden Tabelle mittels einer Tangens-Funktion ausgeführt.

| ax - ax_initial | ay - ay_initial | Quadrant | Berechnung |
|---|---|---|---|
| > 0 | > 0 | QI | $\alpha = arctan((a\_y - a\_(y\_initial))/(a\_x - a\_(x\_initial)))$ |
| = 0 | > 0 | - | $\alpha = 90°$ |
| < 0 | > 0 | QII | $\alpha = arctan((a\_y - a\_(y\_initial))/(a\_x - a\_(x\_initial))) + 180°$ |
| < 0 | < 0 | QIII | $\alpha = arctan((a\_y - a\_(y\_initial))/(a\_x - a\_(x\_initial))) + 180°$ |
| = 0 | < 0 | - | $\alpha = 270°$ |
| > 0 | < 0 | QIV | $\alpha = arctan((a\_y - a\_(y\_initial))/(a\_x - a\_(x\_initial))) + 360°$ |

In der Fig. 9B ist die Gesamtbeschleunigung ages als Ausgabewert einer kalibrierten Sensoreinheit 16 über verschiedenen Drehzahlen und bei verschiedenen Positionierungen der z-Trägheitsachse 18 der Sensoreinheit 16 zur Drehachse des Überwachungsmoduls 10, 26, 28 dargestellt. Der Messbereich der Sensoreinheit 16 beträgt wiederum beispielhaft $\pm$ 2 g, die Auflösung (Empfindlichkeit) der Sensoreinheit 16 beträgt wiederum beispielhaft 1024 Digitalwerte (entsprechend 10 Bit) pro g und die Abtastrate beträgt - ebenso wiederum beispielhaft - 0,5 kHz. Sämtliche Berechnungen, die der Fig. 9B zugrunde liegen, werden anhand von über acht Umdrehungen des Überwachungsmoduls 10, 26, 28 / der Spindel S gemittelten Größen ax, ay, ax_initial und ay_initial durchgeführt.

Die durchgezogene Kurve (erste von unten) der Fig. 9B zeigt die Gesamtbeschleunigung ages, wenn die Sensoreinheit 16 eine Position "Aussermitte 10 $\mu$m" einnimmt. Die gestrichelte Kurve (zweite von unten) der Fig. 9B zeigt die Gesamtbeschleunigung ages, wenn die Sensoreinheit 16 eine Position "Aussermitte 30 $\mu$m" einnimmt. Die strich-gepunktete Kurve (dritte von unten) der Fig. 9B zeigt die Gesamtbeschleunigung ages, wenn die Sensoreinheit 16 eine Position "Mitte 10 $\mu$m" einnimmt. Die strichgepunktete Kurve mit doppelten Punkten (erste von oben) der Fig. 9B zeigt die Gesamtbeschleunigung ages, wenn die Sensoreinheit 16 eine Position "Mitte 10 $\mu$m" einnimmt. Die Berechnungser-

gebnisse der Gesamtbeschleunigung sind in der folgenden Tabelle zusammengefasst.

| Drehzahl | Mitte 10 $\mu$m | Außermitte 10 $\mu$m | Mitte 30 $\mu$m | Außermitte 30 $\mu$m |
|---|---|---|---|---|
| 500/min | 3 | 1 | 11 | 3 |
| 1000/min | 14 | 3 | 50 | 6 |
| 1500/min | 33 | 4 | 114 | 15 |
| 2000/min | 60 | 8 | 206 | 26 |

Wie aus der Tabelle zusammen mit der Fig. 9B ersichtlich, steigt insbesondere die Gesamtbeschleunigung bei der Position "Mitte 30 $\mu$m" im Bereich einer Drehzahl von 1500 U/min auf einen Wert von 114 und bei 2000 U/min auf 206, was in etwa 0,2 g entspricht.

Die Fig. 9B zeigt auch, dass unabhängig von der exakten Positionierung bzw. des Mittenversatzes der Sensoreinheit 16 die Gesamtbeschleunigung ages mit steigender Drehzahl ansteigt. Deswegen handelt es sich bei dem Schwellenwert, mit dem die Gesamtbeschleunigung ages verglichen wird, um zu überprüfen, ob ein Rundlauffehler des Überwachungsmoduls 10, 26, 28 vorliegt, auch nicht um einen statischen Schwellenwert, sondern um einen "dynamischen" Schwellenwert, der mit ansteigender Drehzahl ansteigt.

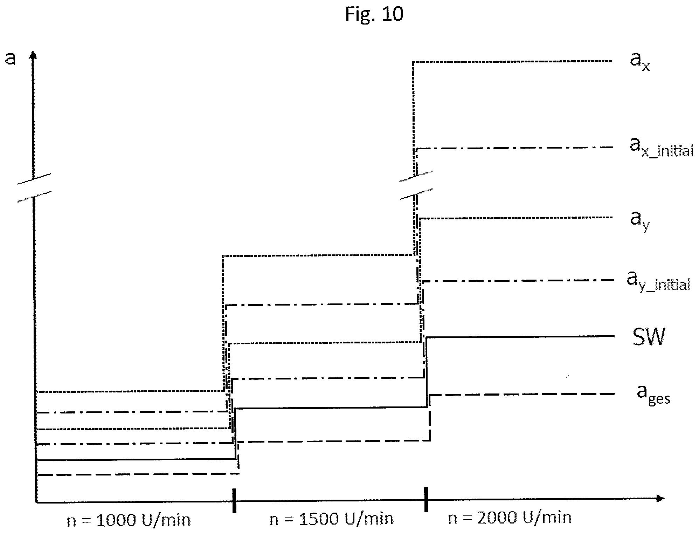

Dies ist in der Fig. 10 verdeutlicht, in der beispielhaft die Beschleunigungsgrößen ax, ay, ax_inital, ay_initial und ages (entsprechend aresultierend) sowie ein Schwellenwert SW über der Drehzahl des Überwachungsmoduls 10, 26, 28 aufgetragen sind. Dabei ist aus der Fig. 10 wiederum ersichtlich, dass sämtliche dieser Größen bei jeder Erhöhung der Drehzahl ansteigen. Die initialen für die Beschleunigung repräsentativen Größen ax_initial, ay_initial weisen jeweils einen geringeren Beschleunigungswert als die der Sensitivitätsrichtung nach entsprechenden für die Beschleunigung repräsentativen Größen ax, ay auf, was z.B. daran liegt, dass bei der Messung der Größen ax, ay in einem Überwachungsmodus des Überwachungsmoduls 10, 26, 28 eine gewisse (stärkere) Exzentrizität / Verkippung der Sensoreinheit 16 im Vergleich zum Kalibrierlauf vorgelegen hat. Die berechnete Gesamtbeschleunigung ages (entsprechend aresultierend) liegt jedoch bei allen Drehzahlen unterhalb des Schwellenwerts SW, also innerhalb eines tolerierbaren Bereichs, sodass bei dieser Auswertung kein Rundlauffehler vorliegt, sondem der Rundlauf des Überwachungsmoduls 10, 26, 28 in Ordnung (IO) ist. Wird eine derartige Auswertung im Überwachungsmodul 10, 26, 28 ausgeführt, kann das Ergebnis als Prüfsignal IO an die Werkzeugmaschine WZM und/oder an die Rundlaufüberwachungs-Signalschnittstelle SGS übertragen werden. Altemativ ist es möglich, die Rohdaten der Messgrößen ax, ay, ax_inital, ay_initial an die Werkzeugmaschine WZM und/oder an die Rundlaufüberwachungs-Signalschnittstelle SGS zu übertragen und die Auswertung dort vorzunehmen.

Da die Drehzahl bei der Ermittlung der Größen ax, ay, ax_inital, ay_initial quadratisch einfließt, ist es wichtig, dass die Komponente, die die Auswertung ausführt, die exakte(n) Drehzahle(n) kennt, bei denen diese Größen ermittelt wurden. Dafür stehen im Rahmen der vorliegenden Offenbarung mehrere Möglichkeiten zu Verfügung.

Eine erste Möglichkeit besteht darin, die Drehzahl anhand weiterer Beschleunigungsgrößen (oder einer einzelnen weiteren Beschleunigungsgröße) zu bestimmen, die von der weiteren Sensoreinheit B während der Erfassung der für die Beschleunigung repräsentativen Größen ax, ay (und im Kalibrierlauf während der Erfassung der initialen Größen ax_inital, ay_initial) ermittelt werden. Das Erfassungsprinzip für die Drehzahl über die weitere Sensoreinheit B ist mit Bezug auf Fig. 1 beschrieben, die dortigen Ausführungen sind auch hier gültig.

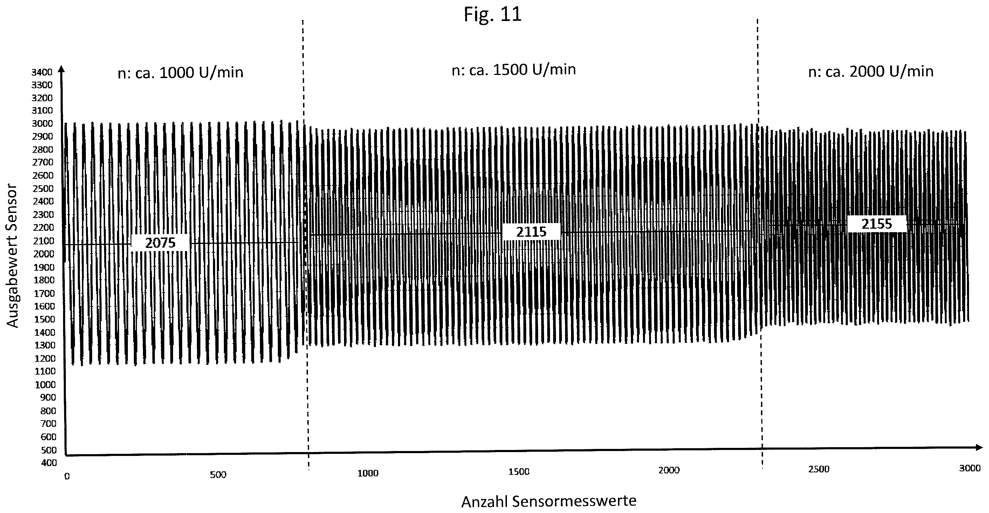

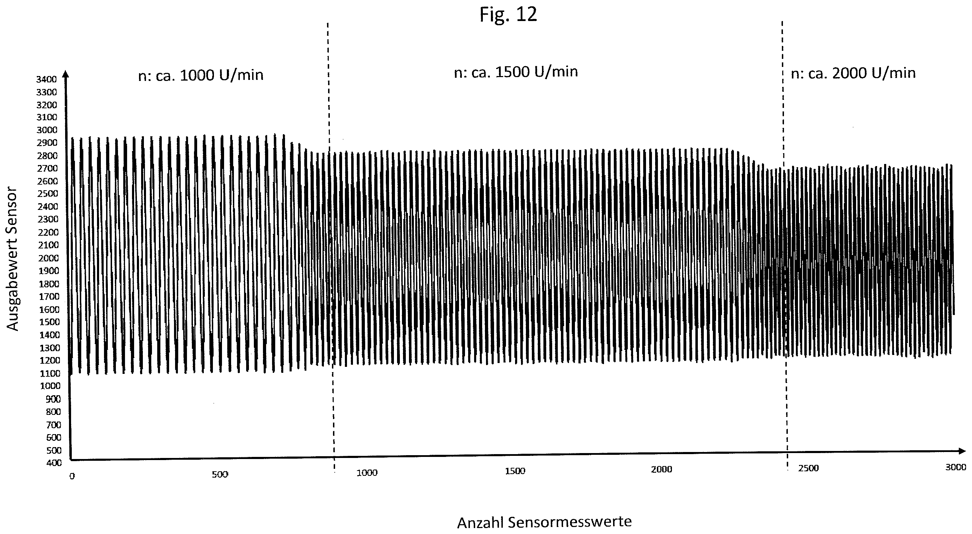

Eine zweite Möglichkeit, bei der auf die weitere optionale Sensoreinheit B zur Drehzahlerfassung verzichtet werden kann, ist mit Bezug auf die Fig. 11 und 12 verdeutlicht. Die Sensoreinheit 16 weist dabei einen Messbereich von $\pm$ 2 g und eine Auflösung von 1024 Digitalwerten pro g auf. Die Abtastrate liegt bei 1 kHz. Bei den in den Fig. 11 und 12 dargestellten Messungen ist das Überwachungsmodul 10, 26, 28 horizontal orientiert. Dadurch wird der eigentlich zu messenden Größe (z.B. ax, ay, ax_initial, ay_initial) aufgrund der auf das Überwachungsmodul 10, 26, 28 bei der Messung einwirkenden Erdbeschleunigung ein sinusförmiges Signal überlagert.

Die Fig. 11 zeigt eine derartige Signalüberlagerung, wobei hier Ausgabewerte (ax) der Sensoreinheit 16 in x-Richtung bei verschiedenen Drehzahlen dargestellt sind. In ähnlicher Weise zeigt die Fig. 12 eine derartige Signalüberlagerung, wobei hier Ausgabewerte (ay) der Sensoreinheit 16 in y-Richtung bei verschiedenen Drehzahlen dargestellt sind. Die den Messgrößen überlagerten Sinusschwingungen entsprechen in ihrer Amplitude in etwa der Erdbeschleunigung. Dies gilt insbesondere bei einer Drehzahl von etwa 1000 U/min, da hier (vgl. die Fig. 11 und 12) eine Amplitude von etwa 1000 vorliegt, was in etwa der Erdbeschleunigung von rund 1 g entspricht. In der Fig. 11 ist auch gezeigt, dass der Mittelwert des Sinussignals mit zunehmender Drehzahl ansteigt. So liegt der Mittelwert bei etwa 1000 U/min bei einem digitalen Sensorwert von 2075, während der Mittelwert bei etwa 1500 U/min auf einen digitalen Sensorwert von 2115 und bei etwa 2000 U/min auf einen digitalen Sensorwert von etwa 2155 ansteigt.

Wie zudem aus den Fig. 11 und 12 ersichtlich, ändert sich die Frequenz des sinusförmigen Signals mit zunehmender Drehzahl. Die Frequenz korreliert demnach mit der Drehzahl, insbesondere entspricht die Frequenz der Drehzahl. Somit kann von der Frequenz der den eigentlichen Messgrößen überlagerten sinusförmigen Schwingung bei horizontaler Ausrichtung des Überwachungsmoduls 10, 26, 28 durch bekannte Berechnungsmethoden auf dessen Drehzahl bei der Erfassung der eigentlichen Messgrößen geschlossen werden.

Eine noch weitere Möglichkeit der Drehzahlbestimmung während der Erfassung der Beschleunigungsgrößen ax, ay, ax_initial, ay_initial nutzt die mit Bezug auf Fig. 7 beschriebene photosensitive Einheit PE mit der photosensitiven Fläche 50. Dabei handelt es sich um eine optische Drehzahlerkennung mittels eines natürlichen Lichtmusters, das während der Erfassung entsteht. Dieses Lichtmuster entsteht durch die Rotation des Überwachungsmoduls 10, 26, 28 und wird von der Recheneinheit 22 des Überwachungsmoduls 10, 26, 28 in ein Spannungsmuster umgesetzt, das sich bei jeder Umdrehung wiederholt. Sodann wird die Grundfrequenz des Spannungsmusters bzw. des zugrundeliegenden Lichtmusters ermittelt Diese Grundfrequenz entspricht der Drehzahl des Überwachungsmoduls 10, 26, 28 beim Erfassen der Beschleunigungsgrößen ax, ay, ax_initial, ay_initial durch die Sensoreinheit 16. Bei nicht ausreichendem Umgebungslicht in der Anwendungssituation des Überwachungsmoduls 10, 26, 28 ist die photosensitive Einheit PE eine IR-Photodiode. Dann wird nicht das Umgebungslicht detektiert, sondern Infrarotstrahlung, aus der die Drehzahl ermittelt werden kann. Diese Infrarotstrahlung wird von einem Sende- und Empfangsmodul der Werkzeugmaschine WZM für Infrarotstrahlen abgestrahlt. Der Sender umfasst dabei eine IR-LED.

Schließlich ist es auch möglich, dass die Werkzeugmaschine WZM über deren Kommunikationseinheit 30 dem Überwachungsmodul 10, 26, 28 und/oder der Rundlaufüberwachungs-Signalschnittstelle SGS die exakte Prüfdrehzahl (wie durch die Steuerung 32 für die Spindel S als Drehzahl vorgegeben) signalisiert. Dies ist insbesondere dann sinnvoll, wenn die Auswertung der Rundlaufüberwachung im Überwachungsmodul 10, 26, 28 oder in der Rundlaufüberwachungs-Signalschnittstelle SGS ausgeführt wird.

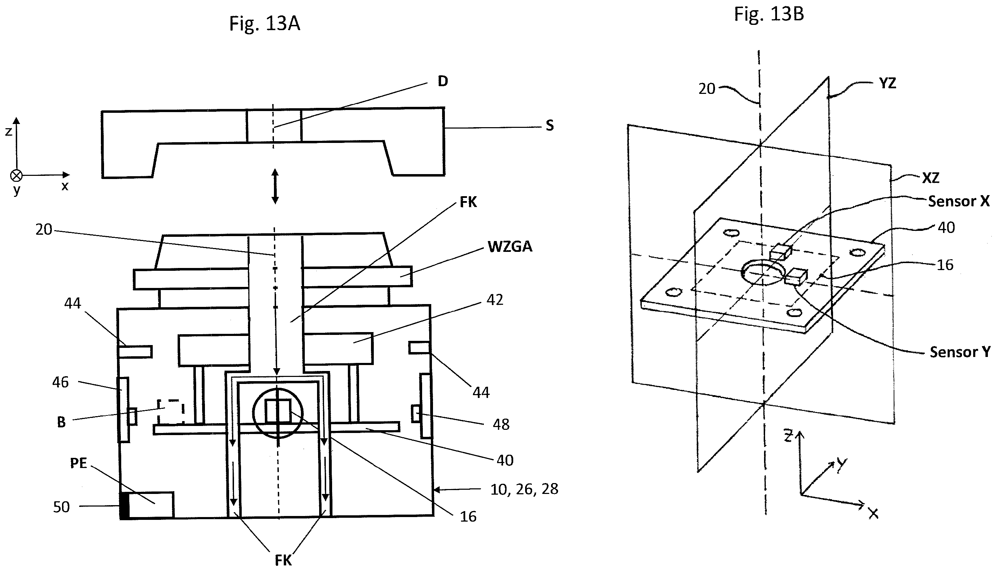

Die Fig. 13A zeigt in Schnittdarstellung ein Beispiel eines Überwachungsmoduls 10, 26, 28, das einen optionalen Fluidkanal FK aufweist. Der Fluidkanal ist auch in der Mitte der zusätzlich in der Fig. 13A dargestellten Komponenten Spindel S und Werkzeugaufnahme WZGA angedeutet. Auch das Werkzeug WZG, insbesondere des Überwachungsmoduls 28, kann einen derartigen Fluidkanal aufweisen. Auch Werkzeuge WZG, die mit den Überwachungsmodulen 10, 26 koppelbar sind, können einen Fluidkanal aufweisen. Durch diese Fluidkanäle werden bei der Bearbeitung eines Werkstücks notwendige Kühl- und/oder Schmierstoffe durch die Spindel S, das Überwachungsmodul 10, 26, 28 und das Werkzeug WZG zur Bearbeitungsstelle geführt, um beispielsweis Schäden an Werkzeug WZG und Werkstück zu vermeiden und um bessere Bearbeitungsergebnisse zu erzielen.

Wenn die Sensoreinheit 16 wie im vorliegenden Beispiel zumindest annähernd koaxial zur Drehachse 20 des Überwachungsmoduls 10, 26, 28 ausgerichtet ist, wird der Kühlschmiermittelfluss im Beispiel nach Fig. 13A nicht exakt zentral im Überwachungsmodul 10, 26, 28 geführt. Wie in Fig. 13A dargestellt, ist der zunächst zentral von einer der Spindel S zugewandten Oberfläche des Überwachungsmoduls 10, 26, 28 ausgehende Fluidkanal FK kurz vor der Sensoreinheit 16 durch einen Kühlschmiermittelverteiler in zwei Teilabschnitte des Fluidkanals FK aufgeteilt. Dadurch wird das Kühlschmiermittel bei der Bearbeitung eines Werkstücks durch die Werkzeugmaschine WZM mit Überwachungsmodul 10, 26, 28 in die zwei Teilabschnitte des Fluidkanals FK geleitet und so um die Sensoreinheit 16 herumgeführt beziehungsweise an der Sensoreinheit 16 vorbeigeleitet. Der Fluidkanal FK und dessen Teilabschnitte sind dabei derart ausgestaltet, dass der Kühlschmiermittelstrom von der Werkzeugmaschine WZM zum Werkzeug WZG nicht beeinträchtigt wird.

In einer alternativen Variante, die in Fig. 13B dargestellt ist, wird der Kühlschmiermittelfluss zentral im Überwachungsmodul 10, 26, 28 geführt, obwohl die Sensoreinheit 16 (deren Gehäuse in Fig. 13B zur besseren Übersichtichkeit lediglich angedeutet ist) zumindest annähernd koaxial zur Drehachse 20 des Überwachungsmoduls 10, 26, 28 ausgerichtet ist. Dafür umfassen sowohl die Sensorplatine 40 als auch die Sensoreinheit 16 jeweils eine (hier beispielhaft als rund dargestellte) zentrale Ausnehmung. Wie aus Fig. 13B ersichtlich, überlappen sich diese zentralen Ausnehmungen, und die Drehachse 20 des Überwachungsmoduls 10, 26, 28 verläuft durch die Mittelpunkte der Ausnehmungen. Die Ausnehmungen dienen im Betrieb des Überwachungsmoduls 10, 26, 28 als Fluidkanal FK, der dadurch mittig durch das Überwachungsmodul 10, 26, 28 verläuft. Bei dieser Variante kommen innerhalb der Sensoreinheit 16 zwei einachsige, um 90° versetzt zueinander angeordnete Beschleunigungssensoren Sensor X und Sensor Y zum Einsatz. Hierbei kann die Sensoreinheit 16 eine zentrale Ausnehmung umfassen, die annähemd koaxial zur Drehachse 20 ausgerichtet ist und zwei Beschleunigungssensoren SX, SY umfasst. Dabei ist der erste Beschleunigungssensor SX auf der y-z-Ebene angeordnet und hat eine orthogonal zur y-z-Ebene orientierte sensitive Achse. Der zweite Beschleunigungssensor SY ist auf der x-z-Ebene angeordnet und hat eine orthogonal zur x-z -Ebene orientierte sensitive Achse. Dadurch ist es auch möglich, die Rundlaufüberwachung durchzuführen, wenn die Sensoren X, Y aufgrund des mittig verlaufenden Fluidkanals räumlich etwas voneinander beabstandet sind. Durch die räumliche Anordnung des Sensors X in der YZ-Ebene wirkt bei Rotation keine Zentrifugalbeschleunigung auf den Sensor, wenn keine Verkippung vorliegt. Bei Verkippung in X-Richtung wirkt entsprechend abhängig von Drehzahl und Rundlauffehler in X-Richtung eine Beschleunigung in tangentialer Richtung. Dies gilt analog auch in Y-Richtung. Beide Beschleunigungen werden, wie oben erläutert, nach Betrag und Richtung (vektoriell) anteilig von beiden Sensoren erfasst. Durch die Auswertung der tangentialen Beschleunigung hat die Rotation keinen Einfluss auf den Beschleunigungswert.

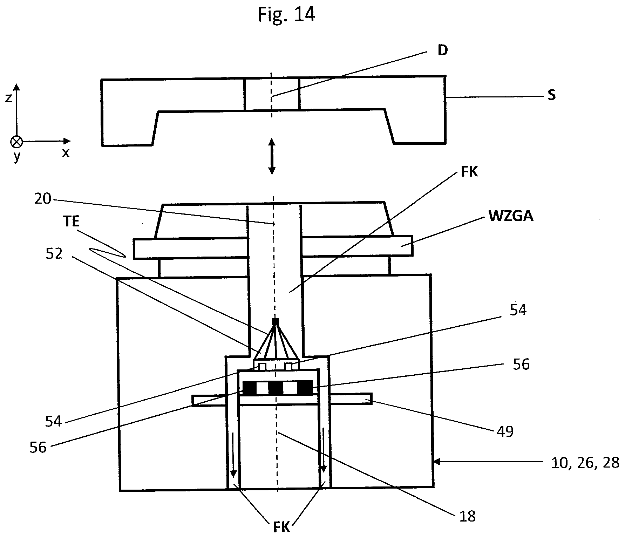

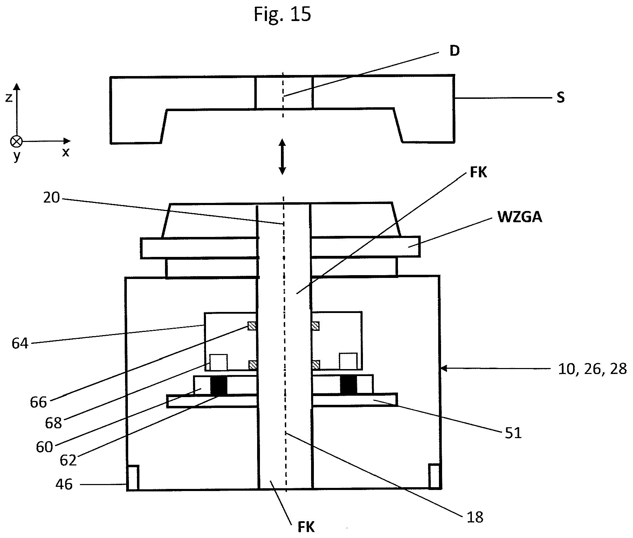

Das Überwachungsmodul 10, 26, 28 muss im Betrieb mit elektrischer Energie versorgt werden. Dafür ist die mit Bezug auf Fig. 1 beschriebene Energieversorgungseinheit V im Überwachungsmodul 10, 26, 28 vorgesehen. Diese Energieversorgungseinheit V umfasst einen Energiespeicher, der im einfachsten Fall aus einer auswechselbaren oder aufladbaren Batterie oder einem Akkumulator besteht. Mit Bezug auf die Fig. 14 und 15 werden nun Möglichkeiten zur Eigenenergieerzeugung im Überwachungsmodul 10, 26, 28 beschrieben. In diesen Fällen kann der Energiespeicher der Energieversorgungseinheit V auch Batterien mit vergleichsweise geringerer Kapazität oder Kondensatoren umfassen, in denen die erzeugte Energie zwischengespeichert wird. Dafür wird eine Generatoreinheit benötigt, um z.B. Rotationsenergie in elektrische Energie umzuwandeln. Über eine Gleichrichterschaltung wird diese elektrische Energie dann dem Energiespeicher zugeführt. Die aus dem Energiespeicher entnommene Energie kann durch einen optionalen Spannungsregler auf die für den Betrieb des Überwachungsmoduls 10, 26, 28 notwendige Nennspannung gebracht werden.

Die Fig. 14 zeigt die Anordnung einer Turbineneinheit TE im Fluidkanal eines (in Schnittdarstellung gezeigten) Überwachungsmoduls 10, 26, 28. Die Turbineneinheit dient als Generatoreinheit zur Eigenstromerzeugung. Dabei wird der Kühl(schmier)-mitteldurchfluss durch ein Turbinenrad 52 genutzt. Durch diesen Kühl(schmier)mitteldurchfluss dreht sich das Turbinenrad 52, das Permanentmagnete 54 (in der Fig. 14 sind beispielhaft zwei Permanentmagnete gezeigt) aufweist. Das Turbinenrad 52 dreht sich dann relativ zu einer Platine 49, auf der in einem Spulenkäfig Induktionsspulen 56 (z.B. drei Spulen, die 120° versetzt zueinander angeordnet sind, von denen in Fig. 14 der Übersichtlichkeit halber aber lediglich zwei Spulen 56 referenziert sind) angeordnet und miteinander gekoppelt sind. Das Turbinenrad 52 und die Platine 49 sind derart zueinander angeordnet und ausgerichtet, dass durch die relative Drehbewegung zwischen Turbinenrad 52 und den Induktionsspulen 56 in den Induktionsspulen 56 eine Spannung induziert wird, die dann im Energiespeicher der Energieversorgungseinheit V gespeichert wird.

Die Fig. 15 zeigt die Anordnung eines Schwungradantriebs in einem (in Schnittdarstellung gezeigten) Überwachungsmodul 10, 26, 28. Der Schwungradantrieb dient als Generatoreinheit zur Eigenstromerzeugung. Dabei dient eine Platine 51 als Stator, weswegen diese direkt mit dem Überwachungsmodul 10, 26, 28 gekoppelt ist. Gemäß anderen Beispielen kann alternativ eine indirekte Kopplung der Platine 51 mit dem Überwachungsmodul 10, 26, 28 vorgesehen sein.

Auf der Platine 51 gemäß Fig. 15 ist ein Spulenkäfig 60 mit Induktionsspulen 62 angeordnet. Zur Gewährleistung der Stabilität bei hohen Bearbeitungsdrehzahlen sind die Spulen 62 - in entsprechenden Aussparungen des Spulenkäfigs 60 - fest mit diesem verklebt (dies gilt auch für die mit Bezug auf Fig. 14 beschriebenen Spulen 56). Die Spulen 62 weisen hier beispielhaft einen Mangan-Zink-Ferrit-Kern auf und sind über die Platine 51 miteinander gekoppelt.

Ein Schwungrad 64, das über mehrere Kugellager 66 (in der Fig. 15 ist der Übersichtlichkeit halber lediglich ein Referenzzeichen 66 angegeben) drehbar im Inneren des Überwachungsmoduls angeordnet ist, weist Permanentmagnete 68 auf (auch hier ist in der Fig. 15 der Übersichtlichkeit halber lediglich ein Referenzzeichen 68 angegeben). Wenn die Spindel S und damit das Überwachungsmodul 10, 26, 28 (positiv oder negativ) beschleunigt wird, entsteht wegen der Massenträgheit des Schwungrades 64 eine Drehzahldifferenz zwischen Schwungrad 62 und Platine 51. Das Schwungrad 64 und die Platine 51 sind derart zueinander angeordnet und ausgerichtet, dass durch diese Drehzahldifferenz bei Beschleunigung des Überwachungsmoduls 10, 26, 28 zwischen Schwungrad 64 und den Induktionsspulen 68 in den Induktionsspulen 68 eine Spannung induziert wird, die dann im Energiespeicher der Energieversorgungseinheit V gespeichert wird.

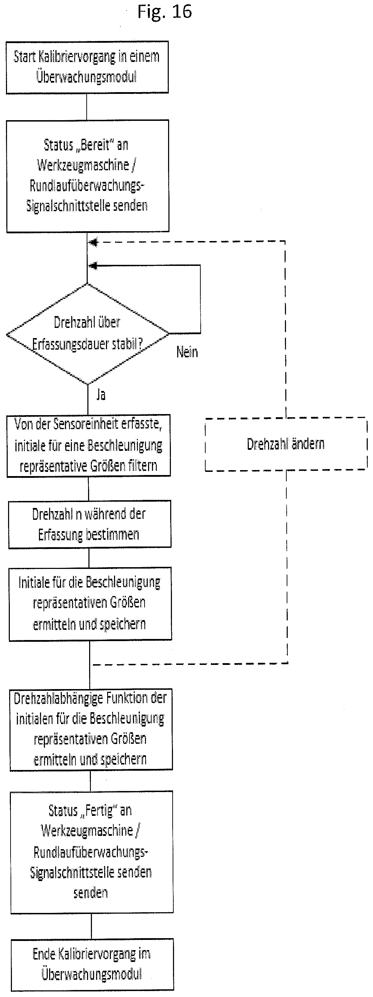

Mit Bezug auf die Fig. 16 bis 22 werden nun durch das Überwachungsmodul 10, 26, 28, durch die Rundlaufüberwachungs-Signalschnittstelle SGS und/oder durch die Werkzeugmaschine WZM ausführbare Verfahrensabläufe und Teilverfahrensabläufe beschrieben. Dabei stellen insbesondere Verfahrensschritte, die im Rahmen der bisherigen Fig.beschreibung nicht beschrieben sind, optionale Verfahrensschritte für die Rundlaufüberwachung und/oder für den Kalibrierlauf dar. Diese optionalen Verfahrensschritte sind insbesondere mit den mit Bezug auf Fig. 6 beschriebenen Verfahrensschritten sowie mit weiteren im Rahmen dieser Offenbarung beschriebenen Verfahrensschritten (insbesondere solchen, die den Kalibrierlauf betreffen) kombinierbar.

In der Fig. 16 ist der Ablauf eines Kalibriervorgangs für eine oder mehrere Prüfdrehzahlen und für eine Auswertung des Rundlaufs im Rundlaufüberwachungsmodul 10, 26, 28 dargestellt. Gemäß der Fig. 16 wird nach dem Start des Kalibriervorgangs im Überwachungsmodul 10, 26, 28 der Werkzeugmaschine WZM und/oder der Rund-laufüberwachungs-Signalschnittstelle SGS signalisiert, dass das Überwachungsmodul 10, 26, 28 bereit für die Erfassung der initialen Größen ax_initial, ay_initial ist. Das Überwachungsmodul 10, 26, 28 befindet sich dann in einem Kalibriermodus. Wenn sich die Spindel S dreht, wird z.B. durch die Werkzeugmaschine WZM überwacht, ob eine vorgegebene Prüfdrehzahl während der Erfassung stabil ist. Die Erfassung dauert dabei über eine vorgegebene Anzahl von Umdrehungen der Spindel S an, die hier beispielhaft acht Umdrehungen betragen soll. Die vorliegende Offenbarung ist jedoch nicht auf diese exakte Anzahl an Umdrehungen für die Erfassungsdauer (auch Auswertezeit) beschränkt.

Wenn die überwachte Prüfdrehzahl wesentlich, z.B. um mehr als 10 % von der vorgegebenen Prüfdrehzahl abweicht, werden keine Beschleunigungsgrößen durch die Sensoreinheit 16 erfasst. Bei stabiler Drehzahl werden hingegen die Beschleunigungswerte ax_initial, ay_initial für die erste (oder einzige) Prüfdrehzahl erfasst. In einem folgenden Schritt werden die von der Sensoreinheit 16 erfassten initialen Größen ax_initial, ay_initial gefiltert. Zudem wird die exakte Prüfdrehzahl während der Erfassung anhand einer der oben beschriebenen Varianten bestimmt. Dazu können z.B. von der weiteren Sensoreinheit B weitere Beschleunigungsgrößen in x- und/oder in y-Richtung bestimmt werden, die dann gleichermaßen gefiltert werden können. Dann werden gemäß dem Beispiel in Fig. 16 Mittelwerte der Größen ax_initial, ay_initial über die Anzahl der Umdrehungen (also die Erfassungsdauer) bestimmt.

Danach kann die Prüfdrehzahl geändert (z.B. erhöht) werden. Die Optionalität dieses Schrittes ist durch die gestrichelte Umrandung des Schrittes "Drehzahl ändern" in der Fig. 16 angedeutet. Die Erfassung der initialen Größen ax_initial, ay_initial wird dann, wie aus Fig. 16 ersichtlich, für die erhöhte Prüfdrehzahl erneut durchgeführt. Sind die initialen Beschleunigungsgrößen ax_initial, ay_initial für alle Prüfdrehzahlen erfasst, werden die initialen Größen ax_initial, ay_initial (insbesondere deren Mittelwerte) der jeweils während der Erfassung herrschenden exakten Prüfdrehzahl zugeordnet, sodass eine prüfdrehzahlabhängige Funktion der initialen Größen ax_initial, ay_initial ermittelt wird. Diese Funktion wird dann im Speicher des Überwachungsmoduls 10, 26, 28 gespeichert und steht somit zur Berechnung der Gesamtbeschleunigung ages zur Verfügung, wenn der Rundlauf eines Werkzeugs WZG durch das Überwachungsmodul 10, 26, 28 überwacht wird. Um den Kalibriermodus zu verlassen, signalisiert das Überwachungsmodul 10, 26, 28 der Werkzeugmaschine WZM und/oder der Rundlaufüberwachungs-Signalschnittstelle SGS, dass der Kalibrierlauf beendet ("fertig") ist.

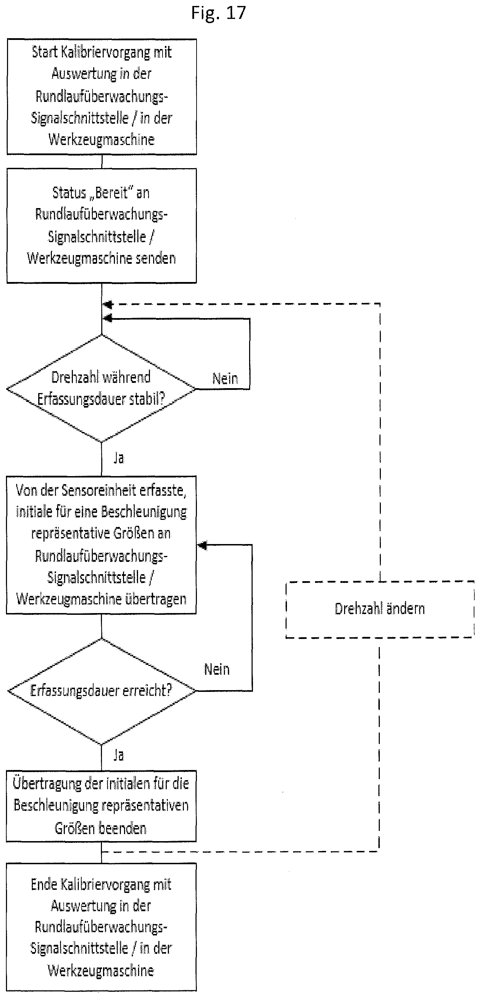

In der Fig. 17 ist ein Teilablauf eines Kalibrierlaufs für eine oder mehrere Prüfdrehzahlen und für eine Auswertung der im Kalibrierlauf erfassten initialen Größen ax_initial, ay_initial in der Werkzeugmaschine WZG (vgl. Fig. 4) oder in der Rundlaufüberwachungs-Signalschnittstelle SGS (vgl. Fig. 5) dargestellt. Dabei entsprechen einige Schritte denen der Fig. 16, sodass anstatt einer redundanten Beschreibung hiermit auf die jeweiligen Schritte der Fig. 16 verwiesen wird, die im Rahmen des Ablaufs der Fig. 17 gleichermaßen gelten.

Gemäß Fig. 17 kann insbesondere die Werkzeugmaschine WZM oder die Rundlaufüberwachungs-Signalschnittstelle SGS den Kalibrierlauf unter Verwendung eines der Überwachungsmodule 10, 26, 28 auslösen, also starten. Nach der "Bereit"-Meldung des Überwachungsmoduls 10, 26, 28 werden die bei stabiler Drehzahl erfassten initialen Größen ax_initial, ay_initial an die Werkzeugmaschine WZM / an die Rundlaufüberwachungs-Signalschnittstelle SGS übertragen. Dies geschieht so lange, bis die Erfassungsdauer erreicht ist. Dann wird die Übertragung der initialen Größen ax_initial, ay_initial gestoppt und - bei der Variante des Kalibrierlaufs für mehrere Prüfdrehzahlen - die Drehzahl geändert. Es erfolgt ein erneutes erfassen und übertragen der initialen Größen ax_initial, ay_initial bei stabiler Drehzahl, bis wiederum die Erfassungsdauer erreicht ist. Ist dieser Ablauf für alle Prüfdrehzahlen ausgeführt (dies ist dann der Fall, wenn die Werkzeugmaschine WZM / die Rundlaufüberwachungs-Signalschnittstelle SGS für alle vorgegebenen Prüfdrehzahlen initiale Beschleunigungsgrößen ax_initial, ay_initial empfangen hat), beendet die Werkzeugmaschine WZM / die Rundlaufüberwachungs-Signalschnittstelle SGS den Kalibriervorgang.

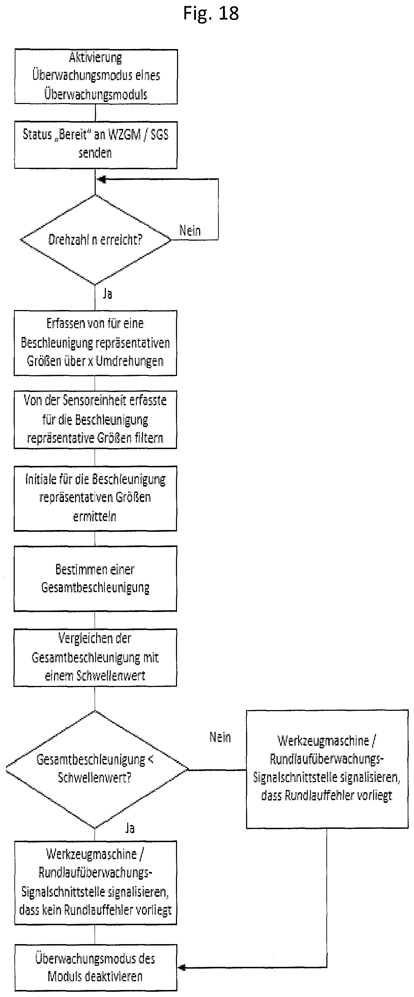

Die Fig. 18 zeigt den Ablauf einer in dem Überwachungsmodul 10, 26, 28 durchgeführten Rundlaufprüfung eines Werkzeugs WZG bei einer einzelnen Prüfdrehzahl. Dabei rotiert das Überwachungsmodul 10, 26, 28 zusammen mit der Spindel S der Werkzeugmaschine WZM und mit dem Werkzeug WZG, z.B. zur Bearbeitung eines Werkstücks.

Als erstes wird das Überwachungsmodul 10, 26, 28 aktiviert. Dies erfolgt durch ein Wake-up-Signal, das das Überwachungsmodul 10, 26, 28 veranlasst, von einem Energiesparmodus (Standby-Modus) in einen Überwachungsmodus (auch Messmodus) zu wechseln. Das Wake-up-Signal wird im vorliegenden Beispiel von der Werkzeugmaschine WZM oder von der Rundlaufüberwachungs-Signalschnittstelle SGS an das Überwachungsmodul 10, 26, 28 übertragen. Die vorliegende Offenbarung ist jedoch nicht darauf beschränkt. In anderen Varianten wird das Wake-up-Signal von der weiteren Sensoreinheit B erzeugt, wenn die weiteren für die Beschleunigung repräsentativen Größen in x- und/oder in y-Richtung eine Wake-up-Schwelle überschreiten. Das Wake-up-Signal kann zudem dann erzeugt werden, wenn eine von der Energieversorgungseinheit V erzeugte Energiemenge ein vorgegebenes Maß überschreitet. In diesem Fall wird das Überwachungsmodul 10, 26, 28 erst dann in den Überwachungsmodus versetzt, wenn eine Eigenstromerzeugung im Überwachungsmodul 10, 26, 28 möglich ist. Zusätzlich zur Aktivierung protokolliert das Überwachungsmodul 10, 26, 28 potentielle Schockereignisse wie z.B. Stürze auf den Fußboden oder Kollisionen und speichert diese im Speicher des Überwachungsmoduls 10, 26, 28.

Das Überwachungsmodul 10, 26, 28 überprüft im Überwachungsmodus, ob tatsächlich eine Drehzahl am Überwachungsmodul 10, 26, 28 anliegt. Liegt keine Drehzahl an, wechselt das Überwachungsmodul 10, 26, 28 zurück in den Energiesparmodus. Liegt allerdings tatsächlich eine Drehzahl am Überwachungsmodul 10, 26, 28 an, verbleibt dieses im Überwachungsmodus und signalisiert seine Bereitschaft zur Datenerfassung an die Werkzeugmaschine WZM / die Rundlaufüberwachungs-Signalschnittstelle SGS (vgl. hierzu auch die Beschreibung zu Fig. 16). Wenn sich die Spindel S dreht, wird z.B. durch die Werkzeugmaschine WZM überwacht, ob eine vorgegebene Prüfdrehzahl während der Erfassung stabil ist. Die Erfassung dauert dabei über eine vorgegebene Anzahl von X Umdrehungen der Spindel S (siehe Fig. 18) an, die hier beispielhaft acht Umdrehungen betragen soll. Die vorliegende Offenbarung ist jedoch nicht auf diese exakte Anzahl an Umdrehungen für die Erfassungsdauer beschränkt.

Wenn die überwachte Prüfdrehzahl wesentlich, z.B. um mehr als 10 % von der vorgegebenen Prüfdrehzahl abweicht, werden keine Beschleunigungsgrößen durch die Sensoreinheit 16 erfasst. Bei stabiler Drehzahl werden

EP 4 423 472 B1

hingegen die für die Beschleunigung repräsentativen Größen ax, ay bei der Prüfdrehzahl erfasst. Dann werden die von der Sensoreinheit 16 erfassten Beschleunigungsgrößen ax, ay gefiltert. Zudem werden - vor, nach oder während der Erfassung und Filterung (dies gilt auch für alle anderen Ausführungsbeispiele dieser Offenbarung mit entsprechenden Schritten) die initialen für die Beschleunigung repräsentativen Größen ax_initial, ay_initial, z.B. durch Einlesen der im Kalibrierlauf gemäß Fig. 16 erfassten initialen Größen ax_initial, ay_initial, ermittelt. Es wird die Gesamtbeschleunigung ages bestimmt und mit dem Schwellenwert SW (vgl. auch Fig. 10) verglichen. Liegt die Gesamtbeschleunigung unterhalb des Schwellenwerts SW, wird der Werkzeugmaschine WZM / der Rundlaufüberwachungs-Signalschnittstelle SGS signalisiert, dass kein Rundlauffehler vorliegt (IO). Wenn die Gesamtbeschleunigung ages hingegen gleich wie oder größer als der Schwellenwert SW ist, wird der Werkzeugmaschine WZM / der Rundlaufüberwachungs-Signalschnittstelle SGS signalisiert, dass ein Rundlauffehler vorliegt (NIO). Anschließend wird der Überwachungsmodus deaktiviert, sodass das Überwachungsmodul 10, 26, 28 wieder in den Energiesparmodus wechselt. Das Deaktivieren erfolgt hier beispielhaft auf ein entsprechendes Signal der Werkzeugmaschine WZM / der Rundlaufüberwachungs-Signalschnittstelle SGS hin. Alternativ kann dieses Deaktivieren generell (also gemäß sämtlichen hierin beschriebenen Beispielen) auch automatisch durch das Überwachungsmodul 10, 26, 28, erfolgen, z.B. wenn über einen bestimmten Zeitraum überhaupt keine Beschleunigungsgrößen ermittelt werden, was darauf hindeutet, dass das Überwachungsmodul 10, 26, 28 gerade nicht verwendet wird.

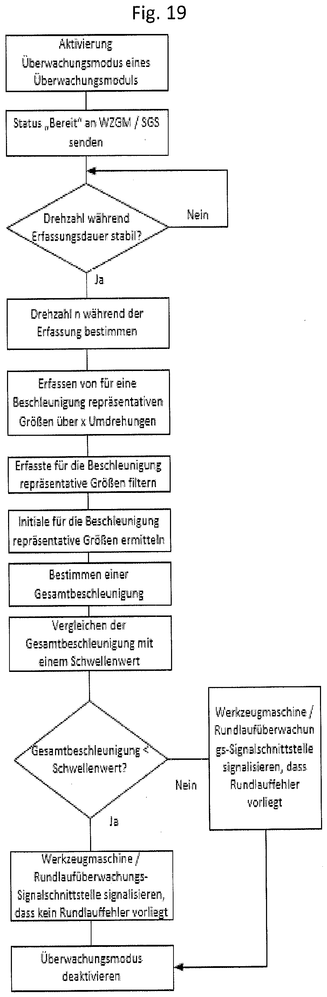

Die Fig. 19 zeigt den Ablauf einer in dem Überwachungsmodul 10, 26, 28 durchgeführten Rundlaufprüfung eines Werkzeugs WZG bei mehreren Prüfdrehzahlen. Dabei rotiert das Überwachungsmodul 10, 26, 28 zusammen mit der Spindel S der Werkzeugmaschine WZM und mit dem Werkzeug WZG, z.B. zur Bearbeitung eines Werkstücks.

Der Ablauf der Fig. 19 unterscheidet sich von dem in Fig. 18 lediglich dadurch, dass das Erfassen der Beschleunigungsgrößen ax, ay, deren Filtern, das Erfassen der initialen Größen ax_initial, ay_initial, das Bestimmen der Gesamtbeschleunigung ages und deren Vergleichen mit dem Schwellenwert SW für mehrere Prüfdrehzahlen durchgeführt werden. Dadurch entsprechen einige Schritte denen der Fig. 18, sodass anstatt einer redundanten Beschreibung hiermit auf die jeweiligen Schritte der Fig. 18 verwiesen wird, die im Rahmen des Ablaufs der Fig. 19 gleichermaßen gelten.

Im Unterschied zur Fig. 18 wird gemäß der Fig. 19 für jeden Erfassungsdurchlauf (Erfassen der Beschleunigungsgrößen etc.) die exakte Prüfdrehzahl n während des Erfassens der für die Beschleunigung repräsentativen Größen ax, ay anhand einer der oben beschriebenen Varianten bestimmt. Zwischen den einzelnen Erfassungsdurchläufen wird die Prüfdrehzahl geändert (z.B. erhöht). Nach der Erhöhung der Prüfdrehzahl wird die Erfassung der Beschleunigungsgrößen ax, ay für die erhöhte Prüfdrehzahl, die Erfassung der exakten Prüfdrehzahl, die Filterung der Beschleunigungsgrößen ax, ay, die Ermittlung der initialen Beschleunigungsgrößen ax_initial, ay_initial, das Bestimmen der Gesamtbeschleunigung ages sowie deren Vergleich mit dem Schwellenwert SW erneut durchgeführt, bis die Beschleunigungsgrößen ax, ay für alle Prüfdrehzahlen erfasst sind.

Das Erhöhen der Prüfdrehzahl kann zeitlich entweder erfolgen, bevor der Werkzeugmaschine WZM / der Rundlaufüberwachungs-Signalschnittstelle SGS signalisiert wird, ob ein Rundlauffehler vorliegt oder nicht. Mit anderen Worten kann der Werkzeugmaschine WZM / der Rundlaufüberwachungs-Signalschnittstelle SGS z.B. in einem einzelnen Datenpaket signalisiert werden, ob ein Rundlauffehler bei einer der Prüfdrehzahlen vorgelegen hat (NIO), oder ob kein Rundlauffehler vorgelegen hat (IO). Alternativ können diese Ergebnisse für jede Prüfdrehzahl einzeln an die Werkzeugmaschine WZM / die Rundlaufüberwachungs-Signalschnittstelle SGS übertragen werden.

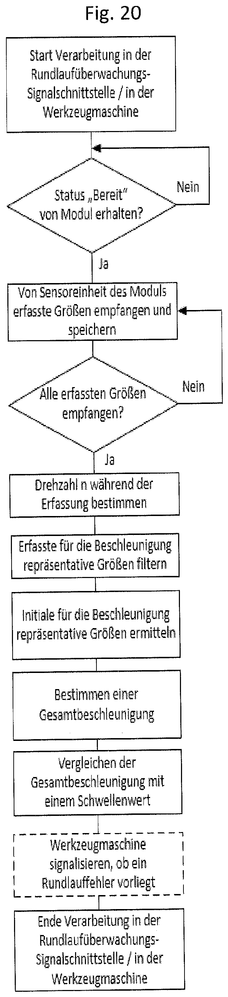

Die Fig. 20 zeigt den Ablauf einer in der Werkzeugmaschine WZG (vgl. Fig. 4) oder in der Rundlaufüberwachungs-Signalschnittstelle SGS (vgl. Fig. 5) durchgeführten Rundlaufprüfung eines Werkzeugs WZG bei einer einzelnen Prüfdrehzahl sowie bei verschiedenen Prüfdrehzahlen. Dabei rotiert eines der Überwachungsmodule 10, 26, 28 zusammen mit der Spindel S der Werkzeugmaschine WZM und mit dem Werkzeug WZG, z.B. zur Bearbeitung eines Werkstücks.

Nachdem die Rundlaufüberprüfung durch die Werkzeugmaschine WZM / die Rundlaufüberwachungs-Signalschnittstelle SGS gestartet wurde, wird darauf gewartet, dass das Überwachungsmodul 10, 26, 28 signalisiert, dass es bereit ist, Beschleunigungsmessungen durchzuführen. Dann findet (dies ist in der Fig. 20 nicht gezeigt) die Erfassung der für die Beschleunigung repräsentativen Größen ax, ay statt (wie z.B. mit Bezug auf Fig. 19 beschrieben). Diese Beschleunigungsgrößen ax, ay werden von der Werkzeugmaschine WZM / der Rundlaufüberwachungs-Signalschnittstelle SGS entweder fortlaufend (wie gemäß der Fig. 20) oder dann, wenn die Erfassung im Überwachungsmodul 10, 26, 28 abgeschlossen ist, empfangen und im Speicher der Werkzeugmaschine WZM / der Rundlaufüberwachungs-Signalschnittstelle SGS gespeichert. Sobald alle erfasste Beschleunigungsgrößen ax, ay und gegebenenfalls zugehörige Prüfdrehzahlen empfangen sind, wird in der Werkzeugmaschine WZM / der Rundlaufüberwachungs-Signalschnittstelle SGS mit der Auswertung begonnen. Dabei werden die Prüfdrehzahl(en) während der Erfassung bestimmt und die für die Beschleunigung repräsentativen Größen ax, ay werden gefiltert. Zudem werden die initialen für die Beschleunigung repräsentativen Größen ax_initial, ay_initial (bei mehreren Prüfdrehzahlen als prüfdrehzahlabhängige Funktion) durch z.B. Auslesen aus dem Speicher der Werkzeugmaschine WZM / der Rundlaufüberwachungs-Signalschnittstelle SGS ermittelt. Es wird für jede Prüfdrehzahl die Gesamtbeschleunigung ages bestimmt und mit einem von der Prüfdrehzahl abhängigen Schwellenwert SW verglichen. Wenn diese Auswertung in der Rundlaufüberwachungs-Signalschnittstelle SGS stattfindet, kann diese der Werkzeugmaschine WZM anschließend signalisieren, ob ein Rundlauffehler des Werkzeugs WZG vorliegt (NIO) oder nicht (IO). Dieser optionale, in der Fig. 20 durch eine gestrichelte Umrahmung dargestellte Schritt entfällt hingegen, wenn die Auswertung in der Werkzeugmaschine WZM vorgenommen wurde. Danach sind der Werkzeugmaschine WZM / der Rundlaufüberwachungs-Signalschnittstelle SGS die Rundlaufeigenschaften des Werkzeugs WZG bei den entsprechenden Prüfdrehzahlen bekannt und die Rundlaufprüfung in der Werkzeugmaschine WZM / der Rundlaufüberwachungs-Signalschnittstelle SGS ist beendet.

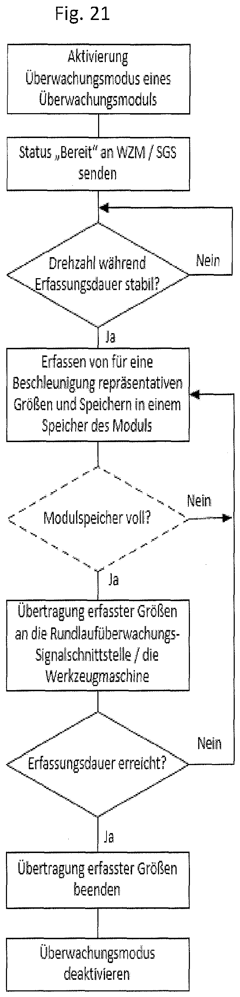

In der Fig. 21 ist ein Teilablauf einer in einer Werkzeugmaschine WZG (vgl. Fig. 4) oder in der Rundlaufüberwachungs-Signalschnittstelle SGS (vgl. Fig. 5) durchgeführten Rundlaufprüfung eines Werkzeugs WZG dargestellt. Dabei rotiert eines der Überwachungsmodule 10, 26, 28 zusammen mit der Spindel S der Werkzeugmaschine WZM und mit dem Werkzeug WZG, z.B. zur Bearbeitung eines Werkstücks. Für detaillierte Ausführungen zu den Schritten der Aktivierung und der Deaktivierung des Überwachungsmoduls 10, 26, 28, der Übertragung des Status "Bereit" an die Werkzeugmaschine / an die Rundlaufüberwachungs-Signalschnittstelle (in der Fig. 21 mit WZM / SGS abgekürzt) sowie die Überprüfung der Stabilität der Drehzahl während der Erfassungsdauer wird z.B. auf die entsprechenden Beschreibungen zur Fig. 18 verwiesen, die hier gleichermaßen gültig sind.

Bei dem Ablauf in Fig. 21 handelt es sich um eine Variante, in der fortlaufend Messgrößen an die Werkzeugmaschine WZM / die Rundlaufüberwachungs-Signalschnittstelle SGS übertragen werden. Die übertragenen Messgrößen können dann z.B. nach dem Ablauf in Fig. 20 ausgewertet werden (in Fig. 21 nicht gezeigt).

Während überwacht wird, ob die Drehzahl stabil ist, werden durch die Sensoreinheit 16 eines der Überwachungsmodule 10, 26, 28 für eine Beschleunigung repräsentative Größen ax, ay erfasst und fortlaufend an die Werkzeugmaschine WZM / die Rundlaufüberwachungs-Signalschnittstelle SGS übertragen. Dies kann gemäß der Fig. 21 direkt im Anschluss an das Erfassen einzelner Beschleunigungsgrößen ax, ay erfolgen. Optional (angedeutet durch die gestrichelte Umrahmung des Schrittes der Fig. 21, in dem geprüft wird, ob der Modulspeicher voll ist) können die Beschleunigungsgrößen ax, ay auch so lange im Speicher des Überwachungsmoduls 10, 26, 28 gespeichert werden, bis dieser Speicher zumindest annähernd voll ist, oder bis eine definierte Datenmenge erreicht ist. Alternativ ist es möglich, dass über eine Zeitdauer definierte Datenpakete, die mehrere Beschleunigungsgrößen ax, ay enthalten, im Modulspeicher zwischengespeichert und nach Ablauf dieser Zeitdauer an die Werkzeugmaschine WZM / die Rundlaufüberwachungs-Signalschnittstelle SGS übertragen werden. Ist die Erfassungsdauer erreicht, wird die Übertragung der erfassten Beschleunigungsgrößen ax, ay beendet. Da bei dieser Variante die Beschleunigungsgrößen ax, ay fortlaufend überwacht werden, kann die Erfassungsdauer z.B. einen gesamten Bearbeitungszyklus eines Werkstücks oder wenigstens eines Teils davon dauem, insbesondere wenn dieser (Teil-)Bearbeitungszyklus unter Verwendung desselben Überwachungsmoduls 10, 26, 28 und mit demselben Werkzeug WZG durchgeführt wird. Alternativ kann die Erfassungsdauer an die Dauer einer oder mehrerer durch das Werkzeug WZG auszuführende Bearbeitungsschritte (Bohren, Fräsen etc.) angepasst sein. Der Modulspeicher kann insbesondere in Fällen, in denen die Erfassungsdauer bekannt ist, so dimensioniert sein, dass er sämtliche während der Erfassungsdauer erfassten Werte aufnehmen kann. Da bei dieser Variante gemäß Fig. 21 ein hoher Energieaufwand notwendig ist, kann das Überwachungsmodul 10, 26, 28 insbesondere mit einer Generatoreinheit zur Eigenenergieerzeugung wie mit Bezug auf die Fig. 14 oder 15 beschrieben ausgestattet sein.

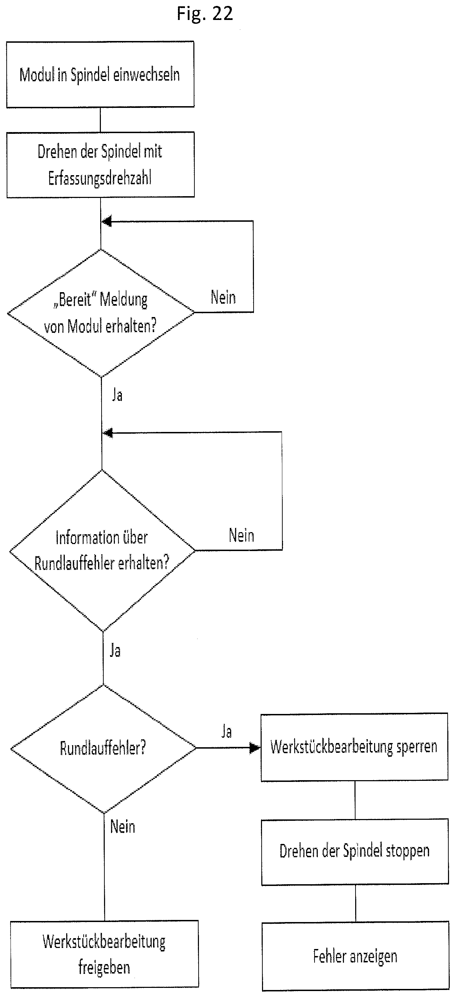

Die Fig. 22 zeigt einen Teilablauf einer in einem der Überwachungsmodule 10, 26, 28 oder in der Rundlaufüberwachungs-Signalschnittstelle SGS durchgeführten Rundlaufprüfung (Auswertung) eines Werkzeugs WZG aus Sicht der Werkzeugmaschine WZM. Dabei rotiert eines der Überwachungsmodule 10, 26, 28 zusammen mit der Spindel S der Werkzeugmaschine WZM und mit dem Werkzeug WZG, z.B. zur Bearbeitung eines Werkstücks.

Zunächst veranlasst die Werkzeugmaschine WZM, dass das Überwachungsmodul 10, 26, 28 in die Spindel S der Werkzeugmaschine WZM eingewechselt wird und dass die Spindel S mit der geforderten Erfassungsdrehzahl gedreht wird (vgl. hierzu auch die Beschreibung der Schritte (i) und (ii) der Fig. 6). Danach wird abgewartet, bis das Überwachungsmodul 10, 26, 28 seine Bereitschaft zur Datenerfassung signalisiert. Für detaillierte Ausführungen zu diesem Schritt wird z.B. auf die entsprechenden Beschreibungen zur Fig. 18 verwiesen, die hier gleichermaßen gültig sind. Wenn das Überwachungsmodul 10, 26, 28 bereit ist, findet die Erfassung der für die Beschleunigung repräsentativen Größen ax, ay durch das Überwachungsmodul 10, 26, 28 statt. Die Auswertung kann wie gemäß den Fig. 18 und 19 im Überwachungsmodul 10, 26, 28 oder wie gemäß Fig. 20 in der Rundlaufüberwachungs-Signalschnittstelle SGS ausgeführt werden (in Fig. 22 nicht gezeigt).

Die Werkzeugmaschine WZM wartet so lange, bis Informationen über einen Rundlauffehler des Werkzeugs WZG vorliegen. Diese Informationen werden von der auswertenden Einheit, also dem Überwachungsmodul 10, 26, 28 oder der Rundlaufüberwachungs-Signalschnittstelle SGS an die Werkzeugmaschine WZM übertragen. Wenn ein Rundlauffehler des Werkzeugs WZG vorliegt (NIO), veranlasst die Werkzeugmaschine WZM, dass das Überwachungsmodul 10, 26, 28 aus der Spindel S ausgewechselt wird und durch Abblasen mit einem Druckluftstrom gereinigt wird (diese Schritte sind in der Fig. 22 weggelassen). Die Werkzeugmaschine WZM veranlasst dann, dass das Überwachungsmodul 10, 26, 28 wieder in die Spindel eingewechselt wird und wartet dann wiederum, bis Informationen über einen Rundlauffehler (es wird erneut eine Rundlaufprüfung gemäß einer der beschriebenen Varianten durchgeführt) des Werkzeugs vorliegen (auch dieser Schritt ist in der Fig. 22 weggelassen). Besteht weiterhin ein Rundlauffehler, sperrt die Werkzeugmaschine WZM zunächst die Werkstückbearbeitung, sodass z.B. keine weiteren nicht maßhaltigen Werkstücke (Ausschuss) produziert werden. Zudem wird das Drehen der Spindel S gestoppt, um die Werkzeugmaschine WZM und das Überwachungsmodul 10, 26, 28 mit montiertem Werkzeug WZG in einen sicheren Zustand zu bringen. Zusätzlich wird ein Fehler, z.B. auf einer Anzeige der Werkzeugmaschine WZM, angezeigt und/oder es wird ein akustisches Fehlersignal ausgegeben. Diese drei Schritte können im Wesentlichen zeitgleich erfolgen. Wenn kein Rundlauffehler vorliegt (NIO), gibt die Werkzeugmaschine WZM die Werkstückbearbeitung frei.

Im Anschluss kann selbstverständlich erneut eines der im Rahmen dieser Offenbarung beschriebenen (Teil-) Verfahren zur Kalibrierung und/oder zur Rundlaufüberprüfung etc. unter Verwendung des Überwachungsmoduls 10, 26, 28 mit montiertem Werkzeug WZG, der Werkzeugmaschine WZM und/oder der Rundlaufüberwachungs-Signalschnittstelle, gegebenenfalls bewirkt durch das beschriebene Computerprogrammprodukt, ausgeführt werden.

Es versteht sich, dass die zuvor erläuterten beispielhaften Ausführungsformen und Varianten nicht abschließend sind und den hier offenbarten Gegenstand nicht beschränken. Insbesondere ist für den Fachmann ersichtlich, dass er die Merkmale der verschiedenen Ausführungsformen und Varianten miteinander kombinieren kann und/oder verschiedene Merkmale der Ausführungsformen und Varianten weglassen kann.

**Patentansprüche**

1.  Rundlaufüberwachungsmodul (10) für ein im Betrieb zu rotierendes Werkzeug (WZG), umfassend:

    - eine Werkzeugschnittstelle (12), eingerichtet zum Aufnehmen des zu rotierenden Werkzeugs (WZG);
    - eine Werkzeugaufnahmeschnittstelle (14), eingerichtet zum Einbringen in eine Werkzeugaufnahme (WZGA) insbesondere einer Werkzeugmaschine (WZM) oder eines Bearbeitungszentrums (BA);
    - eine Sensoreinheit (16), die dem Rundlaufüberwachungsmodul (10) derart zugeordnet ist, dass eine Drehachse (20) des Rundlaufüberwachungsmoduls (10) durch die Sensoreinheit (16) verläuft, wobei die Sensoreinheit (16) dazu eingerichtet ist, für eine Beschleunigung repräsentative Größen ($a_x$, $a_y$) in einer im Wesentlichen normal zur Drehachse (20) des Rundlaufüberwachungsmoduls (10) orientierten Ebene (E) zu erfassen, wenn das Rundlaufüberwachungsmodul (10), insbesondere zusammen mit dem zu rotierenden Werkzeug (WZG) und/oder mit der Werkzeugaufnahme (WZGA), rotiert;
    - eine Recheneinheit (22), die eingerichtet ist, um:

        - die von der Sensoreinheit (16) erfassten für die Beschleunigung repräsentativen Größen ($a_x$, $a_y$) zu empfangen;
        - basierend auf den erfassten für die Beschleunigung repräsentativen Größen ($a_x$, $a_y$) eine Gesamtbeschleunigung ($a_{ges}$) zu bestimmen;
        - die Gesamtbeschleunigung ($a_{ges}$) mit einem von einer Drehzahl des Rundlaufüberwachungsmoduls (10) während des Erfassens der für die Beschleunigung repräsentativen Größen ($a_x$, $a_y$) abhängigen Schwellenwert (SW) zu vergleichen; und
        - zu bestimmen, dass ein Rundlauffehler des zu rotierenden Werkzeugs (WZG), des Rundlaufüberwachungsmoduls (10) und/oder der Werkzeugaufnahme (WZGA) vorliegt, wenn die Gesamtbeschleunigung ($a_{ges}$) größer als der Schwellenwert (SW) ist; und
        - eine Kommunikationseinheit (24), die kommunikativ mit der Recheneinheit (22) verbunden ist und dazu eingerichtet ist, der Werkzeugmaschine (WZM) / dem Bearbeitungszentrum (BA) zu signalisieren, ob ein Rundlauffehler des zu rotierenden Werkzeugs (WZG), des Rundlaufüberwachungsmoduls (10) und/oder der Werkzeugaufnahme (WZGA) vorliegt oder nicht.

2.  Rundlaufüberwachungs-Werkzeugaufnahmemodul (26) für ein im Betrieb zu rotierendes Werkzeug (WZG), umfassend:

    - eine Werkzeugschnittstelle (12), eingerichtet zum Aufnehmen des zu rotierenden Werkzeugs (WZG);
    - eine Werkzeugaufnahme (WZGA), eingerichtet zum Einbringen in eine Spindel (S) einer Werkzeugmaschine (WZM) oder eines Bearbeitungszentrums (BA);
    - eine Sensoreinheit (16), die dem Rundlaufüberwachungs-Werkzeugaufnahmemodul (26) derart zugeordnet ist, dass eine Drehachse (20) des Rundlaufüberwachungs-Werkzeugaufnahmemoduls (26) durch die Sensoreinheit (16) verläuft, wobei die Sensoreinheit (16) dazu eingerichtet ist, für eine Beschleunigung repräsentative Größen ($a_x$, $a_y$) in einer im Wesentlichen normal zur Drehachse (20) des Rundlaufüberwachungs-Werkzeugaufnahmemoduls (26) orientierten Ebene (E) zu erfassen, wenn das Rundlaufüberwachungs-Werkzeugaufnahmemodul (26), insbesondere zusammen mit dem zu rotierenden Werkzeug (WZG) und/oder mit der Spindel (S), rotiert;

- eine Recheneinheit (22), die dazu eingerichtet ist,
- die von der Sensoreinheit (16) erfassten, für die Beschleunigung repräsentativen Größen (ax, ay) zu empfangen;
- basierend auf den erfassten, für die Beschleunigung repräsentativen Größen (ax, ay) eine Gesamtbeschleunigung (ages) zu bestimmen;
- die Gesamtbeschleunigung (ages) mit einem von einer Drehzahl des Rundlaufüberwachungs-Werkzeugaufnahmemoduls (26) während des Erfassens der für die Beschleunigung repräsentativen Größen (ax, ay) abhängigen Schwellenwert (SW) zu vergleichen; und
- zu bestimmen, dass ein Rundlauffehler des zu rotierenden Werkzeugs (WZG) und/oder der Werkzeugaufnahme (WZGA) vorliegt, wenn die Gesamtbeschleunigung (ages) größer als der Schwellenwert (SW) ist; und
- eine Kommunikationseinheit (24), die kommunikativ mit der Recheneinheit (22) verbunden und dazu eingerichtet ist, der Werkzeugmaschine (WZM) / dem Bearbeitungszentrum (BA) zu signalisieren, ob ein Rundlauffehler des zu rotierenden Werkzeugs (WZG) und/oder der Werkzeugaufnahme (WZGA) vorliegt oder nicht.

3. Rundlaufüberwachungs-Werkzeugmodul (28), umfassend:

- ein im Betrieb zu rotierendes Werkzeug (WZG);
- eine Werkzeugaufnahme (WZGA), eingerichtet zum Einbringen in eine Spindel (S) einer Werkzeugmaschine (WZM) oder eines Bearbeitungszentrums (BA);
- eine Sensoreinheit (16), die dem Rundlaufüberwachungs-Werkzeugmodul (28) derart zugeordnet ist, dass eine Drehachse (20) des Rundlaufüberwachungs-Werkzeugmoduls (28) durch die Sensoreinheit (16) verläuft, wobei die Sensoreinheit (16) dazu eingerichtet ist, für eine Beschleunigung repräsentative Größen (ax, ay) in einer im Wesentlichen normal zur Drehachse (20) des Rundlaufüberwachungs-Werkzeugmoduls (28) orientierten Ebene (E) zu erfassen, wenn das Rundlaufüberwachungs-Werkzeugmodul (28), insbesondere zusammen mit der Spindel (S), rotiert;
- eine Recheneinheit (22), dazu eingerichtet,
- die von der Sensoreinheit (16) erfassten, für die Beschleunigung repräsentativen Größen (ax, ay) zu empfangen;
- basierend auf den erfassten für die Beschleunigung repräsentativen Größen (ax, ay) eine Gesamtbeschleunigung (ages) zu bestimmen;
- die Gesamtbeschleunigung (ages) mit einem von einer Drehzahl des Rundlaufüberwachungs-Werkzeugmoduls (28) während des Erfassens der für die Beschleunigung repräsentativen Größen (ax, ay) abhängigen Schwellenwert (SW) zu vergleichen; und
- zu bestimmen, dass ein Rundlauffehler des Rundlaufüberwachungs-Werkzeugmoduls (28) vorliegt, wenn die Gesamtbeschleunigung (ages) größer als der Schwellenwert (SW) ist; und
- eine Kommunikationseinheit (24), die kommunikativ mit der Recheneinheit (22) verbunden ist und dazu eingerichtet ist, der Werkzeugmaschine (WZM) / dem Bearbeitungszentrum (BA) zu signalisieren, ob ein Rundlauffehler des Rundlaufüberwachungs-Werkzeugmoduls (28) vorliegt oder nicht.

4. Werkzeugmaschine (WZM) oder Bearbeitungszentrum (BA), umfassend:

- eine im Betrieb der Werkzeugmaschine (WZM) / des Bearbeitungszentrums (BA) um eine Drehachse (D) zu rotierende Spindel (S), die dazu eingerichtet ist, eine Werkzeugaufnahmeschnittstelle (14) eines Rundlaufüberwachungsmoduls (10) nach Anspruch 1, eine Werkzeugaufnahme (WZGA) eines Rundlaufüberwachungs-Werkzeugaufnahmemoduls (26) nach Anspruch 2 und/oder eine Werkzeugaufnahme (WZGA) eines Rundlaufüberwachungs-Werkzeugmoduls (28) nach Anspruch 3 aufzunehmen und damit operativ zusammenzuwirken;
- eine Kommunikationseinheit (30), die zum Empfangen von Signalen der Kommunikationseinheit (24) des Rundlaufüberwachungsmoduls (10) nach Anspruch 1, der Kommunikationseinheit (24) des Rundlaufüberwachungs-Werkzeugaufnahmemoduls (26) nach Anspruch 2 und/oder der Kommunikationseinheit (24) des Rundlaufüberwachungs-Werkzeugmoduls (28) nach Anspruch 3 eingerichtet ist; und
- eine Steuerung (32), die mit der Kommunikationseinheit (30) der Werkzeugmaschine (WZM) / des Bearbeitungszentrums (BA) verbunden ist und eingerichtet ist, um:

- von der Sensoreinheit (16) des Rundlaufüberwachungsmoduls (10) nach Anspruch 1, der Sensoreinheit (16) des Rundlaufüberwachungs-Werkzeugaufnahmemoduls (26) nach Anspruch 2 und/oder der Sensoreinheit (16) des Rundlaufüberwachungs-Werkzeugmoduls (28) nach Anspruch 3 erfasste, für die Beschleunigung repräsentative Größen (ax, ay) zu empfangen;
- basierend auf den erfassten für die Beschleunigung repräsentativen Größen (ax, ay) eine Gesamtbeschleunigung (ages) zu bestimmen;
- die Gesamtbeschleunigung (ages) mit einem von einer Drehzahl der Spindel (S) während des Erfassens der für die Beschleunigung repräsentativen Größen (ax, ay) abhängigen Schwellenwert (SW) zu vergleichen; und
- zu bestimmen, dass ein Rundlauffehler des Rundlaufüberwachungsmoduls (10) nach Anspruch 1, des Rundlaufüberwachungs-Werkzeugaufnahmemoduls (26) nach Anspruch 2 und/oder des Rundlaufüberwachungs-Werkzeugmoduls (28) nach Anspruch 3 vorliegt, wenn die Gesamtbeschleunigung (ages) größer als der Schwellenwert (SW) ist.

5. Rundlaufüberwachungs-Signalschnittstelle (SGS), umfassend:

- eine Kommunikationseinheit (36), die zum Empfangen von Signalen einer Kommunikationseinheit (24) eines Rundlaufüberwachungsmoduls (10) nach Anspruch 1, einer Kommunikationseinheit (24) eines Rundlaufüberwachungs-Werkzeugaufnahmemoduls (26) nach Anspruch 2 und/oder einer Kommunikationseinheit (24) eines Rundlaufüberwachungs-Werkzeugmoduls (28) nach Anspruch 3, und zum Senden von Signalen an eine Kommunikationseinheit (30) einer Werkzeugmaschine (WZM) / eines Bearbeitungszentrums (BA) nach Anspruch 4 eingerichtet ist; und
- eine Recheneinheit (38), die mit der Kommunikationseinheit (36) der Rundlaufüberwachungs-Signalschnittstelle (SGS) verbunden ist und eingerichtet ist, um:
- von der Sensoreinheit (16) des Rundlaufüberwachungsmoduls (10) nach Anspruch 1, der Sensoreinheit (16) des Rundlaufüberwachungs-Werkzeugaufnahmemoduls (26) nach Anspruch 2 und/oder der Sensoreinheit (16) des Rundlaufüberwachungs-Werkzeugmoduls (28) nach Anspruch 3 erfasste, für die Beschleunigung repräsentative Größen (ax, ay) zu empfangen;
- basierend auf den erfassten, für die Beschleunigung repräsentativen Größen (ax, ay) eine Gesamtbeschleunigung (ages) zu bestimmen;
- die Gesamtbeschleunigung (ages) mit einem von einer Drehzahl der Spindel (S), einer Drehzahl des Rundlaufüberwachungsmoduls (10), einer Drehzahl des Rundlaufüberwachungs-Werkzeugaufnahmemoduls (26) oder einer Drehzahl des Rundlaufüberwachungs-Werkzeugmoduls (28) während des Erfassens der für die Beschleunigung repräsentativen Größen (ax, ay) abhängigen Schwellenwert (SW) zu vergleichen; und
- zu bestimmen, dass ein Rundlauffehler des Rundlaufüberwachungsmoduls (10) nach Anspruch 1, des Rundlaufüberwachungs-Werkzeugaufnahmemoduls (26) nach Anspruch 2 und/oder des Rundlaufüberwachungs-Werkzeugmoduls (28) nach Anspruch 3 vorliegt, wenn die Gesamtbeschleunigung (ages) größer als der Schwellenwert (SW) ist, wobei

die Kommunikationseinheit (36) der Rundlaufüberwachungs-Signalschnittstelle (SGS) eingerichtet ist, der Werkzeugmaschine (WZM) / dem Bearbeitungszentrum (BA) zu signalisieren, ob ein Rundlauffehler des im Betrieb zu rotierenden Werkzeugs (WZG), des Rundlaufüberwachungsmoduls (10), des Rundlaufüberwachungs-Werkzeugaufnahmemoduls (26) und/oder des Rundlaufüberwachungs-Werkzeugmoduls (28) vorliegt oder nicht.

6. Rundlaufüberwachungsverfahren für ein in einer Werkzeugmaschine (WZM) oder in einem Bearbeitungszentrum (BA) im Betrieb zu rotierendes Werkzeug (WZG), umfassend die Schritte:

(i) automatisches Einsetzen eines im Betrieb zu rotierenden Überwachungsmoduls (10; 26; 28) oder des im Betrieb zu rotierenden Überwachungsmoduls (10; 26) und des zu rotierenden Werkzeugs (WZG) in eine Spindel (S) der Werkzeugmaschine (WZM) / des Bearbeitungszentrums (BA), wobei das zu rotierende Überwachungsmodul (10; 26; 28) eine Sensoreinheit (16) umfasst, die dem zu rotierenden Überwachungsmodul (10; 26; 28) derart zugeordnet ist, dass eine Drehachse (20) des zu rotierenden Überwachungsmoduls (10; 26; 28) durch die Sensoreinheit (16) verläuft;
(ii) Drehen der Spindel (S) der Werkzeugmaschine (WZM) / des Bearbeitungszentrums (BA) mit einer vorgegebenen Drehzahl;
(iii) Empfangen und/oder Erfassen von für eine Beschleunigung repräsentativen Größen (ax, ay) in einer im Wesentlichen normal zur Drehachse (20) des zu rotierenden Überwachungsmoduls (10; 26; 28) orientierten Ebene (E), während das zu rotierende Überwachungsmodul (10; 26; 28) mit der vorgegebenen Drehzahl rotiert;
(iv) Bestimmen einer Gesamtbeschleunigung (ages) basierend auf den erfassten für die Beschleunigung repräsentativen Größen (ax, ay);

(v) Vergleichen der Gesamtbeschleunigung (ages) mit einem von einer Drehzahl des zu rotierenden Überwachungsmoduls (10; 26; 28) während des Erfassens der für die Beschleunigung repräsentativen Größen (ax, ay) abhängigen Schwellenwert; und

(vi) Bestimmen, dass ein Rundlauffehler des zu rotierenden Überwachungsmoduls (10; 26; 28) und/oder des zu rotierenden Werkzeugs (WZG) vorliegt, wenn die Gesamtbeschleunigung (ages) größer als der Schwellenwert (SW) ist.

7. Computerprogrammprodukt, umfassend Befehle, die bewirken:

- dass die Werkzeugmaschine (WZM) / das Bearbeitungszentrum (BA) des Anspruchs 4 die Verfahrensschritte (i) bis (vi) nach Anspruch 6 ausführt; und/oder
- dass das Rundlaufüberwachungsmodul (10) des Anspruchs 1, das Rundlaufüberwachungs-Werkzeugaufnahmemodul (26) des Anspruchs 2 oder das Rundlaufüberwachungs-Werkzeugmodul (28) des Anspruchs 3 die Verfahrensschritte (iii) bis (vi) nach Anspruch 6 ausführt; und/oder
- dass die Rundlaufüberwachungs-Signalschnittstelle (SGS) des Anspruchs 5 die Verfahrensschritte (iii) bis (vi) nach Anspruch 6 ausführt.

8. Rundlaufüberwachungsmodul (10) nach Anspruch 1, oder Rundlaufüberwachungs-Werkzeugaufnahmemodul (26) nach Anspruch 2, oder Rundlaufüberwachungs-Werkzeugmodul (28) nach Anspruch 3, des Weiteren umfassend eine weitere Sensoreinheit (B), die von der Drehachse (20) radial beabstandet ist und dazu eingerichtet ist, im Wesentlichen zeitgleich zur Erfassung der für die Beschleunigung repräsentativen Größen (ax, ay) weitere für eine Beschleunigung repräsentative Größen in einer im Wesentlichen normal zur Drehachse (20) orientierten Ebene (E) zu erfassen; und wobei die Recheneinheit (22) weiterhin eingerichtet ist, um: die von der weiteren Sensoreinheit (B) erfassten, wieteren für die Beschleunigung repräsentativen Größen zu empfangen; und aus den weiteren für die Beschleunigung repräsentativen Größen die Drehzahl des Rundlaufüberwachungsmoduls (10) / des Rundlaufüberwachungs-Werkzeugaufnahmemoduls / Rundlaufüberwachungs-Werkzeugmoduls während des Erfassens der für die Beschleunigung repräsentativen Größen (ax, ay) zu bestimmen; und/oder wobei die weitere Sensoreinheit (B) zwei gegenüberliegende, radial zur Drehachse beabstandete Beschleunigungssensoren (B1, B2) umfasst, die in einer normal zur Drehachse orientierten Ebene (E) angeordnet sind, wobei die Beschleunigungssensoren B1, B2 Messachsen aufweisen, die in einer Flucht oder in einer die Drehachse (20) enthaltenden, zur Ebene (E) orthogonalen Ebene liegen, wobei vorzugsweise die Beschleunigungssensoren (B1, B2) Messwerte liefern, aus denen jeweilige Mittelwerte der weiteren für die Beschleunigung repräsentativen Größen gebildet werden; oder wobei die Kommunikationseinheit (24) dazu eingerichtet ist, die weiteren für die Beschleunigung repräsentativen Größen an die Werkzeugmaschine (WZM) / das Bearbeitungszentrum (BA) nach Anspruch 4 und/ oder an die Rundlaufüberwachungs-Signalschnittstelle (SGS) nach Anspruch 5 zu übertragen

9. Rundlaufüberwachungsmodul (10) nach Anspruch 1 oder 8, oder Rundlaufüberwachungs-Werkzeugaufnahmemodul (26) nach Anspruch 2 oder 8, oder Rundlaufüberwachungs-Werkzeugmodul (28) nach Anspruch 3 oder 8, wobei die Recheneinheit (22) dazu eingerichtet ist, die Drehzahl des Rundlaufüberwachungsmoduls (10) / des Rundlaufüberwachungs-Werkzeugaufnahmemoduls (26) / des Rundlaufüberwachungs-Werkzeugmoduls (28) während des Erfassens der für die Beschleunigung repräsentativen Größen basierend auf einer beim Erfassen der für die Beschleunigung repräsentativen Größen (ax, ay) herrschenden Signalfrequenz zu bestimmen, wenn die Drehachse (20) des Rundlaufüberwachungsmoduls (10) / des Rundlaufüberwachungs-Werkzeugaufnahmemoduls (26) / des Rundlaufüberwachungs-Werkzeugmoduls (28) beim Erfassen der für die Beschleunigung repräsentativen Größen (ax, ay) im Wesentlichen horizontal orientiert ist.

10. Rundlaufüberwachungsmodul (10) nach einem der Ansprüche 1, 8 oder 9, oder Rundlaufüberwachungs-Werkzeugaufnahmemodul (26) nach einem der Ansprüche 2, 8 oder 9, oder Rundlaufüberwachungs-Werkzeugmodul (28) nach einem der Ansprüche 3, 8 oder 9, des Weiteren umfassend eine photosensitive Einheit (PE) mit einer am Außenumfang des Rundlaufüberwachungsmoduls (10) / des Rundlaufüberwachungs-Werkzeugaufnahmemoduls (26) / des Rundlaufüberwachungs-Werkzeugmoduls (28) befindlichen photosensitiven Fläche (50), wobei die photosensitive Einheit (PE) dazu eingerichtet ist, während des Erfassens der für die Beschleunigung repräsentativen Größen (ax, ay) Helligkeitsunterschiede zu erfassen, wobei die Recheneinheit (22) dazu eingerichtet ist, die Drehzahl des Rundlaufüberwachungsmoduls (10) / des Rundlaufüberwachungs-Werkzeugaufnahmemoduls (26) / des Rundlaufüberwachungs-Werkzeugmoduls (28) kurz vor, nach und/oder während des Erfassens der für die Beschleunigung repräsentativen Größen (ax, ay) basierend auf einer Frequenz der Helligkeitsunterschiede zu bestimmen.

11. Rundlaufüberwachungsmodul (10) nach einem der Ansprüche 1 oder 8 bis 10, oder Rundlaufüberwachungs-Werkzeugaufnahmemodul (26) nach einem der Ansprüche 2 oder 8 bis 10, oder Rundlaufüberwachungs-Werkzeugmodul (28) nach einem der Ansprüche 3 oder 8 bis 10, wobei wenigstens die Sensoreinheit (16) und vorzugsweise zusätzlich die weitere Sensoreinheit (B) auf einer Sensorplatine (40) angeordnet ist, wobei die Sensorplatine (40) mit einem Platinenhalter (42) verbunden ist, und wobei eine Position des Platinenhalters (42) über Verstellmittel (44) des Rundlaufüberwachungsmoduls (10) / des Rundlaufüberwachungs-Werkzeugaufnahmemoduls (26) / des Rundlaufüberwachungs-Werkzeugmoduls (28) normal zur Drehachse (20) anpassbar ist; und/oder

des Weiteren umfassend eine Energieversorgungseinheit (V), die dazu eingerichtet ist, vorzugsweise in Reaktion auf ein Wake-up-Signal von einem Energiespar- oder Standby-Modus in einen Überwachungsmodus versetzt zu werden und/oder die Sensoreinheit (16), die weitere Sensoreinheit (B), die Recheneinheit (22) und/oder die Kommunikationseinheit (24) vorzugsweise in Reaktion auf ein Wake-up-Signal von einem Energiespar- oder Standby-Modus in einen Überwachungsmodus zu versetzen; und/oder

wobei das Wake-up Signal ein Signal ist oder durch ein Signal ausgelöst wind, das:

- von der weiteren Sensoreinheit (B) erzeugt wird, sobald die weiteren für die Beschleunigung repräsentativen Größen eine Wake-up-Schwelle überschreiten; oder
- über die Kommunikationseinheit (24) von der Werkzeugmaschine (WZM)/ dem Bearbeitungszentrum (BA) nach Anspruch 4 und/ oder von der Rundlaufüberwachungs-Signalschnittstelle (SGS) nach Anspruch 5 empfangen wird; oder
- erzeugt wird, wenn eine von der Energieversorgungseinheit (V) erzeugte Energiemenge ein vorgegebenes Maß überschreitet.

12. Rundlaufüberwachungsmodul nach Anspruch 11, oder Rundlaufüberwachungs-Werkzeugaufnahmemodul nach Anspruch 11, oder Rundlaufüberwachungs-Werkzeugmodul nach Anspruch 11, wobei die Energieversorgungseinheit (V) einen Energiespeicher zum Speichern und/oder eine Generatoreinheit zum Erzeugen elektrischer Energie umfasst; und/oder

wobei die Generatoreinheit einen Stator (60) umfasst, der direkt oder indirekt mit der Werkzeugaufnahme (WZGA) des Rundlaufüberwachungs-Werkzeugaufnahmemoduls (26)/ des Rundlaufüberwachungs-Werkzeugmoduls (28) gekoppelt ist, oder direkt oder indirekt mit der Werkzeugaufnahme (WZGA) nach Anspruch 1 koppelbar ist, und wobei die Generatoreinheit des Weiteren einen Rotor (64) umfasst, der dem Rundlaufüberwachungsmodul (10)/ dem Rundlaufüberwachungs-Werkzeugaufnahmemodul (26)/ Rundlaufüberwachungs-Werkzeugmodul (28) so zugeordnet ist, dass er mit dem Stator (60) derart zusammenwirkt, dass die Generatoreinheit bei einer Rotationsbeschleunigung des Rundlaufüberwachungsmoduls (10)/ Rundlaufüberwachungs-Werkzeugaufnahmemoduls (26)/ Rund-laufüberwachungs-Werkzeugmoduls (28) um die Drehachse (20) elektrische Energie erzeugt; und/oder

wobei die Sensoreinheit (16) dazu eingerichtet ist, zeitlich gesondert von einem Normalbetrieb, in welchem das Rundlaufüberwachungsmodul (10) / das Rundlaufüberwachungs-Werkzeugaufnahmemodul (26)/Rundlaufüberwachungs-Werkzeugmodul (28) insbesondere zusammen mit der Spindel (S) rotiert, initiale für eine Beschleunigung repräsentative Größen (ax_initial, ay_initial) in der im Wesentlichen normal zur Drehachse (20) orientierten Ebene (E) bei einer im Wesentlichen konstanten Drehzahl oder bei mehreren unterschiedlichen im Wesentlichen konstanten Drehzahlen zu erfassen, und wobei die Recheneinheit (22) eingerichtet ist, um die initialen für die Beschleunigung repräsentativen Größen (ax_initial, ay_initial) zusammen mit der entsprechenden Drehzahl / den entsprechenden Drehzahlen in einem Speicher des Rundlaufüberwachungsmoduls (10) / des Rundlaufüberwachungs-Werkzeugaufnahmemoduls (26) / des Rundlaufüberwachungs-Werkzeugmoduls (28) zu speichern, und/oder wobei die Kommunikationseinheit (24) dazu eingerichtet ist, die initialen für die Beschleunigung repräsentativen Größen (ax_initial, ay_initial) vorzugsweise zusammen mit der entsprechenden Drehzahl / den entsprechenden Drehzahlen an die Werkzeugmaschine (WZM)/das Bearbeitungszentrum (BA) nach Anspruch 4 und/oder an die Rundlaufüberwachungs-Signalschnittstelle (SGS) nach Anspruch 5 zu übertragen.

13. Rundlaufüberwachungsmodul (10) nach einem der Ansprüche 1 oder 8 bis 12, oder Rundlaufüberwachungs-Werkzeugaufnahmemodul (26) nach einem der Ansprüche 2 oder 8 bis 12, oder Rundlaufüberwachungs-Werkzeugmodul (28) nach einem der Ansprüche 3 oder 8 bis 12, wobei die Recheneinheit (22) des Weiteren eingerichtet ist, um:

- wenigstens einen weiteren Prozessparameter zu überwachen, wenn das Rundlaufüberwachungsmodul (10), insbesondere zusammen mit dem zu rotierenden Werkzeug (WZG) und/ oder mit der Werkzeugaufnahme (WZGA), rotiert, oder wenn das Rundlaufüberwachungs-Werkzeugaufnahmemodul (26), insbesondere zusammen mit dem zu rotierenden Werkzeug (WZG) und/ oder mit der Spindel (S), rotiert, oder wenn das Rundlaufüberwachungs-Werkzeugmodul (28), insbesondere zusammen mit der Spindel S, rotiert, wobei der wenigstens eine Prozessparameter eine Vibration, eine Temperatur, einen Kühlmitteldruck, einen Kühlmitteldurchfluss, eine Schnittkraft und/ oder ein Drehmoment umfasst, und/ oder

die von der Sensoreinheit (16) erfassten für die Beschleunigung repräsentativen Größen (ax, ay) und/oder die initialen für die Beschleunigung repräsentativen Größen (ax_initial, ay_initial) und/oder die von der weiteren Sensoreinheit (B) erfassten weiteren für die Beschleunigung repräsentativen Größen und/oder die Drehzahl des Rundlaufüberwachungsmoduls (10) / des Rundlaufüberwachungs-Werkzeugaufnahmemoduls (26) / des Rundlaufüberwachungs-Werkzeugmoduls (28) während des Erfassens der für die Beschleunigung repräsentativen Größen (ax, ay) jeweils für ein bestimmtes Zeitfenster von vorzugsweise zwischen 50 ms und 200 ms in Form eines Datenpakets aufzubereiten, wobei das Aufbereiten durch Operationen wie Signalfilterung, Mittelwertbildung und/oder Ermitteln eines Frequenzspektrums pro Zeitfenster erfolgt; und das Datenpaket nach der Aufbereitung an die Werkzeugmaschine (WZM) / das Bearbeitungszentrum (BA) nach Anspruch 4 und/oder an die Rundlaufüberwachungs-Signalschnittstelle (SGS) nach Anspruch 5 zu übertragen.

14. Rundlaufüberwachungsmodul (10) nach Anspruch 13, oder Rundlaufüberwachungs-Werkzeugaufnahmemodul (26) nach Anspruch 13, oder Rundlaufüberwachungs-Werkzeugmodul (28) nach Anspruch 13, wobei die Recheneinheit (22) dazu eingerichtet ist, die Gesamtbeschleunigung (ages) basierend auf einer Subtraktion der für die initiale Beschleunigung repräsentativen Größen (ax_initial, ay_initial) von den entsprechenden für die Beschleunigung repräsentativen Größen (ax, ay) zu bestimmen; und/oder

dann, wenn ein Rundlauffehler vorliegt, den Betrag des Rundlauffehlers und/ oder die Richtung des Rundlauffehlers zu bestimmen; und wobei die Kommunikationseinheit (24) dazu eingerichtet ist, den Betrag und/ oder die Richtung des Rundlauffehlers an die Werkzeugmaschine (WZM)/ das Bearbeitungszentrum (BA) nach Anspruch 4 oder an die Rundlaufüberwachungs-Signalschnittstelle (SGS) nach Anspruch 5 zu übertragen; und/ oder wobei die Kommunikationseinheit (24) dazu eingerichtet ist, dann, wenn ein Rundlauffehler vorliegt, der Werkzeugmaschine (WZM)/ dem Bearbeitungszentrum (BA) nach Anspruch 4 und/ oder der Rundlaufüberwachungs-Signalschnitt-stelle (SGS) nach Anspruch 5 das Vorliegen des Rundlauffehlers zu signalisieren, während das Rundlaufüberwachungsmodul (10)/ das Rundlaufüberwachungs-Werkzeugaufnahmemodul (26)/ das Rundlaufüberwachungs-Werkzeugmodul (28), insbesondere zusammen mit der Spindel (S), rotiert; und/oder

wobei das Modul dazu eingerichtet ist, mittels vordefinierter Drehzahl-Profile Funktionen zu erkennen, die durch das Modul auszuführen oder in anderen Modulen oder Baugruppen anzustoßen sind, wobei die vordefinierten Drehzahl-Profile wenigstens (i) eine Drehzahl, (ii) eine Dauer einer vordefinierten Drehzahl(-abfolge), (iii) eine Steigung einer Änderung von einer Drehzahlstufe zu einer nächsten Drehzahlstufe und/ oder (iv) eine Dauer einer Änderung von einer Drehzahlstufe zu einer nächsten Drehzahlstufe der Spindel der Werkzeugmaschine, insbesondere über eine Auswertung der Generatorspannung detektiert, umfassen, und wobei insbesondere die Funktionen "Anlem- oder Pairing-Vorgang ausführen", "Kalibrier-Vorgang ausführen", "Aufwachen- oder Wake-up-Signal erzeugen", "Überwachungs- oder Messmodus einnehmen", und/oder "Tiefschlaf- oder Standby-Modus einnehmen" umfasst sein können und wobei das Erfassen der für die Beschleunigung repräsentativen Größen (ax, ay), das Erfassen der weiteren für die Beschleunigung repräsentativen Größen, das Bestimmen der Gesamtbeschleunigung (ages), das Bestimmen, ob ein Rundlauffehler vorliegt und das Signalisieren, ob ein Rundlauffehler vorliegt, erst dann beginnt, wenn eine definierte Drehzahl erreicht ist, **dadurch gekennzeichnet, dass** während der Auswertezeit die Spindel-Drehzahl im Wesentlichen konstant ist oder innerhalb eines Bereichs von höchstens 10 % der Drehzahl variiert.

## Claims

1. Concentricity monitoring module (10) for a tool (WZG) to be rotated during operation, comprising:

   - a tool interface (12) designed to receive the tool (WZG) to be rotated;
   - a tool mounting interface (14) designed to be inserted into a tool holder (WZGA), in particular of a machine tool (WZM) or a machining center (BA);
   - a sensor unit (16) which is assigned to the concentricity monitoring module (10) in such a way that a rotational axis (20) of the concentricity monitoring module (10) passes through the sensor unit (16), wherein the sensor unit (16) is designed to detect quantities ($a_x$, $a_y$) representative of acceleration in a plane (E) oriented essentially normal to the axis of rotation (20) of the concentricity monitoring module (10) when the concentricity monitoring module (10) rotates, in particular together with the rotatable tool (WZG) and/or with the tool holder (WZGA);
- a computing unit (22) which is designed to:

- receive the acceleration-representative variables ($a_x$, $a_y$) detected by the sensor unit (16);
- determine a total acceleration ($a_{ges}$) based on the detected acceleration-representative variables ($a_x$, $a_y$);
- compare the total acceleration ($a_{ges}$) with a threshold value dependent on a rotational speed of the concentricity monitoring module (10) during detection of the quantities ($a_x$, $a_y$) representative of acceleration (SW) dependent on a rotational speed of the concentricity monitoring module (10) during the detection of the quantities (ax, ay) representative of acceleration; and
- determining that a rotary speed error of the rotary tool (WZG), the concentricity monitoring module (10) and/or the tool holder (WZGA) is present if the total acceleration ($a_{ges}$) is greater than the threshold value (SW); and
- a communication unit (24) which is connected communicatively to the computing unit (22) and is designed to signal to the machine tool (WZM) / the machining center (BA) whether or not there is a concentricity error of the rotating tool (WZG), the concentricity monitoring module (10) and/or the tool holder (WZGA).

2. Concentricity monitoring tool holder module (26) for a tool (WZG) to be rotated during operation, comprising:

- a tool interface (12) designed to hold the tool (WZG) to be rotated;
- a tool holder (WZGA) designed to be inserted into a spindle (S) of a machine tool (WZM) or a machining center (BA);
- a sensor unit (16) which is assigned to the tool holder module (26) for monitoring concentricity in such a way that a rotational axis (20) of the rotary concentricity monitoring tool holder module (26) passes through the sensor unit (16), wherein the sensor unit (16) is designed to detect quantities representative of acceleration ($a_x$, $a_y$) in a plane (E) oriented substantially normal to the axis of rotation (20) of the concentricity monitoring tool holder module (26) when the concentricity monitoring tool holder module (26), in particular together with the tool (WZG) to be rotated and/or with the spindle (S), rotates;
- a computing unit (22) which is designed to
- receive the quantities ($a_x$, $a_y$) representative of acceleration detected by the sensor unit (16);
- determine a total acceleration ($a_{ges}$) based on the detected quantities ($a_x$, $a_y$) representative of acceleration;
- comparing the total acceleration ($a_{ges}$) with a threshold value (SW) dependent on a rotational speed of the rotary monitoring tool holder module (26) during detection of the quantities ($a_x$, $a_y$) representative of the acceleration; and
- determining that a concentricity error of the rotating tool (WZG) and/or the tool holder (WZGA) is present if the total acceleration ($a_{ges}$) is greater than the threshold value (SW); and
- a communication unit (24) which is connected in a communicative manner to the computing unit (22) and is designed to signal to the machine tool (WZM) / machining center (BA) whether or not there is a concentricity error of the rotating tool (WZG) and/or the tool holder (WZGA).

3. Tool concentricity monitoring module (28), comprising:

- a tool (WZG) to be rotated during operation;
- a tool holder (WZGA) designed to be inserted into a spindle (S) of a machine tool (WZM) or a machining center (BA);
- a sensor unit (16) which is assigned to the concentricity monitoring tool module (28) in such a way that a rotational axis (20) of the concentricity monitoring tool module (28) passes through the sensor unit (16), wherein the sensor unit (16) is designed to detect quantities representative of acceleration ($a_x$, $a_y$) representative of acceleration in a plane (E) oriented essentially normal to the axis of rotation (20) of the concentricity monitoring tool module (28) when the concentricity monitoring tool module (28), in particular together with the spindle (S);
- a computing unit (22) designed to
- receive the quantities ($a_x$, $a_y$) representative of acceleration detected by the sensor unit (16);
- determining a total acceleration ($a_{ges}$) based on the detected quantities ($a_x$, $a_y$) representative of the acceleration;
- comparing the total acceleration ($a_{ges}$) with a threshold value (SW) dependent on a rotational speed of the concentricity monitoring tool module (28) during detection of the quantities ($a_x$, $a_y$) representative of the acceleration; and

44

- determining that a concentricity error of the concentricity monitoring tool module (28) is present if the total acceleration ($a_{ges}$) is greater than the threshold value (SW); and
- a communication unit (24) which is connected in a communicative manner to the computing unit (22) and is designed to signal to the machine tool (WZM) / machining center (BA) whether or not a concentricity error of the concentricity monitoring tool module (28) is present or not.

4. Machine tool (WZM) or machining center (BA), comprising:

- a spindle (S) rotatable about an axis of rotation (D) during operation of the machine tool (WZM) / machining center (BA), which is designed to hold a tool holder interface (14) of a concentricity monitoring module (10) according to claim 1, a tool holder (WZGA) of a concentricity monitoring tool holder module (26) according to claim 2 and/or a tool holder (WZGA) of a concentricity monitoring tool module (28) according to claim 3 and to interact operatively therewith;
- a communication unit (30) for receiving signals from the communication unit (24) of the concentricity monitoring module (10) according to claim 1, the communication unit (24) of the concentricity monitoring tool holder module (26) according to claim 2 and/or the communication unit (24) of the concentricity monitoring tool module (28) according to claim 3; and
- a control (32) which is connected to the communication unit (30) of the machine tool (WZM) / machining center (BA) and is designed to:

    - receive signals from the sensor unit (16) of the concentricity monitoring module (10) according to claim 1, the sensor unit (16) of the concentricity monitoring tool holder module (26) according to claim 2 and/or the sensor unit (16) of the concentricity monitoring tool module (28) according to claim 3;
    - determining a total acceleration ($a_{ges}$) based on the detected quantities ($a_x$, $a_y$) representative of the acceleration;
    - comparing the total acceleration ($a_{ges}$) with a threshold value (SW) dependent on a rotational speed of the spindle (S) during detection of the quantities ($a_x$, $a_y$) representative of the acceleration; and
    - determining that a concentricity error of the concentricity monitoring module (10) according to claim 1, of the concentricity monitoring tool holder monitoring module (26) according to claim 2 and/or the concentricity monitoring tool module (28) according to claim 3 is present if the total acceleration ($a_{ges}$) is greater than the threshold value (SW).

5. Rotary monitoring signal interface (SGS), comprising:

- a communication unit (36) for receiving signals from a communication unit (24) of a concentricity monitoring module (10) according to claim 1, a communication unit (24) of a rotary monitoring tool holder module (26) according to claim 2 and/or a communication unit (24) of a rotary monitoring tool module (28) according to claim 3, and for sending signals to a communication unit (30) of a machine tool (WZM) / machining center (BA) according to claim 4; and
- a computing unit (38) connected to the communication unit (36) of the concentricity monitoring signal interface (SGS) and designed to:

    - receive signals from the sensor unit (16) of the concentricity monitoring module (10) according to claim 1, the sensor unit (16) of the concentricity monitoring tool holder module (26) according to claim 2 and/or the sensor unit (16) of the concentricity monitoring tool module (28) according to claim 3;
    - determining a total acceleration ($a_{ges}$) based on the detected quantities ($a_x$, $a_y$) representative of the acceleration;
    - comparing the total acceleration ($a_{ges}$) with a dependent threshold value (SW) determined from a rotational speed of the spindle (S), a rotational speed of the concentricity monitoring module (10), a rotational speed of the concentricity monitoring tool holder module (26) or a rotational speed of the concentricity monitoring tool module (28) during the detection of the quantities ($a_x$, $a_y$) representative of the acceleration; and
    - determining that a concentricity error of the concentricity monitoring module (10) according to claim 1, of the concentricity monitoring tool holder module (26) according to claim 2 and/or of the concentricity monitoring tool module (28) according to claim 3 is present if the total acceleration ($a_{ges}$) is greater than the threshold value (SW), wherein

the communication unit (36) of the concentricity monitoring signal interface (SGS) is configured to signal to the machine tool (WZM) / the machining center (BA) whether or not there is a concentricity error of the tool (WZG) to be rotated during operation, the concentricity monitoring module (10), the concentricity monitoring tool holder module (26) and/or the concentricity monitoring tool module (28).

6. Concentricity monitoring method for a tool (WZG) to be rotated during operation in a machine tool (WZM) or in a machining center (BA), comprising the steps:

(i) automatically inserting a monitoring module (10; 26; 28) to be rotated during operation or the monitoring module (10; 26) and the tool (WZG) to be rotated into a spindle (S) of the machine tool (WZM) / machining center (BA), wherein the monitoring module (10; 26; 28) comprises a sensor unit (16) which is assigned to the monitoring module (10; 26; 28) to be rotated in such a way that a rotational axis (20) of the monitoring module (10; 26; 28) to be rotated passes through the sensor unit (16);
(ii) rotating the spindle (S) of the machine tool (WZM) / machining center (BA) at a predetermined speed;
(iii) Receiving and/or detecting quantities ($a_x$, $a_y$) representative of acceleration in a plane (E) oriented essentially normal to the axis of rotation (20) of the monitoring module (10; 26; 28) to be rotated, while the monitoring module (10; 26; 28) to be rotated rotates at the predetermined rotational speed;
(iv) determining a total acceleration ($a_{ges}$) based on the detected quantities ($a_x$, $a_y$) representative of the acceleration;
(v) comparing the total acceleration (ages) with a threshold value dependent on a rotational speed of the monitoring module (10; 26; 28) to be rotated during the detection of the quantities ($a_x$, $a_y$) representative of the acceleration ($a_x$, $a_y$) during the detection of the quantities representative of the acceleration; and
(vi) determining that a rotational error of the monitoring module (10; 26; 28) to be rotated and/or of the tool (WZG) to be rotated is present if the total acceleration ($a_{ges}$) is greater than the threshold value (SW).

7. Computer program product comprising instructions that cause:

- the machine tool (WZM) / machining center (BA) of claim 4 to perform the process steps (i) to (vi) according to claim 6; and/or
- the concentricity monitoring module (10) of claim 1, the concentricity monitoring tool holder module (26) of claim 2 or the concentricity monitoring tool module (28) of claim 3 performs the process steps (iii) to (vi) according to claim 6; and/or
- that the concentricity monitoring signal interface (SGS) of claim 5 performs the process steps (iii) to (vi) according to claim 6.

8. A concentricity monitoring module (10) according to claim 1, or a concentricity monitoring tool holder module (26) according to claim 2, or a concentricity monitoring tool module (28) according to claim 3, further comprising a further sensor unit (B) which is radially spaced from the axis of rotation (20) and is designed to detect, essentially simultaneously with the detection of the quantities ($a_x$, $a_y$) representative of acceleration, further quantities representative of acceleration in a plane (E) oriented essentially normal to the axis of rotation (20); and wherein the computing unit (22) is further designed to: receive the further quantities representative of acceleration detected by the further sensor unit (B); and to determine the rotational speed of the concentricity monitoring module (10)/rotation monitoring tool holder module/rotation monitoring tool module during the detection of the quantities representative of acceleration ($a_x$, $a_y$) from the further quantities representative of acceleration; and/or wherein the further sensor unit (B) comprises two opposing acceleration sensors (B1, B2) spaced radially from the axis of rotation, which are arranged in a plane (E) oriented normally to the axis of rotation, wherein the acceleration sensors B1, B2 have measuring axes which lie in a line or in a plane orthogonal to the plane (E) containing the axis of rotation (20) containing the axis of rotation (20) and orthogonal to the plane (E), wherein the acceleration sensors (B1, B2) preferably supply measured values from which respective mean values of the further quantities representative of the acceleration are formed; or wherein the communication unit (24) is designed to transmit the other variables representative of acceleration to the machine tool (WZM) / machining center (BA) according to claim 4 and/or to the concentricity monitoring signal interface (SGS) according to claim 5

9. Concentricity monitoring module (10) according to claim 1 or 8, or concentricity monitoring tool holder module (26) according to claim 2 or 8, or concentricity monitoring tool module (28) according to claim 3 or 8, wherein the computing unit (22) is designed to determine the rotational speed of the concentricity monitoring module (10) / the concentricity monitoring tool holder module (26) / the concentricity monitoring tool module (28) during the detection of the quantities representative of the acceleration based on a signal frequency prevailing during the detection of the quantities ($a_x$, $a_y$) representative of the acceleration, when the rotational axis (20) of the concentricity monitoring module (10) / the concentricity monitoring tool holder module (26) / the concentricity monitoring tool module (28) is oriented substantially horizontally when detecting the quantities ($a_x$, $a_y$) representative of acceleration.

10. Concentricity monitoring module (10) according to one of claims 1, 8 or 9, or rotary concentricity monitoring tool holder module (26) according to one of claims 2, 8 or 9, or a concentricity monitoring tool module (28) according to one of claims 3, 8 or 9, further comprising a photosensitive unit (PE) with a photosensitive surface (50) located on the outer circumference of the concentricity monitoring module (10) / the concentricity monitoring tool holder module (26) / the concentricity monitoring tool module (28), wherein the photosensitive unit (PE) is designed to detect brightness differences during the detection of the quantities ($a_x$, $a_y$) representative of the acceleration, wherein the computing unit (22) is designed to detect the rotational speed of the concentricity monitoring module (10) / the concentricity monitoring tool holder module (26) / the concentricity monitoring tool module (28) shortly before, after and/or during the detection of the quantities ($a_x$, $a_y$) representative of the acceleration based on a frequency of the differences in brightness.

11. Concentricity monitoring module (10) according to one of claims 1 or 8 to 10, or rotary concentricity monitoring tool holder module (26) according to one of claims 2 or 8 to 10, or rotary concentricity monitoring tool module (28) according to one of claims 3 or 8 to 10, wherein at least the sensor unit (16) and preferably additionally the further sensor unit (B) is arranged on a sensor board (40), wherein the sensor board (40) is connected to a board holder (42), and wherein a position of the board holder (42) is adjustable via adjustment means (44) of the concentricity monitoring module (10) / the concentricity monitoring tool holder module (26) / the concentricity monitoring tool module (28) normal to the axis of rotation (20); and/or

further comprising an energy supply unit (V) which is designed to be switched, preferably in response to a wake-up signal, from an energy-saving or standby mode into a monitoring mode and/or to switch the sensor unit (16), the further sensor unit (B), the computing unit (22) and/or the communication unit (24) preferably in response to a wake-up signal from an energy-saving or standby mode into a monitoring mode; and/or
wherein the wake-up signal is a signal or is triggered by a signal which:

- is generated by the further sensor unit (B) as soon as the further quantities representative of the acceleration exceed a wake-up threshold; or
- is received via the communication unit (24) from the machine tool (WZM)/machining center (BA) according to claim 4 and/or from the concentricity monitoring signal interface (SGS) according to claim 5; or
- is generated when an amount of energy generated by the power supply unit (V) exceeds a predetermined level.

12. Concentricity monitoring module according to claim 11, or concentricity monitoring tool holder module according to claim 11, or concentricity monitoring tool module according to claim 11, wherein the power supply unit (V) comprises an energy storage device for storing and/or a generator unit for generating electrical energy; and/or

wherein the generator unit comprises a stator (60) which is coupled directly or indirectly to the tool holder (WZGA) of the concentricity monitoring tool holder module (26)/the concentricity monitoring tool module (28), or is directly or indirectly couplable to the tool holder (WZGA) according to claim 1, and wherein the generator unit further comprises a rotor (64) which is assigned to the concentricity monitoring module (10)/the concentricity monitoring tool holder module (26)/ rotational monitoring tool module (28) such that it interacts with the stator (60) in such a way that the generator unit generates electrical energy around the axis of rotation (20) when the rotational monitoring module (10)/rotational monitoring tool holder module (26)/ rotational monitoring tool module (28) about the axis of rotation (20) generates electrical energy; and/or
wherein the sensor unit (16) is designed to be separated in time from normal operation, in which the rotational monitoring module (10)/ the concentricity monitoring tool holder module (26)/concentricity monitoring tool module (28) rotates, in particular together with the spindle (S), initial values ($a_{x\_initial}$, $a_{y\_initial}$) representative of acceleration ($a_{x\_initial}$, $a_{y\_initial}$) in the plane (E) oriented essentially normal to the axis of rotation (20) at an essentially constant speed or at several different essentially constant speeds, and wherein the computing unit (22) is designed to store the initial quantities ($a_{x\_initial}$, $a_{y\_initial}$) representative of acceleration ($a_{x\_initial}$, $a_{y\_initial}$) together with the corresponding rotational speed(s) in a memory of the concentricity monitoring module (10)/the concentricity monitoring tool holder module (26)/the concentricity monitoring tool module (28) and/or the concentricity monitoring tool module (28), and/or wherein the communication unit (24) is designed to store the initial quantities ($a_{x\_initial}$, $a_{y\_initial}$) representative of the acceleration ($a_{x\_initial}$, $a_{y\_initial}$) preferably together with the corresponding speed(s) to the machine tool (WZM)/machining center (BA) according to claim 4 and/or to the concentricity monitoring signal interface (SGS) according to claim 5.

**13.** Concentricity monitoring module (10) according to one of claims 1 or 8 to 12, or concentricity monitoring tool holder module (26) according to one of claims 2 or 8 to 12, or concentricity monitoring tool module (28) according to one of claims 3 or 8 to 12, wherein the computing unit (22) is further configured to:

- monitor at least one further process parameter when the concentricity monitoring module (10), in particular together with the tool (WZG) to be rotated and/or with the tool holder (WZGA), rotates, or when the concentricity monitoring tool holder module (26), in particular together with the tool (WZG) to be rotated and/or with the spindle (S), rotates, or when the concentricity monitoring tool module (28), in particular together with the spindle S, rotates, wherein the at least one process parameter comprises a vibration, a temperature, a coolant pressure, a coolant flow, a cutting force and/or a torque, and/or

the quantities ($a_x$, $a_y$) representative of the acceleration detected by the sensor unit (16) and/or the initial quantities ($a_x$, $a_y$) representative of the acceleration detected by the further sensor unit (B) and/or the quantities representative of the acceleration detected by the further sensor unit (B) and/or the rotational speed of the concentricity tool monitoring module (28) are compared with each other. ($a_{x\_initial}$, $a_{y\_initial}$) and/or the further quantities representative of acceleration detected by the further sensor unit (B) and/or the rotational speed of the concentricity monitoring module (10)/the concentricity monitoring tool holder module (26)/the concentricity monitoring tool module (28) during the detection of the quantities representative of acceleration ($a_x$, $a_y$) for a specific time window of preferably between 50 ms and 200 ms in the form of a data packet, wherein the processing is carried out by operations such as signal filtering, averaging and/or determining a frequency spectrum per time window; and transmitting the data packet after processing to the machine tool (WZM) / machining center (BA) according to claim 4 and/or to the concentricity monitoring signal interface (SGS) according to claim 5.

**14.** Concentricity monitoring module (10) according to claim 13, or concentricity monitoring tool holder module (26) according to claim 13, or concentricity monitoring tool module (28) according to claim 13, wherein the computing unit (22) is designed to determine the total acceleration ($a_{ges}$) based on a subtraction of the quantities representative of the initial acceleration ($a_{x\_initial}$, $a_{y\_initial}$) from the corresponding quantities representative of the acceleration ($a_x$, $a_y$); and/or

then, if a concentricity error is present, to determine the amount of the concentricity error and/or the direction of the concentricity error; and wherein the communication unit (24) is designed to transfer the amount and/or the direction of the round-trip error to the machine tool (WZM)/machining center (BA) according to claim 4 or to the round-trip monitoring signal interface (SGS) according to claim 5; and/or wherein the communication unit (24) is designed to signal the presence of the concentricity error to the machine tool (WZM)/machining center (BA) according to claim 4 and/or to the concentricity monitoring signal interface (SGS) according to claim 5, while the rotary position monitoring module (10)/the rotary position monitoring tool holder module (26)/the concentricity monitoring tool module (28), in particular together with the spindle (S), rotates; and/or
wherein the module is designed to use predefined speed profiles to recognize functions that are to be performed by the module or triggered in other modules or assemblies, wherein the predefined speed profiles comprise at least (i) a speed, (ii) a duration of a predefined speed(-sequence), (iii) a gradient of a change from one speed stage to the next speed stage, and/or (iv) a duration of a change from one speed stage to the next speed stage of the spindle of the machine tool, in particular by evaluating the generator voltage, and wherein, in particular, the functions "execute teach-in or pairing process," "execute calibration process," "generate wake-up signal," "entering monitoring or measurement mode," and/or "entering deep sleep or standby mode" can be included, and wherein the detection of the quantities representative of acceleration ($a_x$, $a_y$), the detection of the further quantities representative of acceleration, the determination of the total acceleration ($a_{ges}$), determining whether a running error is present, and signaling whether a running error is present only begins when a defined speed is reached, **characterized in that** during the evaluation time, the spindle speed is essentially constant or varies within a range of at most 10% of the speed.

### Revendications

**1.** Module de surveillance de la concentricité (10) pour un outil (WZG) destiné à tourner pendant son fonctionnement, comprenant:

- une interface d'outil (12) conçue pour recevoir l'outil (WZG) destiné à tourner;
- une interface de réception d'outil (14) conçue pour être introduite dans un logement d'outil (WZGA), en particulier d'une machine-outil (WZM) ou d'un centre d'usinage (BA);
- une unité de capteur (16) qui est associée au module de surveillance de la concentricité (10) de telle sorte qu'un axe de rotation (20) du module de surveillance de la concentricité (10) passe à travers l'unité de capteur (16), l'unité de capteur (16) étant conçue pour détecter des grandeurs représentatives d'une accélération ($a_x$, $a_y$) dans un plan (E) orienté essentiellement perpendiculairement à l'axe de rotation (20) du module de surveillance de la concentricité (10) lorsque le module de surveillance de la concentricité (10) tourne, en particulier avec l'outil rotatif (WZG) et/ou avec le porte-outil (WZGA);
- une unité de calcul (22) qui est conçue pour:

- recevoir les grandeurs représentatives de l'accélération ($a_x$, $a_y$) détectées par l'unité de détection (16);
- déterminer une accélération totale ($a_{ges}$) sur la base des grandeurs représentatives de l'accélération ($a_x$, $a_y$) détectées;
- comparer l'accélération totale ($a_{ges}$) à une valeur seuil (SW) dépendant d'une vitesse de rotation du module de surveillance de la concentricité (10) pendant la détection des grandeurs représentatives de l'accélération ($a_x$, $a_y$) dépendant d'une vitesse de rotation du module de surveillance de la concentricité (10) pendant la détection des grandeurs représentatives de l'accélération (ax, ay); et
- déterminer qu'il existe une erreur de rotation de l'outil rotatif (WZG), du module de surveillance de la concentricité (10) et/ou du porte-outil (WZGA) lorsque l'accélération totale ($a_{ges}$) est supérieure à la valeur seuil (SW); et
- une unité de communication (24) qui est reliée de manière communicative à l'unité de calcul (22) et qui est conçue pour signaler à la machine-outil (WZM) / au centre d'usinage (BA) si une erreur de concentricité de l'outil rotatif (WZG), du module de surveillance de la concentricité (10) et/ou du porte-outil (WZGA) est présente ou non.

2. Module de surveillance de la concentricité d'un porte-outil (26) pour un outil (WZG) destiné à tourner pendant son fonctionnement, comprenant:

- une interface d'outil (12) conçue pour recevoir l'outil (WZG) destiné à tourner;
- un porte-outil (WZGA) conçu pour être inséré dans une broche (S) d'une machine-outil (WZM) ou d'un centre d'usinage (BA);
- une unité de capteur (16) qui est associée au module de porte-outil de surveillance de la concentricité (26) de telle sorte qu'un axe de rotation (20) du module porte-outil de surveillance de la concentricité (26) passe à travers l'unité de capteur (16), l'unité de capteur (16) étant conçue pour détecter des grandeurs représentatives d'une accélération ($a_x$, $a_y$) représentatives d'une accélération dans un plan (E) orienté essentiellement perpendiculairement à l'axe de rotation (20) du module de support d'outil de surveillance de la rotation angulaire (26) lorsque le module de support d'outil de surveillance de la rotation angulaire (26), en particulier conjointement avec l'outil rotatif (WZG) et/ou avec la broche (S), tourne;
- une unité de calcul (22) qui est conçue pour
- recevoir les grandeurs représentatives de l'accélération ($a_x$, $a_y$) détectées par l'unité de détection (16);
- déterminer une accélération totale ($a_{ges}$) sur la base des grandeurs représentatives de l'accélération ($a_x$, $a_y$) détectées;
- comparer l'accélération totale ($a_{ges}$) à une valeur seuil (SW) dépendant d'une vitesse de rotation du module de fixation d'outil de surveillance de la rotation (26) pendant la détection des grandeurs représentatives de l'accélération ($a_x$, $a_y$); et
- déterminer qu'il existe une erreur de rotation de l'outil rotatif (WZG) et/ou du porte-outil (WZGA) lorsque l'accélération totale ($a_{ges}$) est supérieure à la valeur seuil (SW); et
- une unité de communication (24) qui est reliée de manière communicative à l'unité de calcul (22) et qui est conçue pour signaler à la machine-outil (WZM) / au centre d'usinage (BA) s'il existe ou non une erreur de concentricité de l'outil à faire tourner (WZG) et/ou du porte-outil (WZGA).

3. Module d'outil de surveillance de la concentricité (28), comprenant:

- un outil (WZG) destiné à tourner pendant le fonctionnement;
- un porte-outil (WZGA) conçu pour être inséré dans une broche (S) d'une machine-outil (WZM) ou d'un centre d'usinage (BA);
- une unité de capteur (16) qui est associée au module d'outil de surveillance de la concentricité (28) de telle sorte qu'un axe de rotation (20) du module d'outil de surveillance de la concentricité (28) passe par l'unité de capteur (16), l'unité de capteur (16) étant conçue pour détecter des grandeurs représentatives d'une accélération ($a_x$, $a_y$)

représentatives d'une accélération dans un plan (E) orienté essentiellement normalement à l'axe de rotation (20) du module d'outil de surveillance de la rotation (28) lorsque le module d'outil de surveillance de la rotation (28), en particulier avec la broche (S);
- une unité de calcul (22) conçue pour
- recevoir les grandeurs ($a_x$, $a_y$) représentatives de l'accélération détectées par l'unité de détection (16);
- déterminer une accélération totale ($a_{ges}$) sur la base des grandeurs ($a_x$, $a_y$) représentatives de l'accélération détectées;
- comparer l'accélération totale ($a_{ges}$) à une valeur seuil (SW) dépendant d'une vitesse de rotation du module d'outil de surveillance de la concentricité (28) pendant la détection des grandeurs ($a_x$, $a_y$) représentatives de l'accélération; et
- déterminer qu'il existe une erreur de rotation du module de surveillance de la rotation (28) lorsque l'accélération totale ($a_{ges}$) est supérieure à la valeur seuil (SW); et
- une unité de communication (24) qui est reliée de manière communicative à l'unité de calcul (22) et qui est conçue pour signaler à la machine-outil (WZM) / au centre d'usinage (BA) si une erreur de rotation du module d'outil de surveillance de la rotation (28) ou non.

4. Machine-outil (WZM) ou centre d'usinage (BA) comprenant:

- une broche (S) destinée à tourner autour d'un axe de rotation (D) pendant le fonctionnement de la machine-outil (WZM) / du centre d'usinage (BA), qui est conçue pour recevoir une interface de fixation d'outil (14) d'un module de surveillance de la concentricité (10) selon la revendication 1, un porte-outil (WZGA) d'un module de surveillance de la concentricité d'un porte-outil (26) selon la revendication 2 et/ou un porte-outil (WZGA) d'un module de surveillance de la concentricité d'un outil (28) selon la revendication 3 et à coopérer de manière opérationnelle avec ceux-ci;
- une unité de communication (30) qui est conçue pour recevoir des signaux de l'unité de communication (24) du module de surveillance de la concentricité (10) selon la revendication 1, de l'unité de communication (24) du module de fixation d'outil de surveillance de la concentricité (26) selon la revendication 2 et/ou de l'unité de communication (24) du module d'outil de surveillance de la concentricité (28) selon la revendication 3; et
- une commande (32) qui est reliée à l'unité de communication (30) de la machine-outil (WZM) / du centre d'usinage (BA) et qui est conçue pour:

- recevoir des signaux de l'unité de capteur (16) du module de surveillance de concentricité (10) selon la revendication 1, de l'unité de capteur (16) du module de surveillance de concentricité (10) selon la revendication 2 et/ou de l'unité de capteur (16) du module d'outil de surveillance de concentricité (26) selon la revendication 3, et (16) du module de surveillance de la concentricité de l'outil porte-outil (26) selon la revendication 2 et/ou de l'unité de capteur (16) du module de surveillance de la concentricité de l'outil (28) selon la revendication 3;
- déterminer une accélération totale ($a_{ges}$) sur la base des grandeurs représentatives de l'accélération ($a_x$, $a_y$) détectées;
- comparer l'accélération totale ($a_{ges}$) à une valeur seuil (SW) dépendant d'une vitesse de rotation de la broche (S) pendant la détection des grandeurs ($a_x$, $a_y$) représentatives de l'accélération; et
- déterminer qu'une erreur de concentricité du module de surveillance de concentricité (10) selon la revendication 1, du module de surveillance de concentricité-porte-outil (26) selon la revendication 2 et/ou du module de surveillance de la concentricité de l'outil (28) selon la revendication 3, lorsque l'accélération totale ($a_{ges}$) est supérieure à la valeur seuil (SW).

5. Interface de signal de surveillance de la concentricité (SGS), comprenant:

- une unité de communication (36) qui est conçue pour recevoir des signaux d'une unité de communication (24) d'un module de surveillance de la concentricité (10) selon la revendication 1, d'une unité de communication (24) d'un module de porte-outil de surveillance de la concentricité (26) selon la revendication 2 et/ou d'une unité de communication (24) d'un module d'outil de surveillance de la concentricité (28) selon la revendication 3, et pour envoyer des signaux à une unité de communication (30) d'une machine-outil (WZM) / d'un centre d'usinage (BA) selon la revendication 4; et
- une unité de calcul (38) qui est reliée à l'unité de communication (36) de l'interface de signal de surveillance de la concentricité (SGS) et qui est conçue pour:

- recevoir des signaux de surveillance de la concentricité de l'unité de capteur (16) du module de surveillance de la concentricité (10) selon la revendication 1, de l'unité de capteur (16) du module de surveillance de la concentricité du porte-outil (26) selon la revendication 2 et/ou de l'unité de capteur (16) du module de surveillance de la concentricité de l'outil (28) selon la revendication 3;

- déterminer, sur la base des grandeurs représentatives de l'accélération ($a_x$, $a_y$) détectées, une accélération totale ($a_{ges}$);

- comparer l'accélération totale ($a_{ges}$) à une valeur de consigne (acc) pour déterminer si la concentricité est bonne ou non;

- déterminer une accélération totale ($a_{ges}$) sur la base des grandeurs ($a_x$, $a_y$) représentatives de l'accélération qui ont été détectées;

- comparer l'accélération totale ($a_{ges}$) à une valeur de consigne qui a été prédéfinie pour la surveillance de l'accélération, la valeur de consigne étant prédéfinie en fonction d'une vitesse de rotation de la broche (S), d'une vitesse de rotation du module de surveillance de la rotation (26) ou d'une vitesse de rotation du module d'outil de surveillance de la rotation (28) pendant la détection de l'accélération, d'une vitesse de rotation du module de surveillance de la rotation du porte-outil (26) ou d'une vitesse de rotation du module d'outil de surveillance de la rotation (28) pendant la détection des grandeurs représentatives de l'accélération ($a_x$, $a_y$); et

- déterminer qu'il existe une erreur de rotation du module de surveillance de la concentricité (10) selon la revendication 1, du module de fixation d'outil de surveillance de la rotation (26) selon la revendication 2 et/ou du module d'outil de surveillance de la rotation (28) selon la revendication 3 lorsque l'accélération totale ($a_{ges}$) est supérieure à la valeur seuil (SW), l'unité de communication (36) de l'interface de signal de surveillance de la rotation (SGS) étant configurée de telle sorte que l'unité de communication (36) de l'interface de signalisation de surveillance de la concentricité (SGS) est configurée pour signaler à la machine-outil (WZM) / au centre d'usinage (BA) si une erreur de concentricité de l'outil rotatif (WZG), du module de surveillance de concentricité (10), du module de fixation d'outil de surveillance de concentricité (26) et/ou du module d'outil de surveillance de concentricité (28) est présente ou non.

6. Procédé de surveillance de la concentricité pour un outil (WZG) destiné à tourner pendant le fonctionnement dans une machine-outil (WZM) ou dans un centre d'usinage (BA), comprenant les étapes suivantes:

(i) insertion automatique d'un module de surveillance (10; 26; 28) destiné à tourner pendant le fonctionnement ou du module de surveillance (10; 26) et de l'outil rotatif (WZG) dans une broche (S) de la machine-outil (WZM) / du centre d'usinage (BA), le module de surveillance concentricité (10; 26; 28) comprend une unité de capteur (16) qui est associée au module de surveillance (10; 26; 28) destiné à tourner de telle sorte qu'un axe de rotation (20) du module de surveillance (10; 26; 28) destiné à tourner passe par l'unité de capteur (16);

(ii) faire tourner la broche (S) de la machine-outil (WZM) / du centre d'usinage (BA) à une vitesse de rotation prédéfinie;

(iii) réception et/ou détection de grandeurs ($a_x$, $a_y$) représentatives d'une accélération dans un plan (E) orienté essentiellement perpendiculairement à l'axe de rotation (20) du module de surveillance (10; 26; 28) à faire tourner, pendant que le module de surveillance (10; 26; 28) à faire tourner tourne à la vitesse de rotation prédéfinie;

(iv) déterminer une accélération totale ($a_{ges}$) sur la base des grandeurs représentatives de l'accélération ($a_x$, $a_y$) détectées;

(v) comparer l'accélération totale ($a_{ges}$) à une valeur seuil dépendant d'une vitesse de rotation du module de surveillance (10; 26; 28) à faire tourner pendant la détection des grandeurs représentatives de l'accélération ($a_x$, $a_y$) pendant la détection des grandeurs représentatives de l'accélération; et

(vi) déterminer qu'il existe une erreur de rotation du module de surveillance (10; 26; 28) à faire tourner et/ou de l'outil (WZG) à faire tourner lorsque l'accélération totale ($a_{ges}$) est supérieure à la valeur seuil (SW).

7. Produit logiciel comprenant des instructions qui ont pour effet:

- que la machine-outil (WZM) / le centre d'usinage (BA) de la revendication 4 exécute les étapes de procédé (i) à (vi) selon la revendication 6; et/ou

- que le module de surveillance de la concentricité (10) de la revendication 1, le module de surveillance de la concentricité du porte-outil (26) de la revendication 2 ou le module de surveillance de la concentricité de l'outil (28) de la revendication 3 exécute les étapes de procédé (iii) à (vi) selon la revendication 6; et/ou

- que l'interface de signal de surveillance de la rotation (SGS) de la revendication 5 exécute les étapes de procédé (iii) à (vi) selon la revendication 6.

**8.** Module de surveillance de la concentricité (10) selon la revendication 1, ou module de support d'outil de surveillance de la rotation (26) selon la revendication 2, ou module d'outil de surveillance de la rotation (28) selon la revendication 3, comprenant en outre une autre unité de capteur (B) qui est espacée radialement de l'axe de rotation (20) et qui est conçue pour détecter, sensiblement en même temps que la détection des grandeurs ($a_x$, $a_y$) représentatives de l'accélération, d'autres grandeurs représentatives d'une accélération dans un plan (E) orienté sensiblement normalement à l'axe de rotation (20); et dans lequel l'unité de calcul (22) est en outre conçue pour : de recevoir les autres grandeurs représentatives de l'accélération détectées par l'autre unité de détection (B); et de déterminer, à partir des autres grandeurs représentatives de l'accélération, la vitesse de rotation du module de surveillance de la concentricité (10) / du module de fixation d'outil de surveillance de la rotation / du module d'outil de surveillance de la rotation pendant la détection des grandeurs représentatives de l'accélération ($a_x$, $a_y$); et/ou dans lequel l'autre unité de capteur (B) comprend deux capteurs d'accélération (B1, B2) opposés, espacés radialement par rapport à l'axe de rotation, qui sont disposés dans un plan (E) orienté perpendiculairement à l'axe de rotation, les capteurs d'accélération B1, B2 présentant des axes de mesure qui sont alignés ou situés dans un plan orthogonal au plan (E) contenant l'axe de rotation (20) contenant l'axe de rotation (20) et orthogonale au plan (E), les capteurs d'accélération (B1, B2) fournissant de préférence des valeurs mesurées à partir desquelles sont formées des valeurs moyennes respectives des autres grandeurs représentatives de l'accélération; ou l'unité de communication (24) étant conçue pour transmettre les autres grandeurs représentatives de l'accélération à la machine-outil (WZM) / au centre d'usinage (BA) selon la revendication 4 et/ou à l'interface de signal de surveillance de la concentricité (SGS) selon la revendication 5.

**9.** Module de surveillance de la concentricité (10) selon la revendication 1 ou 8, ou module de fixation d'outil de surveillance de la concentricité (26) selon la revendication 2 ou 8, ou module d'outil de surveillance de la concentricité (28) selon la revendication 3 ou 8, l'unité de calcul (22) étant conçue pour déterminer la vitesse de rotation du module de surveillance de la concentricité (10) / du module de fixation d'outil de surveillance de la concentricité (26) / du module d'outil de surveillance de la concentricité (28) pendant la détection des grandeurs représentatives de l'accélération sur la base d'une fréquence de signal régnant lors de la détection des grandeurs représentatives de l'accélération ($a_x$, $a_y$) lorsque l'axe de rotation (20) du module de surveillance de la concentricité (10) / du module de fixation d'outil de surveillance de la concentricité (26) / du module d'outil de surveillance de la concentricité (28) est orienté essentiellement horizontalement lors de la détection des grandeurs représentatives de l'accélération ($a_x$, $a_y$).

**10.** Module de surveillance de la concentricité (10) selon l'une des revendications 1, 8 ou 9, ou module de fixation d'outil de surveillance de la concentricité (26) selon l'une des revendications 2, 8 ou 9, ou module d'outil de surveillance de la concentricité (28) selon l'une des revendications 3, 8 ou 9, comprenant en outre une unité photosensible (PE) avec une surface photosensible (50) située sur le pourtour extérieur du module de surveillance de la concentricité (10) / du module de réception d'outil de surveillance de la concentricité (26) / du module d'outil de surveillance de la rotation angulaire (28), l'unité photosensible (PE) étant conçue pour détecter, pendant la détection des grandeurs représentatives de l'accélération ($a_x$, $a_y$), des différences de luminosité, l'unité de calcul (22) étant conçue pour calculer la vitesse de rotation du module de surveillance de la concentricité (10) / du module porte-outil de surveillance de la concentricité (26) / du module d'outil de surveillance de la concentricité (28) peu avant, après et/ou pendant la détection des grandeurs représentatives de l'accélération ($a_x$, $a_y$) sur la base d'une fréquence des différences de luminosité.

**11.** Module de surveillance de la concentricité (10) selon l'une des revendications 1 ou 8 à 10, ou module de fixation d'outil de surveillance de la concentricité (26) selon l'une des revendications 2 ou 8 à 10, ou module d'outil de surveillance de la concentricité (28) selon l'une des revendications 3 ou 8 à 10, dans lequel au moins l'unité de capteur (16) et de préférence en plus l'autre unité de capteur (B) est disposée sur une platine de capteur (40), la platine de capteur (40) étant reliée à un support de platine (42), et une position du support de carte (42) pouvant être adaptée perpendiculairement à l'axe de rotation (20); et/ou

comprenant en outre une unité d'alimentation en énergie (V) qui est conçue pour être mise en mode surveillance de préférence en réponse à un signal de réveil provenant d'un mode d'économie d'énergie ou de veille et/ou l'unité de capteur (16), l'autre unité de capteur (B), l'unité de calcul (22) et/ou l'unité de communication (24) de préférence en réponse à un signal de réveil à partir d'un mode d'économie d'énergie ou de veille dans un mode de surveillance; et/ou
le signal de réveil étant un signal ou étant déclenché par un signal qui:

- est généré par l'autre unité de capteur (B) dès que les autres grandeurs représentatives de l'accélération dépassent un seuil de réveil; ou

- est reçu via l'unité de communication (24) par la machine-outil (WZM)/le centre d'usinage (BA) selon la revendication 4 et/ou par l'interface de signal de surveillance de la rotation (SGS) selon la revendication 5; ou
- est généré lorsqu'une quantité d'énergie produite par l'unité d'alimentation en énergie (V) dépasse une valeur prédéfinie.

12. Module de surveillance de la concentricité selon la revendication 11, ou module de fixation d'outil de surveillance de la concentricité selon la revendication 11, ou module d'outil de surveillance de la concentricité selon la revendication 11, dans lequel l'unité d'alimentation en énergie (V) comprend un accumulateur d'énergie pour stocker et/ou une unité génératrice pour produire de l'énergie électrique; et/ou

l'unité génératrice comprenant un stator (60) qui est couplé directement ou indirectement au porte-outil (WZGA) du module porte-outil de surveillance de la concentricité (26)/du module d'outil de surveillance de la concentricité (28) ou qui peut être couplé directement ou indirectement au porte-outil (WZGA) selon la revendication 1, et dans lequel l'unité génératrice comprend en outre un rotor (64) qui est associé au module de surveillance de la concentricité (10)/au module porte-outil de surveillance de la concentricité (26)/ module d'outil de surveillance de la concentricité (28) de manière à coopérer avec le stator (60) de telle sorte que l'unité de générateur génère de l'énergie électrique autour de l'axe de rotation (20) lors d'une accélération en rotation du module de surveillance de la concentricité (10)/module de fixation d'outil de surveillance de la concentricité (26)/ module porte-outil de surveillance de la concentricité (28) autour de l'axe de rotation (20); et/ou

dans lequel l'unité de détection (16) est conçue pour, indépendamment d'un fonctionnement normal dans lequel le module de surveillance de la concentricité (10)/ le module de surveillance de la concentricité du porte-outil (26)/module d'outil de surveillance de la rotation (28) tourne en particulier avec la broche (S), des grandeurs initiales représentatives d'une accélération ($a_{x\_initial}$, $a_{y\_initial}$) dans le plan (E) orienté essentiellement normalement à l'axe de rotation (20) à une vitesse de rotation essentiellement constante ou à plusieurs vitesses de rotation différentes essentiellement constantes, et dans lequel l'unité de calcul (22) est conçue pour enregistrer les grandeurs initiales représentatives de l'accélération ($a_{x\_initial}$, $a_{y\_initial}$) avec la ou les vitesses de rotation correspondantes dans une mémoire du module de surveillance de la concentricité (10) / du module de fixation d'outil de surveillance de la rotation (26) / du module de surveillance de la rotation de l'outil (28), et/ou dans lequel l'unité de communication (24) est conçue pour transmettre les grandeurs initiales représentatives de l'accélération ($a_{x\_initial}$, $a_{y\_initial}$) de préférence avec la ou les vitesses de rotation correspondantes à la machine-outil (WZM)/au centre d'usinage (BA) selon la revendication 4 et/ou à l'interface de signal de surveillance de la concentricité (SGS) selon la revendication 5.

13. Module de surveillance de la concentricité (10) selon l'une des revendications 1 ou 8 à 12, ou module de fixation d'outil de surveillance de la concentricité (26) selon l'une des revendications 2 ou 8 à 12, ou module d'outil de surveillance de la concentricité (28) selon l'une des revendications 3 ou 8 à 12, l'unité de calcul (22) étant en outre conçue pour :

- surveiller au moins un autre paramètre de processus lorsque le module de surveillance de la concentricité (10), en particulier avec l'outil à faire tourner (WZG) et/ou avec le porte-outil (WZGA), tourne, ou lorsque le module de surveillance de la concentricité (26) tourne, en particulier avec l'outil à faire tourner (WZG) et/ou avec la broche (S), ou lorsque le module de surveillance de la concentricité (28) tourne, en particulier avec l'outil à faire tourner (WZG) et/ou avec la broche (S), et lorsque le module de surveillance de (26) tourne, en particulier conjointement avec l'outil à faire tourner (WZG) et/ou avec la broche (S), ou lorsque le module d'outil de surveillance de la rotation (28) tourne, en particulier conjointement avec la broche S, le au moins un paramètre de processus comprenant une vibration, une température, une pression de liquide de refroidissement, un débit de liquide de refroidissement, une force de coupe et/ou un couple, et/ou

les grandeurs représentatives de l'accélération ($a_x$, $a_y$) et/ou les grandeurs initiales représentatives de l'accélération ($a_{x\_initial}$, $a_{y\_initial}$) et/ou les autres grandeurs représentatives de l'accélération détectées par l'autre unité de capteur (B) et/ou la vitesse de rotation du module de surveillance de la concentricité (10) / du module porte-outil de surveillance de la rotation (26) / du module d'outil de surveillance de la rotation (28) (28) pendant la détection des grandeurs représentatives de l'accélération ($a_x$, $a_y$) pour une fenêtre temporelle déterminée, de préférence comprise entre 50 ms et 200 ms, sous la forme d'un paquet de données, le traitement s'effectuant par des opérations telles que le filtrage du signal, le calcul de la moyenne et/ou la détermination d'un spectre de fréquences par fenêtre temporelle ; et de transmettre le paquet de données après le traitement à la machine-outil (WZM) / au centre d'usinage (BA) selon la revendication 4 et/ou à l'interface de signal de surveillance de la concentricité (SGS) selon la revendication 5.

**14.** Module de surveillance de la concentricité (10) selon la revendication 13, ou module de porte-outil de surveillance de la concentricité (26) selon la revendication 13, ou module d'outil de surveillance de la concentricité (28) selon la revendication 13, l'unité de calcul (22) étant conçue pour déterminer l'accélération totale ($a_{fges}$) sur la base d'une soustraction des grandeurs représentatives de l'accélération initiale ($a_{x\_ini\text{-}tial}$, $a_{y\_initial}$) des grandeurs représentatives de l'accélération correspondantes ($a_x$, $a_y$); et/ou, lorsqu'il existe une erreur de concentricité, de déterminer la valeur de l'erreur de concentricité et/ou la direction de l'erreur de concentricité; et dans lequel l'unité de communication (24) est conçue pour transmettre la valeur et/ou la direction de l'erreur de rotation à la machine-outil (WZM)/au centre d'usinage (BA) selon la revendication 4 ou à l'interface de signal de surveillance de la rotation (SGS) selon la revendication 5; et/ou dans lequel l'unité de communication (24) est conçue pour signaler, lorsqu'il y a une erreur de concentricité, à la machine-outil (WZM)/au centre d'usinage (BA) selon la revendication 4 et/ou à l'interface de signal de surveillance de concentricité (SGS) selon la revendication 5, tandis que le module de surveillance de la concentricité (10)/le module de fixation d'outil de surveillance de la concentricité (26)/le module d'outil de surveillance de la concentricité (28), en particulier conjointement avec la broche (S), tourne; et/ou

le module étant conçu pour reconnaître, à l'aide de profils de vitesse prédéfinis, des fonctions qui doivent être exécutées par le module ou déclenchées dans d'autres modules ou ensembles, les profils de vitesse prédéfinis comprenant au moins (i) une vitesse, (ii) une durée d'une séquence de vitesse prédéfinie(-séquence), (iii) une pente d'un changement d'un niveau de vitesse de rotation à un niveau de vitesse de rotation suivant et/ou (iv) une durée d'un changement d'un niveau de vitesse de rotation à un niveau de vitesse de rotation suivant de la broche de la machine-outil, en particulier par une évaluation de la tension du générateur, et dans lequel en particulier les fonctions «exécuter un processus d'apprentissage ou d'appairage», «exécuter un processus de calibrage», «générer un signal de réveil ou de réactivation», «passer en mode surveillance ou mesure» et/ou «passer en mode veille profonde ou veille» peuvent être comprises, et dans lequel la détection des grandeurs représentatives de l'accélération ($a_x$, $a_y$), la détection des autres grandeurs représentatives de l'accélération, la détermination de l'accélération totale ($a_{ges}$), la détermination de la présence d'une erreur de rotation et la signalisation de la présence d'une erreur de rotation ne commencent que lorsqu'une vitesse de rotation définie est atteinte, **caractérisé en ce que** pendant le temps d'évaluation, la vitesse de rotation de la broche est essentiellement constante ou varie dans une plage maximale de 10 % de la vitesse de rotation.

Fig. 1

EP 4 423 472 B1

Fig. 2

Fig. 3

Fig. 4

Fig. 5

Automatisches Einsetzen eines im Betrieb zu rotierenden Überwachungsmoduls oder des zu rotierenden Überwachungsmoduls und eines zu rotierenden Werkzeugs in eine Spindel der Werkzeugmaschine / des Bearbeitungszentrums (i)

↓

Drehen der Spindel der Werkzeugmaschine / des Bearbeitungszentrums mit einer vorgegebenen Drehzahl (ii)

↓

Erfassen und/oder Empfangen von für eine Beschleunigung repräsentativen Größen in einer im Wesentlichen normal zur Drehachse des zu rotierenden Überwachungsmoduls orientierten Ebene (iii)

↓

Bestimmen einer Gesamtbeschleunigung basierend auf den erfassten für die Beschleunigung repräsentativen Größen (iv)

↓

Vergleichen der Gesamtbeschleunigung mit einem von einer Drehzahl der Spindel oder einer Drehzahl des zu rotierenden Überwachungsmoduls abhängigen Schwellenwert (v)

↓

Bestimmen, dass ein Rundlauffehler des zu rotierenden Überwachungsmoduls und/oder des zu rotierenden Werkzeugs vorliegt, wenn die Gesamtbeschleunigung größer als der Schwellenwert ist (vi)

Fig. 6

Fig. 7

Fig. 8

EP 4 423 472 B1

Fig. 9A

$a_y - a_{y\_initial}$

$a_{ges}$

20

$a_x - a_{x\_initial}$

QII  QI

QIII  QIV

α

x

y

Blickrichtung von
Spindel S zum
Werkzeug WZG

Fig. 9B

Drehzahl [U/min]

Fig. 10

EP 4 423 472 B1

EP 4 423 472 B1

Fig. 11

## Fig. 12

n: ca. 1000 U/min          n: ca. 1500 U/min          n: ca. 2000 U/min

Ausgabewert Sensor

3400
3300
3200
3100
3000
2900
2800
2700
2600
2500
2400
2300
2200
2100
2000
1900
1800
1700
1600
1500
1400
1300
1200
1100
1000
900
800
700
600
500
400

0          500          1000          1500          2000          2500          3000

Anzahl Sensormesswerte

Fig. 13B

Fig. 13A

67

Fig. 14

EP 4 423 472 B1

EP 4 423 472 B1

## Fig. 15

## Fig. 16

```
┌─────────────────────────────┐
│ Start Kalibriervorgang in einem │
│      Überwachungsmodul          │
└─────────────────────────────┘
              │
┌─────────────────────────────┐
│      Status „Bereit" an         │
│      Werkzeugmaschine /          │
│      Rundlaufüberwachungs-       │
│   Signalschnittstelle senden     │
└─────────────────────────────┘
              │
          ◇─────────◇
        ╱  Drehzahl über  ╲────── Nein
        ╲ Erfassungsdauer stabil? ╱
          ◇─────────◇
              │ Ja
┌─────────────────────────────┐      ┌─ ─ ─ ─ ─ ─ ─ ─ ─ ─ ─┐
│ Von der Sensoreinheit erfasste, │   │   Drehzahl ändern     │
│ initiale für eine Beschleunigung │   └─ ─ ─ ─ ─ ─ ─ ─ ─ ─ ─┘
│  repräsentative Größen filtern  │
└─────────────────────────────┘
              │
┌─────────────────────────────┐
│   Drehzahl n während der        │
│      Erfassung bestimmen        │
└─────────────────────────────┘
              │
┌─────────────────────────────┐
│  Initiale für die Beschleunigung │
│    repräsentativen Größen       │
│    ermitteln und speichern       │
└─────────────────────────────┘
              │
┌─────────────────────────────┐
│ Drehzahlabhängige Funktion der  │
│  initialen für die Beschleunigung │
│    repräsentativen Größen       │
│    ermitteln und speichern       │
└─────────────────────────────┘
              │
┌─────────────────────────────┐
│      Status „Fertig" an          │
│      Werkzeugmaschine /          │
│      Rundlaufüberwachungs-       │
│   Signalschnittstelle senden     │
│           senden                 │
└─────────────────────────────┘
              │
┌─────────────────────────────┐
│   Ende Kalibriervorgang im       │
│      Überwachungsmodul          │
└─────────────────────────────┘
```

## Fig. 17

Start Kalibriervorgang mit Auswertung in der Rundlaufüberwachungs-Signalschnittstelle / in der Werkzeugmaschine

Status „Bereit" an Rundlaufüberwachungs-Signalschnittstelle / Werkzeugmaschine senden

Drehzahl während Erfassungsdauer stabil? — Nein

Ja

Von der Sensoreinheit erfasste, initiale für eine Beschleunigung repräsentative Größen an Rundlaufüberwachungs-Signalschnittstelle / Werkzeugmaschine übertragen

Drehzahl ändern

Erfassungsdauer erreicht? — Nein

Ja

Übertragung der initialen für die Beschleunigung repräsentativen Größen beenden

Ende Kalibriervorgang mit Auswertung in der Rundlaufüberwachungs-Signalschnittstelle / in der Werkzeugmaschine

## Fig. 18

```
┌─────────────────────────────┐
│        Aktivierung          │
│  Überwachungsmodus eines    │
│     Überwachungsmoduls      │
└─────────────────────────────┘
              │
┌─────────────────────────────┐
│ Status „Bereit" an WZGM / SGS│
│          senden             │
└─────────────────────────────┘
              │
              ▼
         ╱─────────╲
        ╱ Drehzahl n ╲──── Nein
        ╲ erreicht?  ╱
         ╲─────────╱
              │ Ja
┌─────────────────────────────┐
│    Erfassen von für eine    │
│ Beschleunigung repräsentativen│
│ Größen über x Umdrehungen   │
└─────────────────────────────┘
              │
┌─────────────────────────────┐
│ Von der Sensoreinheit erfasste│
│   für die Beschleunigung    │
│ repräsentative Größen filtern│
└─────────────────────────────┘
              │
┌─────────────────────────────┐
│ Initiale für die Beschleunigung│
│   repräsentativen Größen    │
│          ermitteln          │
└─────────────────────────────┘
              │
┌─────────────────────────────┐
│       Bestimmen einer       │
│    Gesamtbeschleunigung     │
└─────────────────────────────┘
              │
┌─────────────────────────────┐
│      Vergleichen der        │
│   Gesamtbeschleunigung mit  │
│    einem Schwellenwert      │
└─────────────────────────────┘
              │
              ▼
         ╱─────────╲                    ┌──────────────────────────┐
        ╱Gesamtbeschleu-╲── Nein ──────▶│  Werkzeugmaschine /      │
        ╲nigung <       ╱               │  Rundlaufüberwachungs-   │
        ╲Schwellenwert?╱                │ Signalschnittstelle      │
         ╲─────────╱                    │ signalisieren, dass      │
              │ Ja                      │ Rundlauffehler vorliegt  │
┌─────────────────────────────┐         └──────────────────────────┘
│     Werkzeugmaschine /      │                    │
│    Rundlaufüberwachungs-    │                    │
│   Signalschnittstelle       │                    │
│ signalisieren, dass kein    │                    │
│  Rundlauffehler vorliegt    │                    │
└─────────────────────────────┘                    │
              │                                     │
┌─────────────────────────────┐                    │
│   Überwachungsmodus des     │◀───────────────────┘
│     Moduls deaktivieren     │
└─────────────────────────────┘
```

## Fig. 19

```
┌─────────────────────────┐
│      Aktivierung         │
│  Überwachungsmodus eines │
│   Überwachungsmoduls     │
└─────────────────────────┘
            │
┌─────────────────────────┐
│ Status „Bereit" an WZGM / SGS │
│        senden            │
└─────────────────────────┘
            │
            ▼
         ╱───────╲              ┌──────┐
        ╱ Drehzahl ╲  ───Nein──▶│      │
       ╱  während    ╲          └──────┘
       ╲ Erfassungsdauer ╱
        ╲   stabil?   ╱
         ╲─────────╱
            │ Ja
            ▼
┌─────────────────────────┐
│   Drehzahl n während der │
│    Erfassung bestimmen   │
└─────────────────────────┘
            │
┌─────────────────────────┐
│   Erfassen von für eine  │
│ Beschleunigung repräsentativen │
│  Größen über x Umdrehungen │
└─────────────────────────┘
            │
┌─────────────────────────┐
│ Erfasste für die Beschleunigung │
│ repräsentative Größen filtern │
└─────────────────────────┘
            │
┌─────────────────────────┐
│ Initiale für die Beschleunigung │
│ repräsentative Größen ermitteln │
└─────────────────────────┘
            │
┌─────────────────────────┐
│      Bestimmen einer     │
│   Gesamtbeschleunigung   │
└─────────────────────────┘
            │
┌─────────────────────────┐
│     Vergleichen der      │
│  Gesamtbeschleunigung mit │
│    einem Schwellenwert   │
└─────────────────────────┘
            │
            ▼
         ╱───────╲                    ┌─────────────────────┐
        ╱Gesamtbe- ╲                  │  Werkzeugmaschine /  │
       ╱schleunigung ╲ ───Nein──────▶ │  Rundlaufüberwachun  │
       ╲ <           ╱                 │ gs-Signalschnittstelle │
        ╲Schwellenwert?╱               │  signalisieren, dass │
         ╲─────────╱                   │    Rundlauffehler    │
            │ Ja                       │      vorliegt        │
            ▼                          └─────────────────────┘
┌─────────────────────────┐                      │
│    Werkzeugmaschine /    │                      │
│   Rundlaufüberwachungs-  │                      │
│ Signalschnittstelle signalisieren, │            │
│ dass kein Rundlauffehler vorliegt │             │
└─────────────────────────┘                      │
            │                                      │
            ▼                                      │
┌─────────────────────────┐                      │
│    Überwachungsmodus     │◀─────────────────────┘
│      deaktivieren        │
└─────────────────────────┘
```

## Fig. 20

```
┌─────────────────────────┐
│   Start Verarbeitung in der │
│   Rundlaufüberwachungs-    │
│ Signalschnittstelle / in der │
│      Werkzeugmaschine      │
└─────────────────────────┘
              │
              ▼
         ╱─────────╲          Nein
        ╱ Status „Bereit" ╲ ──────►
        ╲ von Modul erhalten? ╱
         ╲─────────╱
              │ Ja
              ▼
┌─────────────────────────┐
│ Von Sensoreinheit des Moduls │ ◄──┐
│ erfasste Größen empfangen und │   │
│         speichern          │   │
└─────────────────────────┘   │
              │                 │
              ▼                 │
         ╱─────────╲      Nein  │
        ╱ Alle erfassten Größen ╲ ──┘
        ╲     empfangen?     ╱
         ╲─────────╱
              │ Ja
              ▼
┌─────────────────────────┐
│   Drehzahl n während der    │
│     Erfassung bestimmen     │
└─────────────────────────┘
              │
              ▼
┌─────────────────────────┐
│ Erfasste für die Beschleunigung │
│ repräsentative Größen filtern │
└─────────────────────────┘
              │
              ▼
┌─────────────────────────┐
│  Initiale für die Beschleunigung │
│ repräsentative Größen ermitteln │
└─────────────────────────┘
              │
              ▼
┌─────────────────────────┐
│      Bestimmen einer      │
│    Gesamtbeschleunigung    │
└─────────────────────────┘
              │
              ▼
┌─────────────────────────┐
│      Vergleichen der       │
│  Gesamtbeschleunigung mit  │
│     einem Schwellenwert     │
└─────────────────────────┘
              │
              ▼
┌ ─ ─ ─ ─ ─ ─ ─ ─ ─ ─ ─ ─ ┐
│     Werkzeugmaschine      │
│      signalisieren, ob ein    │
│    Rundlauffehler vorliegt   │
└ ─ ─ ─ ─ ─ ─ ─ ─ ─ ─ ─ ─ ┘
              │
              ▼
┌─────────────────────────┐
│   Ende Verarbeitung in der   │
│   Rundlaufüberwachungs-    │
│ Signalschnittstelle / in der │
│      Werkzeugmaschine      │
└─────────────────────────┘
```

## Fig. 21

```
┌─────────────────────────┐
│       Aktivierung       │
│  Überwachungsmodus eines │
│    Überwachungsmoduls   │
└─────────────────────────┘
             │
             ▼
┌─────────────────────────┐
│ Status „Bereit" an WZM / SGS │
│         senden          │
└─────────────────────────┘
             │
             ▼
        ╱─────────╲              Nein
      ╱ Drehzahl während ╲ ──────────
      ╲ Erfassungsdauer stabil? ╱
        ╲─────────╱
             │ Ja
             ▼
┌─────────────────────────┐
│    Erfassen von für eine │
│ Beschleunigung repräsentativen │
│  Größen und Speichern in einem │
│    Speicher des Moduls  │
└─────────────────────────┘
             │
             ▼
        ╱─────────╲              Nein
      ╱ Modulspeicher voll? ╲ ──────────►
        ╲─────────╱
             │ Ja
             ▼
┌─────────────────────────┐
│ Übertragung erfasster Größen │
│  an die Rundlaufüberwachungs- │
│    Signalschnittstelle / die │
│     Werkzeugmaschine    │
└─────────────────────────┘
             │
             ▼
        ╱─────────╲              Nein
      ╱ Erfassungsdauer erreicht? ╲ ──────────
        ╲─────────╱
             │ Ja
             ▼
┌─────────────────────────┐
│ Übertragung erfasster Größen │
│         beenden         │
└─────────────────────────┘
             │
             ▼
┌─────────────────────────┐
│    Überwachungsmodus    │
│      deaktivieren       │
└─────────────────────────┘
```

## Fig. 22

Modul in Spindel einwechseln

Drehen der Spindel mit Erfassungsdrehzahl

„Bereit" Meldung von Modul erhalten? — Nein

Ja

Information über Rundlauffehler erhalten? — Nein

Ja

Rundlauffehler? — Ja — Werkstückbearbeitung sperren

Nein

Werkstückbearbeitung freigeben

Drehen der Spindel stoppen

Fehler anzeigen

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013201328 A1
- DE 102018201427 A1
- DE 10351347 A1
- EP 3360642 A1
- DE 102013100975 B3
- EP 3581328 A1
- DE 88287
- WO 2021029404 A1
- WO 2021029099 A1
- WO 2019122375 A1
- WO 2021033670 A1
- EP 2103379 A1
- US 10828740 B2
- US 10828739 B2
- EP 3808503 A1
- US 2021026322 A1
- JP 5089342 B
- EP 3539717 A1
- EP 2112461 B1
- DE 102016223199 A1
- US 20150125230 A1
- EP 1742011 B1
- TW I491463 B
- EP 3360342 A1
- EP 2208017 A2